(19) Europäisches Patentamt
European Patent Office
Office européen des brevets

(11) **EP 2 858 350 A1**

(12) **EUROPEAN PATENT APPLICATION**
published in accordance with Art. 153(4) EPC

(43) Date of publication:
**08.04.2015 Bulletin 2015/15**

(51) Int Cl.:
***H04N 7/00*** *(2011.01)*

(21) Application number: **13812668.5**

(22) Date of filing: **08.07.2013**

(86) International application number:
**PCT/KR2013/006032**

(87) International publication number:
**WO 2014/007590 (09.01.2014 Gazette 2014/02)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **06.07.2012 US 201261668634 P**

(71) Applicant: **Samsung Electronics Co., Ltd.**
**Suwon-si, Gyeonggi-do 443-742 (KR)**

(72) Inventors:
• **CHOI, Byeong-doo**
**Siheung-si**
**Gyeonggi-do 429-717 (KR)**
• **KIM, Jae-hyun**
**Seoul 137-040 (KR)**
• **PARK, Jeong-hoon**
**Seoul 151-050 (KR)**

(74) Representative: **Appleyard Lees**
**15 Clare Road**
**Halifax HX1 2HY (GB)**

(54) **METHOD AND APPARATUS FOR MULTILAYER VIDEO ENCODING FOR RANDOM ACCESS, AND METHOD AND APPARATUS FOR MULTILAYER VIDEO DECODING FOR RANDOM ACCESS**

(57)     Provided are a multi-layer video encoding method and apparatus, and a multi-layer video decoding method and apparatus, which realize a new multi-layer video prediction structure. The multi-layer video decoding method includes: reconstructing base layer images by performing motion compensation and intra decoding on a base layer stream; and reconstructing enhancement layer images by reconstructing an enhancement layer random access point (RAP) image of a same type corresponding to a base layer RAP image capable of random access from among the base layer images, from an enhancement layer stream and by performing motion compensation and inter-layer decoding using the base layer images on the enhancement layer images including the reconstructed enhancement layer RAP image.

**FIG. 1A**

**Description**

TECHNICAL FIELD

The present invention relates to encoding and decoding a video by using a multi-layer prediction structure based on inter prediction, intra prediction, and inter-layer prediction.

BACKGROUND ART

As hardware for reproducing and storing high resolution or high quality video content is being developed and supplied, a need for a video codec for effectively encoding or decoding the high resolution or high quality video content is increasing. According to a conventional video codec, a video is encoded according to a limited encoding method based on a macroblock having a predetermined size.

Image data of a spatial region is transformed into coefficients of a frequency region via frequency transformation. According to a video codec, an image is split into blocks having a predetermined size, discrete cosine transformation (DCT) is performed on each block, and frequency coefficients are encoded in block units, for rapid calculation of frequency transformation. Compared with image data of a spatial region, coefficients of a frequency region are easily compressed. In particular, since an image pixel value of a spatial region is expressed according to a prediction error via inter prediction or intra prediction of a video codec, when frequency transformation is performed on the prediction error, a large amount of data may be transformed to 0. According to a video codec, an amount of data may be reduced by replacing data that is consecutively and repeatedly generated with small-sized data.

A multi-layer video codec encodes and decodes a base layer video and at least one enhancement layer video. Amounts of data of the base layer video and the enhancement layer video may be reduced by removing temporal/spatial redundancy and layer redundancy of the base layer video and the enhancement layer video.

DETAILED DESCRIPTION OF THE INVENTION

TECHNICAL PROBLEM

The present invention provides a multi-layer video encoding method and apparatus, and a multi-layer video decoding method and apparatus, wherein random access is synchronized and performed according to layers during a multiview video reconstructing process by suggesting a new multi-layer video prediction structure.

TECHNICAL SOLUTION

According to an aspect of the present invention, there is provided a multi-layer video decoding method including: reconstructing base layer images by performing motion compensation and intra decoding on a base layer stream; and reconstructing enhancement layer images by reconstructing an enhancement layer random access point (RAP) image of a same type corresponding to a base layer RAP image capable of random access from among the base layer images, from an enhancement layer stream and by performing motion compensation and inter-layer decoding using the base layer images on the enhancement layer images including the reconstructed enhancement layer RAP image.

ADVANTAGEOUS EFFECTS

According to a multi-layer video prediction structure according to an embodiment, an output synchronized between a base layer image and an enhancement layer image may be guaranteed as inter-layer encoding or inter-layer decoding between a base layer image and an enhancement layer image to which the same reproduction order picture order count (POC) is assigned is performed between a base layer image sequence and an enhancement layer image sequence.

DESCRIPTION OF THE DRAWINGS

FIG. 1A is a block diagram of a multi-layer video encoding apparatus according to an embodiment of the present invention.
FIG. 1B is a flowchart of a multi-layer video encoding method of the multi-layer video encoding apparatus of FIG. 1A.
FIG. 2A is a block diagram of a multi-layer video decoding apparatus according to an embodiment of the present invention.

FIG. 2B is a flowchart of a multi-layer video decoding method of the multi-layer video decoding apparatus of FIG. 2A.

FIG. 3 is a diagram of an inter-layer prediction structure according to an embodiment of the present invention.

FIG. 4A is a diagram of a multi-layer prediction structure of multi-layer images.

FIG. 4B is a diagram of a multi-layer prediction structure according to a temporal hierarchical encoding and decoding method.

FIGS. 5A and 5B illustrate a reproduction order and a decoding order of an instantaneous decoding refresh (IDR) image according to two embodiments of the present invention.

FIGS. 6A and 6B illustrate a reproduction order and a decoding order of a clear random access (CRA) image according to two embodiments of the present invention.

FIGS. 7A and 7B illustrate a reproduction order and a decoding order of a broken link access (BLA) image according to two embodiments of the present invention.

FIG. 8 is a block diagram of a video encoding apparatus based on coding units according to a tree structure, according to an embodiment of the present invention.

FIG. 9 is a block diagram of a video decoding apparatus based on coding units according to a tree structure, according to an embodiment of the present invention.

FIG. 10 is a diagram for describing a concept of coding units according to an embodiment of the present invention.

FIG. 11 is a block diagram of an image encoder based on coding units, according to an embodiment of the present invention.

FIG. 12 is a block diagram of an image decoder based on coding units, according to an embodiment of the present invention.

FIG. 13 is a diagram illustrating deeper coding units according to depths, and partitions, according to an embodiment of the present invention.

FIG. 14 is a diagram for describing a relationship between a coding unit and transformation units, according to an embodiment of the present invention.

FIG. 15 is a diagram for describing encoding information of coding units corresponding to a coded depth, according to an embodiment of the present invention.

FIG. 16 is a diagram of deeper coding units according to depths, according to an embodiment of the present invention.

FIGS. 17 through 19 are diagrams for describing a relationship between coding units, prediction units, and transformation units, according to an embodiment of the present invention.

FIG. 20 is a diagram for describing a relationship between a coding unit, a prediction unit, and a transformation unit, according to encoding mode information of Table 1.

FIG. 21 is a diagram of a physical structure of a disc in which a program is stored, according to an embodiment of the present invention.

FIG. 22 is a diagram of a disc drive for recording and reading a program by using a disc.

FIG. 23 is a diagram of an overall structure of a content supply system for providing a content distribution service.

FIGS. 24 and 25 are diagrams respectively of an external structure and an internal structure of a mobile phone to which a video encoding method and a video decoding method are applied, according to an embodiment of the present invention.

FIG. 26 is a diagram of a digital broadcast system to which a communication system is applied, according to an embodiment of the present invention.

FIG. 27 is a diagram illustrating a network structure of a cloud computing system using a video encoding apparatus and a video decoding apparatus, according to an embodiment of the present invention.

BEST MODE

According to an aspect of the present invention, there is provided a multi-layer video decoding method including: reconstructing base layer images by performing motion compensation and intra decoding on a base layer stream; and reconstructing enhancement layer images by reconstructing an enhancement layer random access point (RAP) image of a same type corresponding to a base layer RAP image capable of random access from among the base layer images, from an enhancement layer stream and by performing motion compensation and inter-layer decoding using the base layer images on the enhancement layer images including the reconstructed enhancement layer RAP image.

The reconstructing of the enhancement layer images may include: determining a first enhancement layer image corresponding to the first base layer IDR image as a first enhancement layer IDR image, and performing inter-layer decoding on the first enhancement layer IDR image by referring to the first base layer IDR image; and performing motion compensation on at least one enhancement layer image by referring to the first enhancement layer IDR image.

The reconstructing of the enhancement layer images may include: determining a first enhancement layer image corresponding to the first base layer CRA image as a first enhancement layer CRA image, and performing inter-layer decoding on the first enhancement layer CRA image by referring to the first base layer CRA image; and performing motion compensation on at least one enhancement layer image by referring to the first enhancement layer CRA image.

The reconstructing of the enhancement layer images may include: determining a first enhancement layer image corresponding to the first base layer BLA image as a first enhancement layer BLA image, and performing inter-layer decoding on the first enhancement layer BLA image by referring to the first base layer BLA image; and performing motion compensation on at least one enhancement layer image by referring to the first enhancement layer BLA image.

The reconstructing of the enhancement layer images may include determining a first enhancement layer image corresponding to the first base layer RASL image as a first enhancement layer RASL image, and performing, on the first enhancement RASL image, inter-layer decoding referring to the first base layer RASL image and motion compensation referring to a first enhancement layer RAP image and enhancement layer RAP images preceding the first enhancement layer RAP image in a decoding order.

The reconstructing of the enhancement layer images may include determining a first enhancement layer image corresponding to the first base layer normal image as one of a first enhancement layer clean random access (CRA) image, a first enhancement layer random access skipped leading (RASL) image, and a first enhancement layer normal image, and performing, on the first enhancement layer normal image, inter-layer decoding referring to the first base layer normal image and motion compensation referring to an enhancement layer RAP image.

The reconstructing of the enhancement layer images may include: determining a first enhancement layer view layer access (VLA) image corresponding to a first base layer image that is one of an RAP image and a non-RAP image based on a viewpoint change request, and performing inter-layer decoding on the first enhancement layer VLA image by referring to the first base layer image; and performing motion compensation on enhancement layer images following the first enhancement VAL image in a decoding order than, by referring to at least one of enhancement layer images subsequent or equal to the first enhancement layer VAL image in a decoding order and a reproduction order.

The reconstructing of the base layer images may include skipping decoding of at least one of base layer random access skipped leading (RASL) images preceding a first base layer RAP image in a decoding order, and the reconstructing of the enhancement layer images may include skipping decoding of an enhancement layer image corresponding to the at least one of the base layer RASL images of which the decoding is skipped.

The reconstructing of the enhancement layer images may include, for temporal hierarchical decoding of the base layer stream and the enhancement layer stream, performing inter-layer decoding on a first enhancement layer image by referring to a first base layer image to which a temporal hierarchical identification number that is lower than a temporal hierarchical identification number of the first enhancement layer image is assigned.

According to another aspect of the present invention, there is provided a multi-layer video encoding method including: performing inter prediction and intra prediction on base layer images; and determining an enhancement layer image corresponding to a base layer random access point (RAP) image capable of random access from among the base layer images as an enhancement layer RAP image of a same type as the base layer RAP image, and performing inter prediction and inter-layer prediction using the base layer images on enhancement layer images including the enhancement layer RAP image.

The performing of the inter prediction and inter-layer prediction may include: determining a first enhancement layer image corresponding to the first base layer IDR image as a first enhancement layer IDR image, and performing inter-layer decoding on the first enhancement layer IDR image by referring to the first base layer IDR image; and performing motion compensation on at least one enhancement layer image by referring to the first enhancement layer IDR image.

The performing of the inter prediction and inter-layer prediction may include: determining a first enhancement layer image corresponding to the first base layer CRA image as a first enhancement layer CRA image, and performing inter-layer decoding on the first enhancement layer CRA image by referring to the first base layer CRA image; and performing motion compensation on at least one enhancement layer image by referring to the first enhancement layer CRA image.

The performing of the inter prediction and inter-layer prediction may include: determining a first enhancement layer image corresponding to the first base layer BLA image as a first enhancement layer BLA image, and performing inter-layer decoding on the first enhancement layer BLA image by referring to the first base layer BLA image; and performing motion compensation on at least one enhancement layer image by referring to the first enhancement layer BLA image.

The performing of the inter prediction and inter-layer prediction may include determining a first enhancement layer image corresponding to the first base layer RASL image as a first enhancement layer RASL image, and performing, on the first enhancement RASL image, inter-layer decoding referring to the first base layer RASL image and motion compensation referring to a first enhancement layer RAP image and enhancement layer RAP images preceding the first enhancement layer RAP image in a decoding order.

The performing of the inter prediction and inter-layer prediction may include determining a first enhancement layer image corresponding to the first base layer normal image as one of a first enhancement layer clean random access (CRA) image, a first enhancement layer random access skipped leading (RASL) image, and a first enhancement layer normal image, and performing, on the first enhancement layer normal image, inter-layer decoding referring to the first base layer normal image and motion compensation referring to an enhancement layer RAP image.

The performing of the inter prediction and inter-layer prediction may include determining a first enhancement layer view layer access (VLA) image corresponding to a first base layer image that is one of an RAP image and a non-RAP image based on a viewpoint change request, and performing inter-layer decoding on the first enhancement layer VLA image by referring to the first base layer image; and performing motion compensation on enhancement layer images following the first enhancement VAL image in a decoding order than, by referring to at least one of enhancement layer images subsequent or equal to the first enhancement layer VAL image in a decoding order and a reproduction order.

The performing of the inter prediction and inter-layer prediction may include, for temporal hierarchical decoding of the base layer stream and the enhancement layer stream, performing inter-layer decoding on a first enhancement layer image by referring to a first base layer image to which a temporal hierarchical identification number that is lower than a temporal hierarchical identification number of the first enhancement layer image is assigned.

According to another aspect of the present invention, there is provided a multi-layer video decoding apparatus including: a base layer decoder that reconstructs base layer images by performing motion compensation and intra decoding on a base layer stream; and an enhancement layer decoder that reconstructs enhancement layer images by reconstructing an enhancement layer random access point (RAP) image of a same type corresponding to a base layer RAP image capable of random access from among the base layer images, from an enhancement layer stream and by performing motion compensation and inter-layer decoding using the base layer images on the enhancement layer images including the reconstructed enhancement layer RAP image.

According to another aspect of the present invention, there is provided a multi-layer video encoding apparatus including: a base layer encoder that performs inter prediction and intra prediction on base layer images; and an enhancement layer encoder that determines an enhancement layer image corresponding to a base layer random access point (RAP) image capable of random access from among the base layer images as an enhancement layer RAP image of a same type as the base layer RAP image, and performing inter prediction and inter-layer prediction using the base layer images on enhancement layer images including the enhancement layer RAP image.

According to another aspect of the present invention, there is provided a non-transitory computer-readable recording medium having recorded thereon a program for executing the multi-layer video encoding method. According to another aspect of the present invention, there is provided a non-transitory computer-readable recording medium having recorded thereon a program for executing the multi-layer video decoding method.

MODE OF THE INVENTION

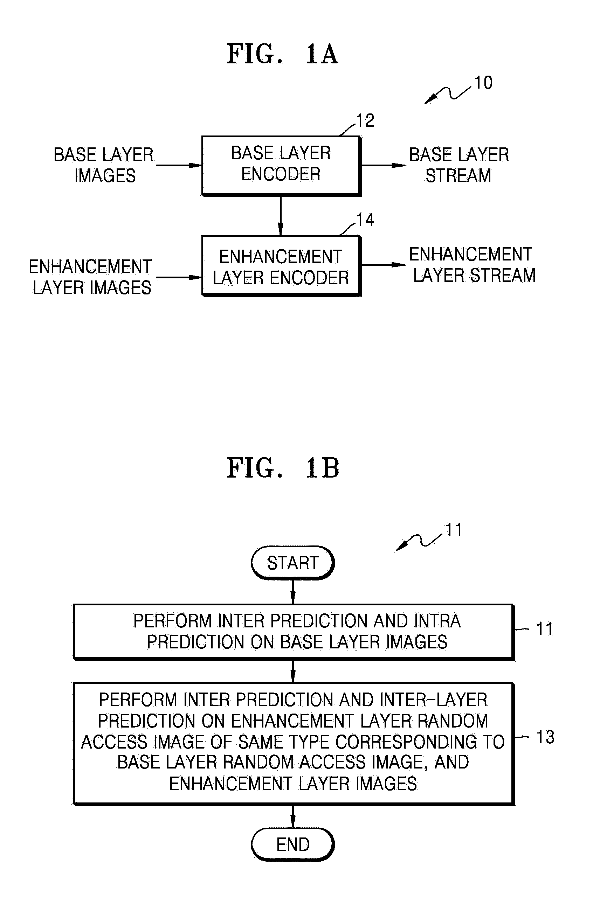

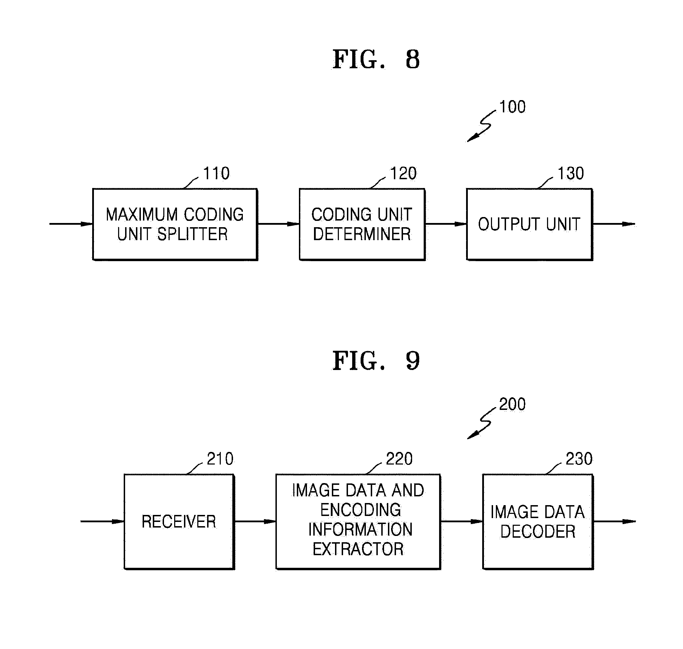

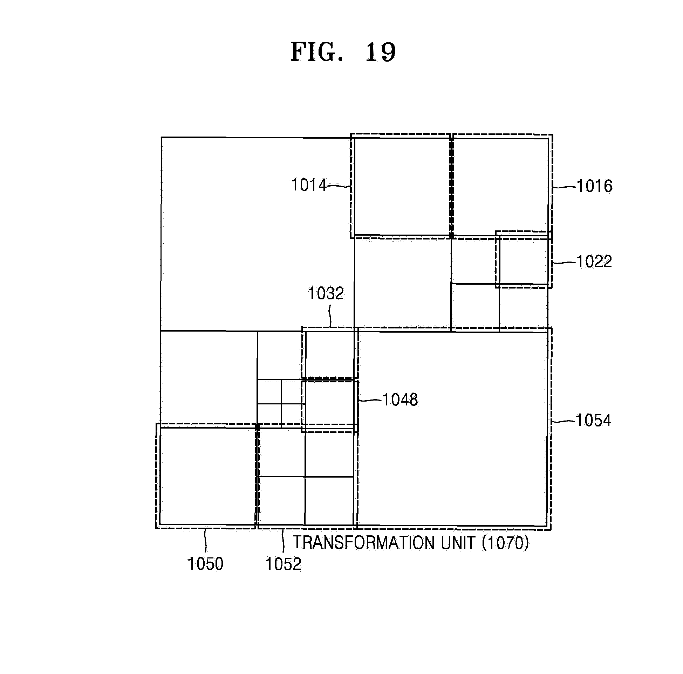

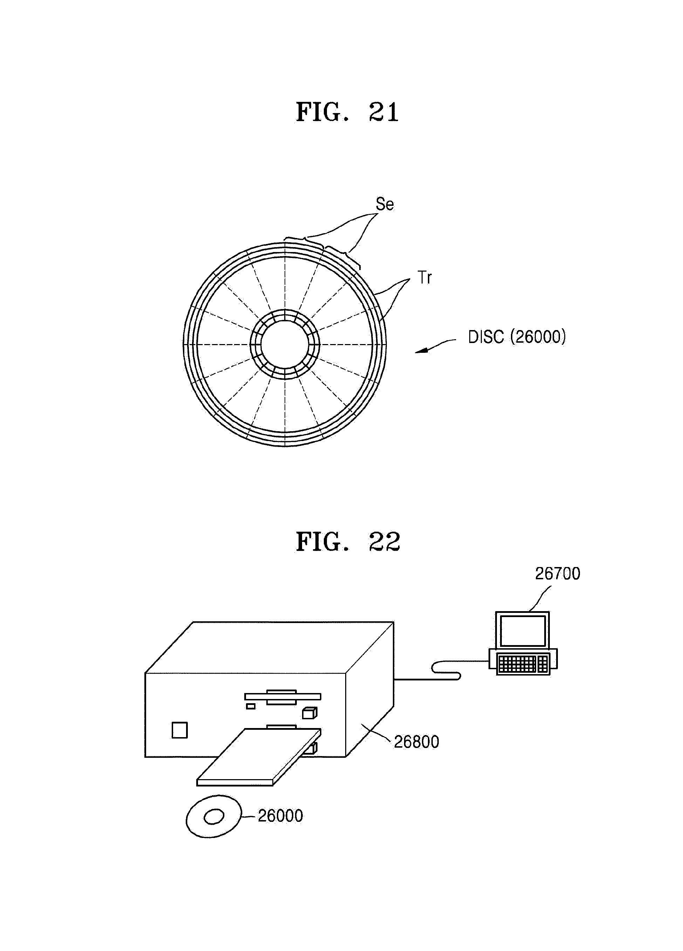

Hereinafter, a multi-layer video encoding apparatus, a multi-layer video decoding apparatus, a multi-layer video encoding method, and a multi-layer video decoding method, according to embodiments of the present invention, will be described with reference to FIGS. 1A through 7B. Also, a multi-layer video encoding apparatus, a multi-layer video decoding apparatus, a multi-layer video encoding method, and a multi-layer video decoding method, according to embodiments of the present invention, which are based on coding units having a tree structure, will be described with reference to FIGS. 8 through 20. Also, various embodiments to which a multi-layer video encoding apparatus, a multi-layer video decoding apparatus, a multi-layer video encoding method, and a multi-layer video decoding method are applicable, will be described with reference to FIGS. 21 through 27. Hereinafter, an 'image' may denote a still image or a moving image of a video, or a video itself.

First, a multi-layer video encoding apparatus, a multi-layer video decoding apparatus, a multi-layer video encoding method, and a multi-layer video decoding method will be described with reference to FIGS. 1A through 7B.

FIG. 1A is a block diagram of a multi-layer video encoding apparatus 10 according to an embodiment of the present invention. FIG. 1B is a flowchart of a multi-layer video encoding method 11 of the multi-layer video encoding apparatus 10 of FIG. 1A.

The multi-layer video encoding apparatus 10 according to an embodiment includes a base layer encoder 12 and an enhancement layer encoder 14.

The multi-layer video encoding apparatus 10 according to an embodiment may classify a plurality of video streams according to layers and encode each of the video streams according to a scalable video coding method. The multi-layer encoding apparatus 10 according to an embodiment encodes base layer images and enhancement layer images.

For example, a multiview video may be encoded according to a scalable video coding method. Central view images, left view images, and right view images are each encoded, wherein the central view images may be encoded as base layer images, the left view images may be encoded as first enhancement layer images, and the right view images may be encoded as second enhancement layer images. An encoding result of the base layer images may be output as a base view layer stream, and encoding results of the first and second enhancement layer images may be respectively output as a first enhancement layer image stream and a second enhancement layer image stream.

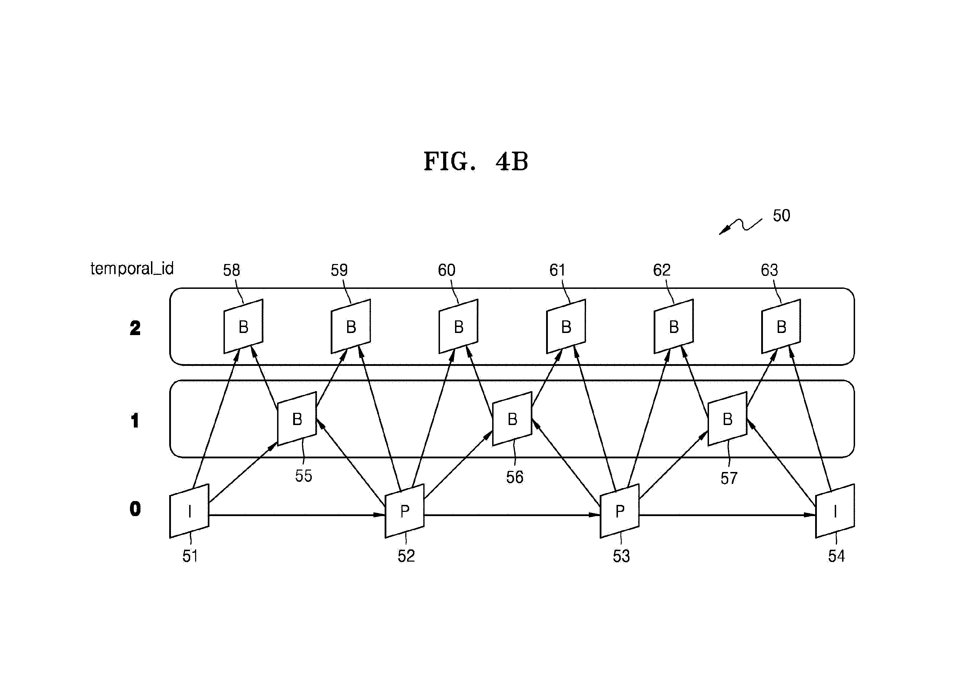

Alternatively, a scalable video coding method may be performed according to temporal hierarchical prediction. A base layer stream including encoding information that is generated by encoding base frame rate images may be output. An enhancement layer stream including encoding information of a high speed frame rater may be output by further encoding high frame rate images by referring to base frame rate images. The scalable video coding method according to the temporal hierarchical prediction will be described later with reference to FIG. 4B.

Also, scalable video coding may be performed on a base layer and a plurality of enhancement layers. When there are at least three enhancement layers, base layer images and first through K-th enhancement layer images may be encoded. Accordingly, an encoding result of the base layer images may be output as a base layer stream, and encoding results of the first through K-th enhancement layer images may be respectively output as first through K-th enhancement layer streams.

The multi-layer video encoding apparatus 10 according to an embodiment may perform encoding according to blocks of each image of a video, according to layers. A block may have a square shape, a rectangular shape, or an arbitrary geometrical shape, and is not limited to a data unit having a predetermined size. The block according to an embodiment may be a maximum coding unit, a coding unit, a prediction unit, or a transformation unit, among coding units according to a tree structure. Video encoding and decoding methods based on coding units according to a tree structure will be described later with reference to FIGS. 8 through 20.

The multi-layer video encoding apparatus 10 according to an embodiment may perform inter prediction in which images of the same layer are referenced in order to predict the images. By performing inter prediction, a motion vector indicating motion information between a current image and a reference image, and a residual that is a difference component between the current image and the reference image may be generated.

Also, the multi-layer video encoding apparatus 10 according to an embodiment may perform inter-layer prediction to predict enhancement layer images by referring to base layer images. The multi-layer video encoding apparatus 10 according to an embodiment may perform inter-layer prediction for predicting second enhancement layer images by referring to first enhancement layer images. By performing inter-layer prediction, a position difference component between a current image and a reference image of a layer different from that of the current image and a residual between the current image and the reference image of the different layer may be generated.

When the multi-layer video encoding apparatus 10 according to an embodiment allows at least two enhancement layers, inter-layer prediction may be performed between one base layer image and the at least two enhancement layer images according to a multi-layer prediction structure.

Inter-prediction and inter-layer prediction may be performed based on a data unit, such as a coding unit, a prediction unit, or a transformation unit.

The base layer encoder 12 according to an embodiment generates the base layer stream by encoding the base layer images. The base layer encoder 12 may perform inter prediction between the base layer images. The base layer encoder 12 according to an embodiment may encode random access point (RAP) images capable of random access from among the base layer images without having to reference other images.

An I-type RAP image may be any one of an instantaneous decoding refresh (IDR) image, a clean random access (CRA) image, a broken link access (BLA) image, a temporal sub-layer access (TSA) image, and a stepwise temporal sub-layer access (STSA) image.

Also, RAP images may be referenced by leading pictures and trailing pictures. The leading pictures and trailing pictures follow the RAP images in a decoding order, whereas the leading pictures precede the RAP images in a reproduction order and the trailing pictures follow the RAP images in the reproduction order. The trailing picture may also be referred to as a normal picture.

The leading picture may be classified into a random access decodable leading (RADL) image and a random access skipped leading (RASL) image. When random access occurs for an RAP image following a leading picture in a reproduction order, an RADL image is a decodable image but an RASL image is not decodable.

The base layer encoder 12 according to an embodiment may perform inter prediction on non-RAP images obtained by excluding base layer RAP images from the base layer images. Intra prediction that references adjacent pixels in an image may be performed on the base layer RAP images. The base layer encoder 12 according to an embodiment may generate encoding data by encoding result data obtained by performing inter prediction or intra prediction. For example, transformation, quantization, or entropy encoding may be performed on an image block including the result data obtained by performing inter prediction or intra prediction.

The base layer encoder 12 according to an embodiment may generate the base layer stream including encoding data of the base layer RAP images and encoding data of the remaining layer images. The base layer encoder 12 may output motion vectors generated via inter prediction performed on the base layer images, together with the base layer stream.

The enhancement layer encoder 14 according to an embodiment generates the enhancement layer stream by encoding the enhancement layer images. When a plurality of enhancement layer images are encoded, the enhancement layer encoder 14 according to an embodiment generates an enhancement layer stream according to layers by encoding the plurality of enhancement layer images according to the layers. Hereinafter, for convenience of description, encoding operations of the enhancement layer encoder 14 according to an embodiment will be described as operations performed on enhancement layer images of one layer. However, the encoding operations of the enhancement layer encoder 14 are not performed only on enhancement layer images of one layer, but may also be performed on each of enhancement layer images of other layers.

The enhancement layer encoder 14 according to an embodiment may perform inter-layer prediction that references the base layer images and inter prediction that references images of a same layer, so as to encode the enhancement layer images.

Inter prediction or inter-layer prediction is performed only when an image to be referenced is pre-reconstructed. Accordingly, when a first image of a current layer is to be initially decoded by referencing another image of the current layer, it is not possible to decode the first image. Thus, an RAP image capable of random access needs to be encoded without referencing another image of the same layer. According to an embodiment, when random access occurs in an RAP image, the RAP image may be immediately decoded and output even if there is no pre-reconstructed image of the same layer.

According to the multi-layer prediction structure of the multi-layer video encoding apparatus 10 according to an embodiment, second layer images may be decoded according to a layer change while decoding first layer images. For example, when a view change occurs in a multiview image structure or a temporal hierarchical change occurs in a temporal hierarchical prediction structure, a layer change may be performed in the multi-layer prediction structure. At this time, it is not possible to perform inter prediction since pre-reconstructed images of the same layer do not exist at a layer change point.

Hereinafter, operations of the multi-layer video encoding apparatus 10 according to an embodiment performing scalable video encoding according to a multi-layer prediction structure wherein a layer change point is specified according to layers so that an image at the layer change point is immediately decoded will be described.

In the multi-layer prediction structure according to an embodiment, when a base layer RAP image exists in the base layer images, an enhancement layer image corresponding to the base layer RAP image from among the enhancement layer images may be determined as an enhancement layer RAP image of the same type as the base layer RAP image. For example, when the base layer RAP image is an IDR image, an enhancement layer image corresponding to the base layer RAP image may also be determined as an IDR image. An enhancement layer image corresponding to a base layer CRA image may be determined as a CRA image. An enhancement layer image corresponding to a base layer BLA image may be determined as a BLA image. An enhancement layer image corresponding to a base layer TSA image may be determined as a TSA image.

Also, an enhancement layer image corresponding to a base layer RASL image may be determined as a RASL image.

The base layer encoder 12 and the enhancement layer encoder 14 according to an embodiment may include encoding data according to images to a NAL unit. NAL unit type information may indicate whether a current image is a trailing picture, a TSA image, an STSA image, an RADL image, an RASL image, a BLA image, an IDR image, a CRA image, or a VLA image.

In operation 11, the base layer encoder 12 according to an embodiment may perform inter prediction and intra prediction on the base layer images. The base layer encoder 12 may perform intra prediction on a base layer RAP image. The base layer encoder 12 may perform inter prediction on at least one base layer non-RAP image by referencing the base layer RAP image. Inter prediction may be performed on base layer images following a first base layer RAP image in a decoding order by referencing at least one enhancement layer image obtained by excluding enhancement layer images preceding the first base layer RAP image in a decoding order from the enhancement layer images.

In operation 13, the enhancement layer encoder 14 according to an embodiment may perform inter prediction on at least one enhancement layer image by referencing an enhancement layer RAP image corresponding to the base layer RAP image. Also, the enhancement layer encoder 14 may perform inter-layer prediction on the enhancement layer images by using a pre-reconstructed base layer image.

The base layer encoder 12 according to an embodiment may perform intra prediction on a base layer IDR image. The base layer encoder 12 may perform inter prediction on at least one base layer image by referencing the base layer IDR image. Inter prediction using a pre-reconstructed base layer IDR image may be performed on base layer images preceding the base layer IDR image in a decoding order.

The enhancement layer encoder 14 according to an embodiment may perform inter-layer prediction on an enhancement layer IDR image corresponding to the base layer IDR image by referencing the base layer IDR image. The enhancement layer encoder 14 according to an embodiment may perform inter prediction on at least one enhancement layer image by referencing the enhancement layer IDR image corresponding to the base layer IDR image. Also, inter prediction using a pre-reconstructed enhancement layer IDR image may be performed on enhancement layer images following the enhancement layer IDR image in a decoding order.

The base layer encoder 12 according to an embodiment may include NAL unit type information indicating an IDR image to an NAL unit of the base layer IDR image. The enhancement layer encoder 14 according to an embodiment may include NAL unit type information indicating an IDR image to an NAL unit of an enhancement layer image corresponding to the base layer IDR image.

The base layer encoder 12 according to an embodiment may perform intra prediction on a base layer CRA image. The base layer encoder 12 may perform inter prediction that references the base layer CRA image on at least one base layer image following the base layer CRA image in a decoding order. Images following the base layer CRA image in a decoding order are unable to use images preceding the base layer CRA image in a reproduction order or a decoding order prior.

The enhancement layer encoder 14 according to an embodiment may perform inter-layer prediction that references the base layer CRA image on an enhancement layer CRA image corresponding to the base layer CRA image. The enhancement layer encoder 14 according to an embodiment may perform inter prediction on at least one enhancement layer image by referencing the enhancement layer CRA image corresponding to the base layer CRA image. Also, inter prediction using a pre-reconstructed enhancement layer CRA image may be performed on enhancement layer images following the enhancement layer CRA image in a decoding order. Images following the enhancement layer CRA image in a decoding order are unable to use images preceding the enhancement layer CRA image in a decoding order or a reproduction order.

The base layer encoder 12 according to an embodiment may include NAL unit type information indicating a CRA image to an NAL unit of the base layer CRA image. The enhancement layer encoder 14 according to an embodiment may include NAL unit type information indicating a CRA image to an NAL unit of the enhancement layer image corresponding to the base layer CRA image.

The base layer encoder 12 according to an embodiment may perform intra prediction on a base layer BLA image. The base layer encoder 12 may perform inter prediction that references the base layer BLA image on at least one base layer image subsequent to the base layer BLA image in a decoding order. Images following the base layer BLA image in a decoding order are unable to use images preceding the base layer BLA image in a decoding order or a reproduction order.

The enhancement layer encoder 14 according to an embodiment may perform inter-layer prediction that references the base layer BLA image on an enhancement layer BLA image corresponding to the base layer BLA image. The enhancement layer encoder 14 according to an embodiment may perform inter prediction on at least one enhancement layer image by referencing the enhancement layer BLA image corresponding to the base layer BLA image. Also, inter prediction using a pre-reconstructed enhancement layer BLA image may be performed on enhancement layer images following the enhancement layer BLA image in a decoding order. Images following the enhancement layer BLA image in a decoding order are unable to use images preceding the enhancement layer BLA image in a decoding order or a reproduction order.

The base layer encoder 12 according to an embodiment may include NAL unit type information indicating a BLA image to an NAL unit of the base layer BLA image. The enhancement layer encoder 14 according to an embodiment may include NAL unit type information indicating a BLA image to an NAL unit of an enhancement layer image corresponding to the base layer CRA image.

An image following an RAP image in a decoding order and preceding the RAP image in a reproduction order is referred to as a leading picture. The leading picture may be one of an RASL image that references a first RAP image and a second RAP image having preceding the first RAP image in a decoding order, and an RADL image that only references the first RAP image. When random access occurs in the first RAP image, the RASL image is not decodable but the RADL image is decodable.

The base layer encoder 12 according to an embodiment may perform inter prediction on a base layer RASL image by referencing a first base layer RAP image and second base layer RAP images preceding the first base layer RAP image in a decoding order.

The enhancement layer encoder 14 according to an embodiment may perform inter-layer prediction that references a first base layer RASL image on a first enhancement layer RASL image corresponding to the base layer RASL image. Also, the enhancement layer encoder 14 according to an embodiment may perform inter prediction on an enhancement layer RASL image according to an embodiment by referencing a first enhancement layer RAP image and a second enhancement layer RAP image preceding the first enhancement layer RAP image in a decoding order.

The base layer encoder 12 according to an embodiment may include NAL unit type information indicating an RASL image to an NAL unit of the base layer RASL image. The enhancement layer encoder 14 according to an embodiment may include NAL unit type information indicating an RASL image to an NAL unit of an enhancement layer image corresponding to the base layer RASL image.

The base layer encoder 12 according to an embodiment may perform inter prediction on a base layer RADL image by referencing the first base layer RAP image and the second base layer RAP images preceding the first base layer RAP image in a decoding order.

The enhancement layer encoder 14 according to an embodiment may perform inter-layer prediction on the first enhancement layer RASL image corresponding to the base layer RADL image by referencing a first base layer RADL image. Also, the enhancement layer encoder 14 according to an embodiment may perform inter prediction on an enhancement layer RADL image according to an embodiment by referencing the first enhancement layer RAP image.

The base layer encoder 12 according to an embodiment may include NAL unit type information indicating an RADL image to an NAL unit of the base layer RADL image. The enhancement layer encoder 14 according to an embodiment may include NAL unit type information indicating an RADL image to an NAL unit of an enhancement layer image corresponding to the base layer RADL image.

The enhancement layer encoder 14 according to another embodiment may determine a first enhancement layer view layer access (VLA) image from among the enhancement layer images. A base layer image corresponding to an enhancement layer VLA image may be one of an RAP image and a non-RAP image. In other words, an image of another layer corresponding to a VLA image may not be an RAP image. The enhancement layer encoder 14 may perform inter-layer prediction on an enhancement layer VLA image by referencing a base layer image. The enhancement layer encoder 14 may only perform inter-layer prediction and not inter prediction that references another image of the same layer for a VLA image.

According to another embodiment, in order to perform inter prediction on enhancement layer images following an enhancement layer VLA image in a decoding order, at least one of enhancement layer images subsequent or equal to the enhancement layer VLA image in a decoding order and a reproduction order may be referenced. According to another embodiment, enhancement layer images following the enhancement layer VLA image in a decoding order are unable to use an enhancement layer image preceding the enhancement layer VLA image in a decoding order or a reproduction order. An image preceding a VLA image in a decoding order may precede the VLA image in a reproduction order.

The base layer encoder 12 according to an embodiment may perform inter prediction on a first base layer normal picture. Here, a normal picture is an image that is neither an RAP image nor an RASL image. The enhancement layer encoder 12 according to an embodiment may determine a first enhancement layer image corresponding to the first base layer normal picture as one of a first enhancement layer CRA image, a first enhancement layer RASL image, and a first enhancement layer normal picture. The enhancement layer encoder 12 according to an embodiment pay perform, on the first enhancement layer normal picture, inter-layer prediction that references the first base layer normal picture and inter prediction that references an enhancement layer RAP image.

According to an embodiment, when decoding is performed from a first base layer RAP image, decoding on a base layer RASL image preceding the first base layer RAP image in a decoding order may be skipped. According to an embodiment, decoding on an enhancement layer image corresponding to a base layer image of which decoding is skipped may also be skipped.

According to another embodiment, when the multi-layer video encoding apparatus 10 has a temporal hierarchical prediction structure, the enhancement layer encoder 14 may perform inter-layer prediction on a first enhancement layer image by referencing a first base layer image to which a temporal hierarchical identification number in a lower layer than that of an enhancement layer image is assigned.

Thus, according to the multi-layer video encoding apparatus 10 according to an embodiment, in order to guarantee inter-layer prediction between a base layer image and an enhancement layer image and an output synchronized between layers, inter-layer prediction may be performed between a base layer image and an enhancement layer image to which the same reproduction order picture order count (POC) is assigned.

Also, when restoration of a base layer RASL image is skipped due to a random access point or viewpoint change, restoration of an enhancement layer RASL image corresponding to the base layer RASL image may be skipped.

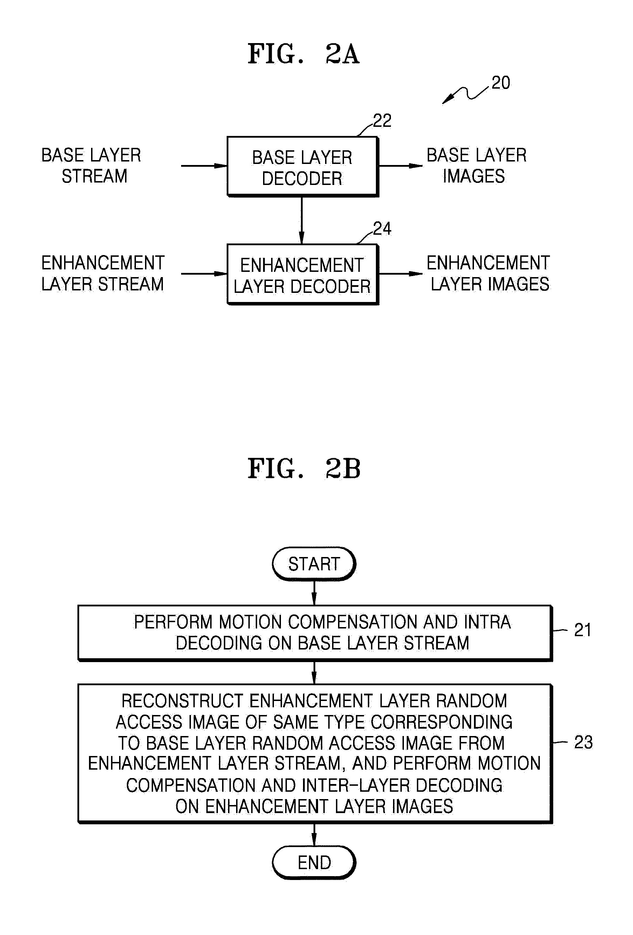

FIG. 2A is a block diagram of a multi-layer video decoding apparatus 20 according to an embodiment of the present invention. FIG. 2B is a flowchart of a multi-layer video decoding method of the multi-layer video decoding apparatus 10 of FIG. 2A.

The multi-layer video decoding apparatus 20 according to an embodiment includes a base layer decoder 22 and an enhancement layer decoder 24.

The multi-layer video decoding apparatus 20 according to an embodiment receives a base layer stream and an enhancement layer stream. The multi-layer video decoding apparatus 20 may receive the base layer stream including encoding data of base layer images and the enhancement layer stream including encoding data of enhancement layer images, according to a scalable video coding method.

The multi-layer video decoding apparatus 20 according to an embodiment may decode a plurality of layer streams according to a scalable video coding method. The multi-layer video decoding apparatus 20 according to an embodiment may reconstruct the base layer images by decoding the base layer stream and reconstruct the enhancement layer images by decoding the enhancement layer stream.

For example, a multiview video may be encoded according to a scalable video coding method. For example, central view images may be reconstructed by decoding the base layer stream. Left view images may be reconstructed by further decoding a first enhancement layer stream. Right view images may be reconstructed by further decoding a second enhancement layer stream.

Alternatively, a scalable video coding method may be performed according to temporal hierarchical prediction. Base frame rate images may be reconstructed by decoding the base layer stream. High frame rate images may be reconstructed by further decoding the enhancement layer stream.

When a number of enhancement layers is at least three, first enhancement layer images of a first enhancement layer may be reconstructed from a first enhancement layer stream, and second enhancement layer images may be further reconstructed by further decoding a second enhancement layer stream. K-th enhancement layer images may be further reconstructed by further decoding a K-th enhancement layer stream in addition to the first enhancement layer stream.

The multi-layer video decoding apparatus 20 according to an embodiment may perform decoding according to blocks of each image of a video. A block according to an embodiment may be a maximum coding unit, a coding unit, a prediction unit, or a transformation unit, from among coding units having a tree structure.

The multi-layer video decoding apparatus 20 according to an embodiment obtains encoded data of the base layer images and the enhancement layer images from the base layer stream and the enhancement layer stream, and may further obtain a motion vector generated via inter prediction and disparity information generated via inter-layer prediction.

For example, the multi-layer video decoding apparatus 20 may decode inter predicted data according to layers, and decode inter-layer predicted data between a plurality of layers. Restoration may be performed via motion compensation and inter-layer decoding based on a coding unit or a prediction unit according to an embodiment.

Regarding each layer stream, images may be reconstructed by performing motion compensation that mutually references images predicted via inter prediction of the same layer. Motion compensation is an operation of reconstructing a reconstructed image of a current image by composing a reference image determined by using a motion vector of the current image and a residual of the current image.

Also, the multi-layer video decoding apparatus 20 according to an embodiment may perform inter-layer decoding which references the base layer images so as to reconstruct the enhancement layer images predicted via inter-layer prediction. Inter-layer decoding is an operation of reconstructing a reconstructed image of a current image by composing a reference image of a different layer, which is determined by using disparity information of the current image, and a residual of the current image.

The multi-layer video decoding apparatus 20 according to an embodiment may perform inter-layer decoding for restoring second enhancement layer images predicted by referencing first enhancement layer images.

According to an embodiment, the base layer images and the enhancement layer images may include RAP images capable of random access. Hereinafter, decoding processes of the base layer decoder 22 and the enhancement layer decoder 24 will be described in detail.

The base layer decoder 22 according to an embodiment reconstructs the base layer images by decoding the received base layer stream. In detail, residuals of the base layer images may be reconstructed by performing entropy decoding, inverse quantization, and inverse transformation on symbols extracted by parsing the base layer stream.

The base layer decoder 22 may directly receive a bitstream of quantized transformation coefficients of the base layer images. The residuals of the base layer images may be reconstructed by performing inverse quantization and inverse transformation on the quantized transformation coefficients. The base layer decoder 22 may reconstruct the base layer images via motion compensation that references the base layer images.

The base layer decoder 22 according to an embodiment may reconstruct a base layer RAP image by decoding a quantized transformation coefficient of an I-type base layer RAP image from the base layer stream. The base layer decoder 22 according to an embodiment may reconstruct the I-type base layer RAP image from among the base layer images without referencing another base layer image. The base layer decoder 22 according to an embodiment may reconstruct pixels of blocks of the I-type base RAP image via intra prediction using adjacent pixels of a current block in the same picture.

Also, the base layer decoder 22 may reconstruct base layer images excluding the base layer RAP image form the base layer images via motion compensation that references other base layer images. The base layer decoder 22 may reconstruct residuals of base layer images obtained by excluding the base layer RAP image from the base layer images, and reconstruct the base layer images by determining a reference image from the base layer images and compensating the reference image for the residuals.

The enhancement layer decoder 24 according to an embodiment reconstructs the enhancement layer images by decoding the enhancement layer stream. In detail, a residual may be reconstructed according to blocks by performing entropy encoding, inverse quantization, and inverse transformation on symbols extracted by parsing the enhancement layer stream. The enhancement layer decoder 24 may directly receive a bitstream of a quantized transformation coefficient of the residual and reconstruct the residual by performing inverse quantization and inverse transformation on the bitstream.

In order to decode the enhancement layer stream, the enhancement layer decoder 24 according to an embodiment may reconstruct the enhancement layer images via motion compensation that references the base layer images reconstructed from the base layer stream, and inter-layer decoding that references images of the same layer.

The enhancement layer decoder 24 according to an embodiment may reconstruct the enhancement layer images via inter-layer decoding that references the base layer images reconstructed by the base layer decoder 22. Regarding a certain enhancement layer, current enhancement layer images may be reconstructed via inter-layer decoding that references not only the base layer images but also enhancement layer images of an enhancement layer other than the certain enhancement layer.

Motion compensation or inter-layer decoding is performed only when an image to be referenced is pre-reconstructed. However, an RAP image capable of random access does not reference another image of the same layer. Thus, according to an embodiment, when random access occurs in an RAP image, the RAP image may be immediately decoded even when there is no pre-reconstructed image in the same layer. In a multi-layer prediction structure according to an embodiment, if an RAP image exists in the base layer images, an enhancement layer RAP image corresponding to a base layer RAP image from among the enhancement layer images may be reconstructed.

Also, the enhancement layer decoder 24 may reconstruct enhancement layer images by performing motion compensation that references enhancement layer images of the same layer. In detail, the enhancement layer decoder 24 according to an embodiment may reconstruct enhancement layer images via motion compensation that references an enhancement layer RAP image of the same layer.

For enhancement layer images that are not an RAP image, the enhancement layer decoder 24 may reconstruct enhancement layer images via inter-layer decoding that references an image of another layer and motion compensation that references images of the same layer.

In detail, the enhancement layer decoder 24 may obtain motion vectors and residuals of enhancement layer images obtained by excluding an enhancement layer RAP image after decoding the enhancement layer stream. The enhancement layer decoder 24 may determine a reference image from images of the same layer by using the motion vector, and then reconstruct the enhancement layer images by compensating the reference image for the residuals. A reference block may be determined from the reference image by using a motion vector of a current block of a current image.

In detail, the enhancement layer decoder 24 may obtain disparity information and residuals of enhancement layer images obtained by excluding an enhancement layer RAP image after decoding the enhancement layer stream. The enhancement layer decoder 24 may determine a reference image from image of another layer by using the disparity information, and reconstruct the enhancement layer images by compensating the reference image for the residuals.

When a plurality of enhancement layer streams are decoded, the enhancement layer decoder 24 according to an embodiment may reconstruct enhancement layer images according to layers by decoding the enhancement layer streams according to the layers. Hereinafter, for convenience of description, an encoding operation of the enhancement layer decoder 24 according to an embodiment may be described as an operation performed on an enhancement layer stream of one layer. However, an operation of the enhancement layer decoder 24 is not performed only on an enhancement layer stream of one layer, and the same operation may be performed on each of enhancement layer streams of other layers.

In order to reconstruct an enhancement layer image, the enhancement layer decoder 24 according to an embodiment may perform inter-layer decoding that references base layer images and motion compensation that references reconstructed images of the same layer.

According to the multi-layer prediction structure of the multi-layer video decoding apparatus 20 according to an embodiment, a second layer stream may be decoded according to a layer change while a first layer stream is being decoded. For example, when a viewpoint change occurs in a multiview image structure or a temporal hierarchical change occurs in a temporal hierarchical prediction structure, a layer change may be performed in a multi-layer prediction structure. At this time, it is not possible to perform inter prediction since pre-reconstructed images of the same layer do not exist at a layer change point.

When random access or layer change occurs in an RAP image according to an embodiment, corresponding images are reconstructed together according to layers. Hereinafter, operations of the multi-layer video decoding apparatus 20 according to an embodiment performing scalable video decoding according to a multi-layer prediction structure wherein a layer change point is specified according to layers will be described.

In the multi-layer prediction structure according to an embodiment, when a base layer RAP image exists in the base layer images, an enhancement layer image corresponding to the base layer RAP image from among the enhancement layer images may be determined as an enhancement layer RAP image of the same type as the base layer RAP image. For example, when the base layer RAP image is an IDR image, an enhancement layer image corresponding to the base layer RAP image may also be determined as an IDR image. An enhancement layer image corresponding to a base layer CRA image may be determined as a CRA image. An enhancement layer image corresponding to a base layer BLA image may be determined as a BLA image. An enhancement layer image corresponding to a base layer TSA image may be determined as a TSA image.

Also, an enhancement layer image corresponding to a base layer RASL image may be determined as a RASL image.

The base layer decoder 22 and the enhancement layer decoder 24 according to an embodiment may obtain encoding data according to images per NAL unit. NAL unit type information may parsed to determine whether a current image is a trailing picture, a TSA image, an STSA image, an RADL image, an RASL image, a BLA image, an IDR image, a CRA image, or a VLA image.

In operation 21, the base layer decoder 22 according to an embodiment may reconstruct base layer images by performing motion compensation and intra decoding on a base layer stream. The base layer decoder 22 may reconstruct a base layer RAP image via intra decoding. The base layer decoder 22 may perform motion compensation for at least one base layer non-RAP image by referencing the base layer RAP image. Motion compensation may be performed on base layer images following a first base layer RAP image in a decoding order by using at least one enhancement layer image excluding enhancement layer images preceding the first base layer RAP image in a decoding order.

In operation 23, the enhancement layer decoder 24 according to an embodiment may perform inter-layer decoding for an enhancement layer RAP image corresponding to the base layer RAP image. The enhancement layer RAP image may be reconstructed via inter-layer decoding that references a pre-reconstructed base layer RAP image. Also, the enhancement layer decoder 24 may perform motion compensation on enhancement layer images by using the enhancement layer RAP image.

The base layer decoder 22 according to an embodiment may perform intra decoding for a base layer IDR image. The base layer decoder 22 may reconstruct at least one base layer image by performing inter prediction that references the base layer IDR image. For base layer images following the base layer IDR image in a decoding order, motion compensation using the base layer IDR image may be performed.

The enhancement layer decoder 24 according to an embodiment may perform inter-layer decoding by referencing the base layer IDR image in order to reconstruct an enhancement layer IDR image corresponding to the base layer IDR image. The enhancement layer decoder 24 according to an embodiment may perform inter prediction on at least one enhancement layer image by referencing the enhancement layer IDR image corresponding to the base layer IDR image. Also, inter prediction using a pre-reconstructed enhancement layer IDR image may be performed on enhancement layer images following the enhancement layer IDR image in a decoding order.

The base layer decoder 22 according to an embodiment may obtain NAL unit type information indicating an IDR image from an NAL unit and determine that a current image is an IDR image. The enhancement layer decoder 24 according to an embodiment may obtain NAL unit type information indicating an IDR image from an NAL unit of an enhancement layer image corresponding to the base layer IDR image.

The base layer decoder 22 according to an embodiment may perform intra decoding in order to reconstruct a base layer CRA image. The base layer decoder 22 may perform motion compensation that references the base layer CRA image in order to reconstruct at least one base layer image following the base layer CRA image in a decoding order. Images following the base layer CRA image in a decoding order are unable to use images preceding the base layer CRA image in a decoding order or a reproduction order.

The enhancement layer decoder 24 according to an embodiment may perform inter-layer decoding that references the base layer CRA image in order to reconstruct an enhancement layer CRA image corresponding to the base layer CRA image. The enhancement layer decoder 24 according to an embodiment may decode the enhancement layer CRA image corresponding to the base layer CRA image from the enhancement layer stream. In order to reconstruct at least one enhancement layer image, the enhancement layer decoder 24 may perform motion compensation that references the enhancement layer CRA image. Also, in order to reconstruct enhancement layer images following the enhancement layer CRA image in a decoding order, motion compensation using a pre-reconstructed enhancement layer CRA image from the enhancement layer stream may be performed. Images following the enhancement layer CRA image in a decoding order are unable to use images preceding the enhancement layer CRA image in a decoding order or in a reproduction order.

The base layer decoder 22 according to an embodiment may obtain NAL unit type information indicating a CRA image from an NAL unit, and determine that a current image is a CRA image. The enhancement layer decoder 24 according to an embodiment may obtain NAL unit type information indicating a CRA image from an NAL unit of an enhancement layer image corresponding to the base layer CRA image.

The base layer decoder 22 according to an embodiment may reconstruct a base layer BLA image by performing intra decoding on a point capable of random access from the base layer stream. The base layer decoder 22 may perform motion compensation that references the base layer BLA image for at least one base layer image following the base layer BLA image in a decoding order. Images following the base layer BLA image in a decoding order are unable to use images preceding the base layer BLA image in a decoding order or a reproduction order.

The enhancement layer decoder 24 according to an embodiment may perform inter-layer decoding that references the base layer BLA image in order to reconstruct an enhancement layer BLA image corresponding to the base layer BLA image. The enhancement layer decoder 24 according to an embodiment may reconstruct the enhancement layer BLA image by performing inter-layer decoding on a point corresponding to the base layer BLA image from the enhancement layer stream. Also, motion compensation for at least one enhancement layer image may be performed by referencing the enhancement layer BLA image. Also, in order to reconstruct enhancement layer images following the enhancement layer BLA image in a decoding order, motion compensation using the enhancement layer BLA image may be performed. Images following the enhancement layer BLA image in a decoding order are unable to use images preceding the enhancement layer BLA image in a decoding order or a reproduction order.

The base layer decoder 22 according to an embodiment may obtain NAL unit type information indicating a BLA image from an NAL unit and determine that a current image is a BLA image. The enhancement layer decoder 24 according to an embodiment may obtain NAL unit type information indicating a BLA image from an NAL unit of an enhancement layer image corresponding to the base layer BLA image.

The base layer decoder 22 according to an embodiment may perform motion compensation for a base layer RASL image by referencing a first base layer RAP image and a second base layer RAP image preceding the first base layer RAP image in a decoding order.

The enhancement layer decoder 24 according to an embodiment may reconstruct a first enhancement layer RASL image by performing inter-layer decoding that references a first base layer RASL image for a point corresponding to a base layer RASL image from the enhancement layer stream. Also, the enhancement layer decoder 24 according to an embodiment may perform motion compensation for the first enhancement layer RASL image according to an embodiment by referencing a first enhancement RAP image and a second enhancement layer RAP image preceding the first enhancement layer RAP image in a decoding order.

The enhancement layer decoder 24 according to another embodiment may determine a fist enhancement layer VLA image from among the enhancement layer images. A base layer image corresponding to an enhancement layer VLA image may be one of an RAP image and a non-RAP image. In other words, an image of another layer corresponding to a VLA image may not be an RAP image. The enhancement layer decoder 24 may perform inter-layer decoding that references a base layer image in order to reconstruct an enhancement layer VLA image. In order to reconstruct an enhancement layer VLA image, inter prediction that references images of the same layer may not be performed.

According to another embodiment, in order to perform inter prediction on enhancement layer images following an enhancement layer VLA image in a decoding order, at least one of enhancement layer images subsequent or equal to the enhancement layer VLA image in a decoding order and a reproduction order may be used. According to another embodiment, enhancement layer images following the enhancement layer VLA image in a decoding order are unable to use an enhancement layer image preceding the enhancement layer VLA image in a decoding order or a reproduction order. An image preceding a VLA image in a decoding order may have a reproduction order prior to a VLA image. When a RASL image of a current VLA image also references a previous VLA image, the RASL image may not be accurately decoded. In detail, the RASL may not be reconstructed but may be ignored when a layer change occurs in the current VLA image.

The enhancement layer decoder 24 according to an embodiment may obtain NAL unit type information indicating a VLA image from an NAL unit of an enhancement layer image corresponding to the base layer VLA image.

The base layer decoder 22 according to an embodiment may perform motion compensation on a first base layer normal picture. The enhancement layer decoder 24 according to an embodiment may determine a first enhancement layer image corresponding to a first base layer image as one of a first enhancement layer CRA image, a first enhancement layer RASL image, and a first enhancement layer normal picture. The enhancement layer decoder 24 according to an embodiment may reconstruct the first enhancement layer normal picture via inter-layer prediction that references the first base layer normal picture and motion compensation that references an enhancement layer RAP image.

The base layer decoder 22 according to an embodiment may skip decoding on a base layer RASL image preceding a first base layer RAP image in a decoding order when decoding starts from the first base layer RAP image. The base layer decoder 22 according to an embodiment may also skip decoding on an enhancement layer image corresponding to a base layer image of which decoding is skipped.

For example, a first base layer IDR image nearest to a point where random access occurred with respect to a base layer stream may be reconstructed. Since a first base layer RASL image follows a first base layer IDR image in a decoding order but references images preceding the first base layer IDR image in a decoding order, the first base layer RASL image may not be decoded. Accordingly, an enhancement layer RASL image corresponding to the first base layer RASL image may also not be decoded.

For example, a first base layer CRA image (or BLA image) nearest to a point where random access occurred with respect to a base layer stream or to a stream edit point may be reconstructed. Since a first base layer RASL image follows the first base layer CRA image (or BLA image) in a decoding order but references images preceding the first base layer CRA image (or BLA image) in a decoding order or a reproduction order, the first base layer RASL image may not be decoded. Accordingly, an enhancement layer RASL image corresponding to the first base layer RASL image may also not be decoded.

For example, a first base layer VLA image nearest to a point where a viewpoint change occurred with respect to a base layer stream may be reconstructed. Since a first base layer RASL image follows the first base layer VLA image in a decoding order but references images precede the first base layer VLA image in a decoding order or a reproduction order, the first base layer RASL image may not be decoded. Accordingly, an enhancement layer RASL image corresponding to the first base layer RASL image may not be decoded.

The base layer decoder 22 according to an embodiment may obtain NAL unit type information indicating an RASL image from an NAL unit, and determine that a current image is an RASL image. The enhancement layer decoder 24 according to an embodiment may obtain NAL unit type information indicating an RASL image from an NAL unit of an enhancement layer image corresponding to a base layer RASL image.

Similarly, the base layer decoder 22 according to an embodiment may obtain NAL unit type information indicating an RADL image from an NAL unit, and determine that a current image is an RADL image. The enhancement layer decoder 24 according to an embodiment may obtain NAL unit type information indicating an RADL image from an NAL unit of an enhancement layer image corresponding to the base layer RADL image.

When the multi-layer video decoding apparatus 20 has a temporal hierarchical prediction structure according to another embodiment, the enhancement layer decoder 24 may perform inter-layer decoding for a first enhancement layer image by referencing a first base layer image to which a temporal hierarchical identification number that is in a lower layer than that of an enhancement layer image is assigned. Accordingly, low speed frame rate images may be reconstructed from a base layer image and high frame rate images may be reconstructed from an enhancement layer image.

Also, according to the multi-layer video decoding apparatus 20 according to an embodiment, an output synchronized between a base layer image and an enhancement layer image may be guaranteed by performing inter-layer decoding between the base layer image and the enhancement layer image to which the same reproduction order POC is assigned.

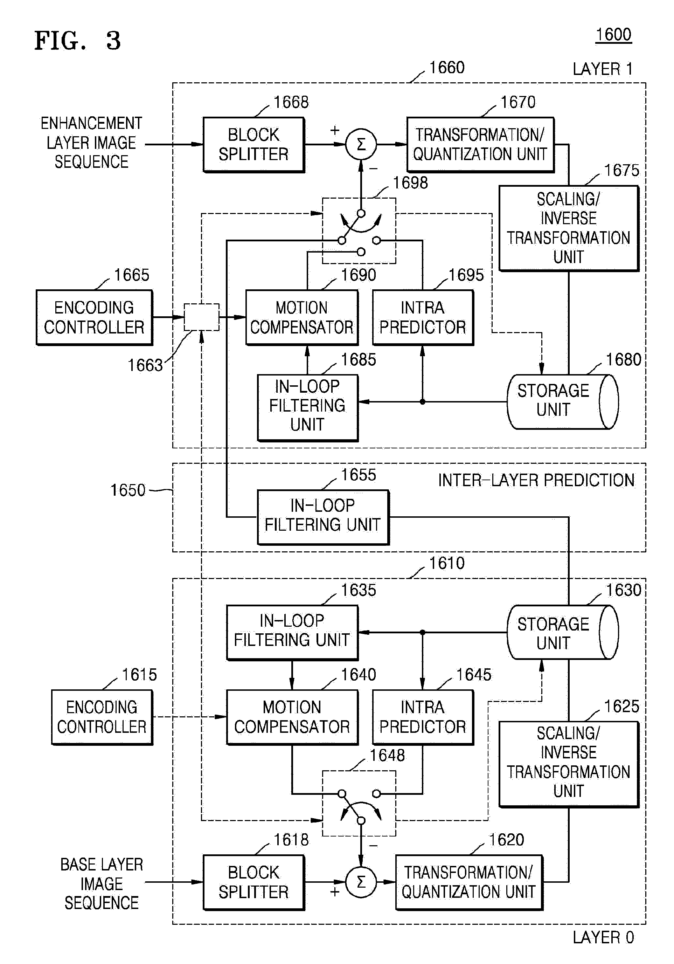

FIG. 3 is a diagram of an inter-layer prediction structure according to an embodiment of the present invention.

An inter-layer encoding system 1600 includes a base layer encoder 1610, an enhancement layer encoder 1660, and an inter-layer predictor 1650 between the base layer encoder 1610 and the enhancement layer encoder 1660. The base layer encoder 1610 and the enhancement layer encoder 1660 may respectively show detailed structures of the base layer encoder 12 and the enhancement layer encoder 14.

The base layer encoder 1610 receives and encodes a base layer image sequence according to images. The enhancement layer encoder 1660 receives and encodes an enhancement layer image sequence according to images. Overlapping operations of the base layer encoder 1610 and the enhancement layer encoder 1660 will be simultaneously described.

An input image (a low resolution image or a high resolution image) is split into a maximum coding unit, a coding unit, a prediction unit, or a transformation unit through a block splitter 1618 or 1668. In order to encode a coding unit output from the block splitter 1618 or 1668, intra prediction or inter prediction may be preformed according to prediction units of the coding unit. A prediction switch 1648 or 1698 may enable inter prediction to be performed by referencing a pre-reconstructed image output from a motion compensator 1640 or 1690 or intra prediction to be performed by using a neighboring prediction unit of a current prediction unit in a current input image output from an intra predictor 1645 or 1695, based on whether a prediction mode of a prediction unit is an intra prediction mode or an inter prediction mode. Residual information may be generated according to prediction units via inter prediction.

Residual information between a prediction unit and an adjacent image is input to a transformation/quantization unit 1620 or 1670 according to prediction units of a coding unit. The transformation/quantization unit 1620 or 1670 may output a quantized transformation coefficient by performing transformation and quantization according to transformation units, based on a transformation unit of a coding unit.

A scaling/inverse transformation unit 1625 or 1675 may generate residual information of a spatial domain by again performing scaling and inverse transformation on the quantized transformation coefficient according to transformation units of a coding unit. When the prediction switch 1648 or 1698is controlled to point at an inter mode , a reconstructed image including a current prediction unit may be generated as the residual information is composed with a pre-reconstructed image or a neighboring prediction unit, and the reconstructed image may be stored in a storage unit 1630 or 1680. The reconstructed image may be transmitted to the intra predictor 1645 or 1695 or the motion compensator 1640 or 1690 according to a prediction mode of a prediction unit that is encoded next.

In detail, in an inter mode, an in-loop filtering unit 1635 or 1685 may perform, on a reconstructed image stored in the storage unit 1630 or 1680, at least one of deblocking filtering and sample adaptive offset (SAO) filtering according to coding units. At least one of deblocking filtering and SAO filtering may be performed on a coding unit and at least one of a prediction unit and a transformation unit included in the coding unit.

Deblocking filtering is filtering for easing a blocking phenomenon of a data unit, and SAO filtering is filtering for compensating for a pixel value that is transformed according to data encoding and decoding. Data filtered by the in-loop filtering unit 1635 or 1685 may be transmitted to the motion compensator 1640 or 1690 according to prediction units. Then, in order to encode a following coding unit output from the block splitter 1618 or 1668, residual information between a current reconstructed image and a following coding unit output from the motion compensator 1640 or 1690 and the block splitter 1618 or 1668 may be generated.

As such, the above encoding operation may be repeated according to coding units of an input image.

Also, for inter-layer prediction, the enhancement layer encoder 1660 may reference a reconstructed image stored in the storage unit 1630 of the base layer encoder 1610. An encoding controller 1615 of the base layer encoder 1610 may control the storage unit 1630 of the base layer encoder 1610 to transmit a reconstructed image of the base layer encoder 1610 to the enhancement layer encoder 1660. In the inter-layer predictor 1650, an in-loop filtering unit 1655 may perform at least one of deblocking filtering, SAO filtering, and ALF filtering on a base layer reconstructed image output from the storage unit 1630 of the base layer encoder 1610. When resolution of a base layer image and resolution of an enhancement layer image are different from each other, the inter-layer predictor 1650 may up-sample the base layer reconstructed image before transmitting the base layer reconstructed image to the enhancement layer encoder 1660. When inter-layer prediction is performed according to control of the prediction switch 1698 of the enhancement layer encoder 1660, inter-layer prediction may be performed on an enhancement layer image by referencing the base layer reconstructed image transmitted through the inter-layer predictor5 1650.

In order to encode an image, various encoding modes may be set for a coding unit, a prediction unit, and a transformation unit. For example, a depth or split information (split flag) may be set as an encoding mode of a coding unit. A prediction mode, a partition type, intra direction information, or reference list information may be set as an encoding mode of a prediction unit. A transformation depth or split information may be set as an encoding mode of a transformation unit.

The base layer encoder 1610 may determine an encoding depth, a prediction mode, a partition type, an intra direction/reference list, and a transformation depth, which have highest encoding efficiency, based on results of performing encoding by applying various depths for a coding unit, various prediction modes, various partition types, various intra directions, and various reference lists for a prediction unit, and various transformation depths for a transformation unit. The encoding mode determined by the base layer encoder 1610 is not limited thereto.

The encoding controller 1615 of the base layer encoder 1610 may control each component such that one of various encoding modes is suitably applied thereto. Also, the encoding controller 1615 may control the enhancement layer encoder 1660 to determine an encoding mode or residual information by referencing an encoding result of the base layer encoder 1610, for inter-layer encoding of the enhancement layer encoder 1660.

For example, the enhancement layer encoder 1660 may use an encoding mode of the base layer encoder 1610 as an encoding mode for an enhancement layer image, or may determine an encoding mode for an enhancement layer image by referencing an encoding mode of the base layer encoder 1610. The encoding controller 1615 of the base layer encoder 1610 may control a control signal of an encoding controller 1665 of the enhancement layer encoder 1660 to use a current encoding mode of the base layer encoder 1610 in order to determine a current encoding mode of the enhancement layer encoder 1660.

An inter-layer decoding system according to an inter-layer prediction method may be realized similarly to the inter-layer encoding system 1600 of FIG. 3 according to the inter-layer prediction method. In other words, the inter-layer decoding system of a multi-layer video may receive a base layer bitstream and an enhancement layer bitstream. A base layer decoder of the inter-layer decoding system may reconstruct base layer images by decoding the base layer bitstream. An enhancement layer decoder of the inter-layer decoding system may reconstruct enhancement layer images by decoding the enhancement layer bitstream by using a base layer reconstructed image and parsed encoding information.

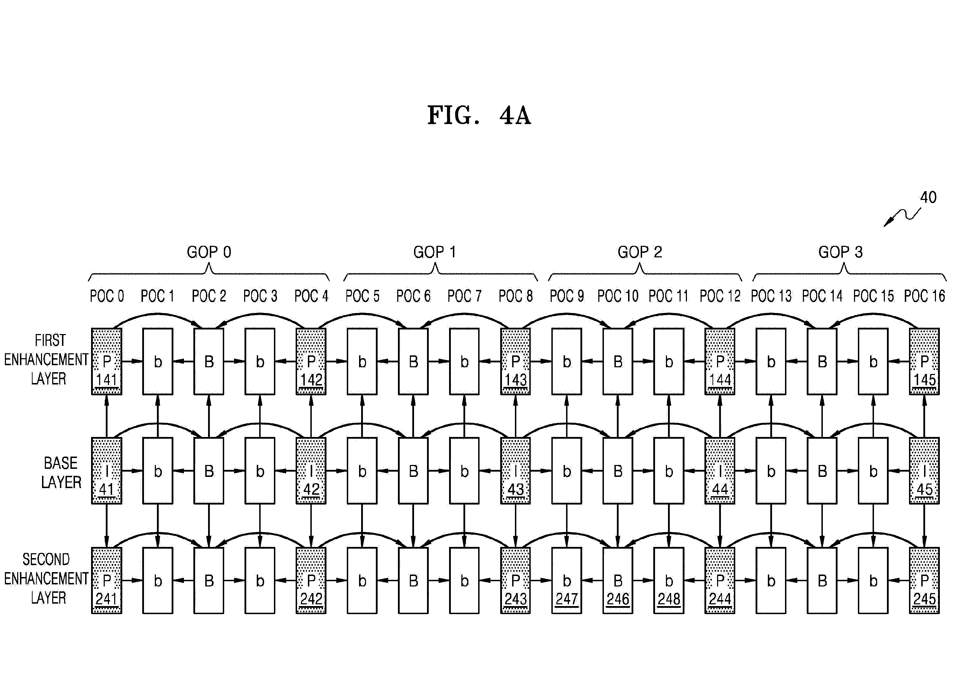

FIG. 4A is a diagram of a multi-layer prediction structure 40 of multi-layer images.

In the multi-layer prediction structure 40 of FIG. 4A, images are arranged in a reproduction order POC. According to a reproduction order and a decoding order of the multi-layer prediction structure 40, images of the same layer are arranged in a horizontal direction.

Also, images having the same POC value are arranged in a vertical direction. A POC value indicates a reproduction order of images forming a video. 'POC X' indicated in the multi-layer prediction structure 40 indicates a relative reproduction order of images in a corresponding column, wherein a reproduction order is fast when a value of X is low, and is slow when the value of X is high.

Thus, according to the reproduction order of the multi-layer prediction structure 40, images of each layer are arranged in the horizontal direction according to POC values (reproduction order). Also, first and second enhancement layer images located on the same column as a base layer image have the same POC value (reproduction order).

Four consecutive images form one group of pictures (GOP) according to layers. Each GOP includes images between consecutive anchor pictures, and one anchor picture.

An anchor picture is a random access point, and when a reproduction location is arbitrarily selected from images arranged according to a reproduction order, i.e., a POC value, while reproducing a video, an anchor picture closest to the reproduction location according to the POC order is reproduced. The base layer images include base layer anchor pictures 41 through 45, the first enhancement layer images include first enhancement layer anchor pictures 141 through 145, and the second enhancement layer images include second enhancement layer anchor pictures 241 through 245.

Multi-layer images may be reproduced and predicted (reconstructed) according to a GOP order. First, according to a reproduction order and a decoding order of the multi-layer prediction structure 40 of FIG. 4A, images included in GOP 0 may be reconstructed and reproduced, and then images included in GOP 1 may be reconstructed and reproduced, according to layers. In other words, images included in each GOP may be reconstructed and reproduced in an order of GOP 0, GOP 1, GOP 2, and GOP 3.

According to the reproduction order and the decoding order of the multi-layer prediction structure 40, inter-layer prediction and inter prediction are performed on images. In the multi-layer prediction structure 40, an image where an arrow starts is a reference image, and an image where an arrow ends is an image predicted by using a reference image.

In detail, in the decoding order of the multi-layer prediction structure 40, images are arranged in the horizontal direction according to a prediction (restoration) order. In other words, images located relatively to the left are images that are pre-predicted (pre-reconstructed), and images located relatively to the right are images that are post-predicted (post-reconstructed). Since images that follow pre-reconstructed images are predicted (reconstructed) by referring to the pre-reconstructed images, arrows indicating a prediction direction of images of the same layer all point in a direction from images relatively on the left toward images relatively on the right in the decoding order.

A prediction result of the base layer images may be encoded and then output as a base layer image stream. Also, a prediction encoding result of the first enhancement layer images may be output as a first enhancement layer stream, and a prediction encoding result of the second enhancement layer images may be output as a second enhancement layer stream.

Only inter-prediction is performed on the base layer images. In other words, the base view anchor pictures 41 through 45 of an I-type are not predicted by referring to other images, but images of B- and b-types are predicted by referring to other base layer images. Images of a B-type are predicted by referring to an anchor picture of an I-type, which precedes the images of a B-type according to a POC value, and a following anchor picture of an I-type. Images of a b-type are predicted by referring to an anchor picture of an I-type, which precedes the image of a b-picture type according a POC value, and a following image of a B-type, or by referring to an image of a B-type, which precedes the images of a b-picture type according to a POC value, and a following anchor picture of an I-type.

Inter-layer prediction that references base layer images, and inter prediction that references images of the same viewpoint are performed on the first and second enhancement layer images.

Like the base layer images, inter prediction is performed on the first enhancement layer images and inter prediction is performed on the second enhancement layer images. The first and second enhancement layer anchor pictures 141 through 145 and 241 through 245 of the first and second enhancement layer images do not reference images of the same layer, but the remaining images are predicted by referring to the images of the same layer.

However, the first and second enhancement layer anchor pictures 141 through 145 and 241 through 245 of the first and second enhancement layer images are also images of a P-type, which reference the base layer anchor pictures 41 through 45 having the same POC value.

Since not only inter prediction, but also inter-layer prediction that references base layer images having the same POC may be performed on the first and second enhancement layer images excluding the first and second enhancement layer anchor pictures 141 through 145 and 241 through 245, the first and second enhancement layer images excluding the first and second enhancement layer anchor pictures 141 through 145 and 241 through 245 are images of a B- or b-type.

Restoration processes for reproducing images are similar to prediction processes. However, each image may be reconstructed by using a reconstructed reference image only after a reference image of each image is reconstructed.

First, the base layer images may be reconstructed via inter-motion compensation. When the base layer anchor pictures 41 through 45 of an I-type are reconstructed, base layer images of a B-type may be reconstructed via inter-motion compensation that references the base layer anchor pictures 41 through 45. Also, base layer images of a b-type may be reconstructed via inter-motion compensation that references base layer reconstructed images of an I- or B-type.

The first and second enhancement layer images are respectively encoded via inter-layer prediction that references the base layer images and inter prediction that references the images of the same layer.

In other words, for a restoration process of a first enhancement layer image, the first enhancement layer images may be reconstructed via inter-layer disparity compensation that references base layer images reconstructed after reference images of a base viewpoint is reconstructed. Also, after a reference image of a first enhancement layer is reconstructed, the first enhancement layer images may be reconstructed via motion compensation that references the reconstructed reference image of the first enhancement layer.

Also, after the reference image of the base viewpoint is reconstructed, the second enhancement layer images may be reconstructed via inter-layer disparity compensation that references the reference image of the base viewpoint. After a reference image of a second enhancement layer is reconstructed, the second enhancement layer images may be reconstructed via motion compensation that references the reconstructed reference image of the second enhancement layer.

FIG. 4B is a diagram of a multi-layer prediction structure according to a temporal hierarchical encoding and decoding method.

A scalable video coding method may be performed according to a temporal hierarchical prediction structure 50. The temporal hierarchical prediction structure 50 includes a prediction structure of hierarchical B-type images 55 through 63. In a prediction structure of level 0, inter prediction of I-type images 51 and 54, and inter prediction of P-type images 52 and 53 are performed. In a prediction structure of level 1, inter prediction of B-type images 55 through 57 that references the I-type images 51 and 54, and P-type images 52 and 53 is performed. In a prediction structure of level 2, inter prediction that references the I-type images 51 and 54, the P-type images 52 and 53, and the B-type images 55 through 57 of level 1 is performed.

'temporal_id' is a number for identifying a prediction level, and a frame rate may increase as images of each level are output. For example, when the I-type images 51 and 54, and P-type images 52 and 53 of level 0 are decoded and output at a frame rate of 15 Hz, and then when the B-type images 55 through 57 of level 1 are decoded and output, a frame rate increases to 30 Hz, and when the B-type images 58 through 63 of level 2 are decoded and output, a frame rate may increase to 60 Hz.

According to an embodiment, when the temporal hierarchical prediction structure 50 is realized in a scalable video coding method, images of level 0 may be encoded as base layer images, images of level 1 may be encoded as first enhancement layer images, and images of level 2 may be encoded as second enhancement layer images.

During a decoding process of a multi-layer prediction structure of FIGS. 4A and 4B, in order to reconstruct images via motion compensation or inter-layer decoding, pre-reconstructed base layer images may be used or pre-reconstructed enhancement layer images may be used. However, when a layer change occurs or a random access request is generated, an image preceding a current RAP image in a decoding order may not be pre-reconstructed. In this case, images predicted by referencing the image preceding the current RAP image in a decoding order are unable to be reconstructed.

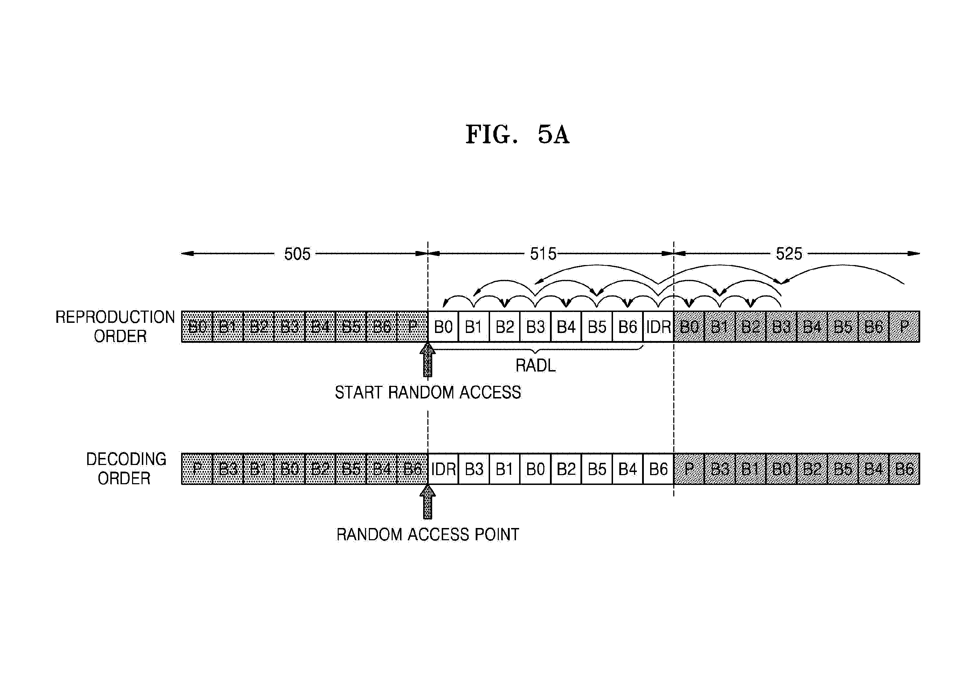

Hereinafter, decoding operations performed when a random access request is generated according to types of an RAP image will be described with reference to FIGS. 5A through 7B.

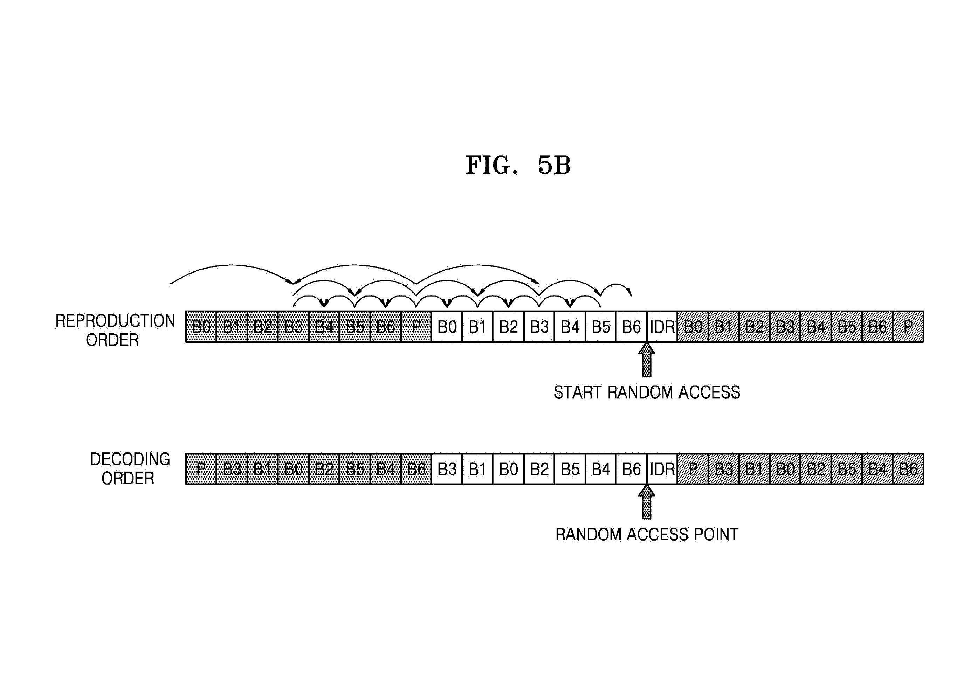

FIGS. 5A and 5B illustrate a reproduction order and a decoding order of an IDR image according to two embodiments of the present invention.

In FIG. 5A, a size of each of GOPs 505, 515, and 525 is 8. B0 through B6 indicate identification numbers of B-type images in the same GOP arranged according a reproduction order.

An IDR image is an image that is independently encoded. While decoding an IDR image, reconstructed images may all be displayed as "unused for reference". Images following an IDR image in a decoding order may be reconstructed without having to perform inter prediction that uses images preceding the IDR image in a decoding order. A picture type of the first image of an encoded video sequence according to a decoding order is an IDR picture.

For example, B-type images of the GOP 515 may precede an IDR image in a reproduction order but follow the IDR image in a decoding order. Also, the B-type images of the GOP 515 do not reference other images preceding the IDR image in a decoding order. B-type images of the GOP 525 following the IDR image in a decoding order and a reproduction order, and do not reference other images preceding the IDR image in a decoding order.

When a random access occurs, images preceding a random access in a decoding order point are unable to be reconstructed. In FIG. 5A, the B-type images of the GOP 515 preceding the IDR image in a decoding order, but may be reconstructed by referencing the IDR image that is pre-reconstructed. In this case, since the B-type images of the GOP 515 may be all decoded and output, the B-type images of the GOP 515 may be RADL images. Accordingly, the B-type images of the GOP 515 may all be reproduced, and thus the random access point and a point where random access reproduction starts may match each other.

In FIG. 5B, since the B-type images of the GOP 515 are not required to be decoded based on a reproduction order from the random access point, the B-type images of the GOP 525 are reproduced as the random access starts from the IDR image.

When the IDR image is used, all images according to a reproduction order may be naturally reconstructed without a lost image from the random access point, but encoding efficiency may be decreased.

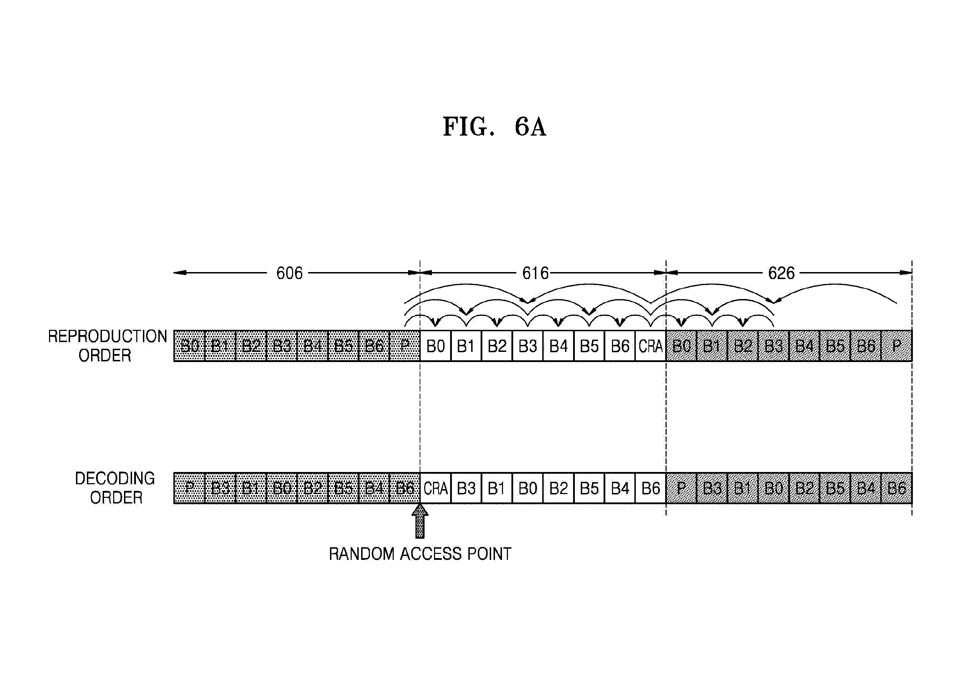

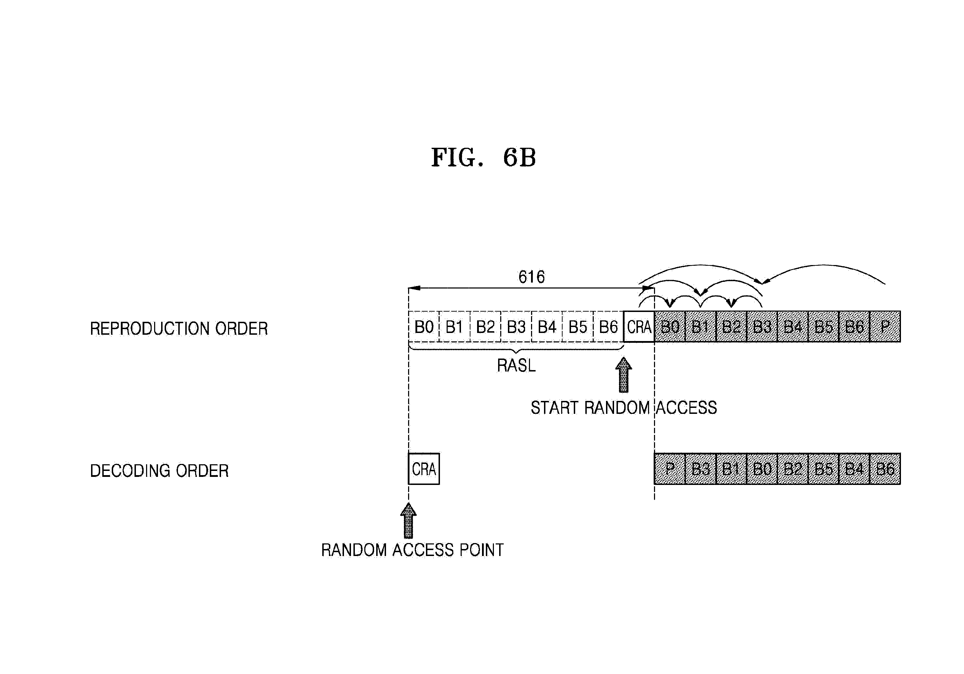

FIGS. 6A and 6B illustrate a reproduction order and a decoding order of a CRA image according to two embodiments of the present invention.

A CRA image is an image including only I-type slices. While decoding a CRA image, reconstructed images stored in a decoded picture buffer (DPB) may be displayed as "unused for reference". Images subsequent to a CRA image in a decoding order and a reproduction order may be reconstructed without having to perform inter prediction that uses images preceding an IDR image in a decoding order and a reproduction order. An image preceding a CRA image in a decoding order also precedes the CRA image in a reproduction order.

An image following a CRA image in a decoding order and a reproduction order may be a normal picture. Thus, a normal picture may use at least one image from among other normal pictures in the same GOP as the CRA image.

A CRA picture may be the first image of an encoded video sequence according to a decoding order. However, the CRA picture may be positioned in the middle of a bitstream according to general reproduction in which a random access does not occur.

For example, in FIG. 6A, B-type images of a GOP 615 precedes a CRA image in a reproduction order but follows a CRA image in a decoding order. B-type images of a GOP 625 are normal pictures following the CRA image in a decoding order and a reproduction order, and do not reference other images preceding an IDR image in a decoding order. However, some of the B-type images of the GOP 615 may reference other images preceding the CRA image in a decoding order.

At a random access point of FIG. 6B, the B-type images of the GOP 615 are unable to be reconstructed as they reference an image before a random access point. The B-type images of the GOP 615 are RASL images that are skipped during a restoration process. Accordingly, the B-type images of the GOP 625 may be immediately reconstructed and reproduced as random access reproduction starts from the CRA image.

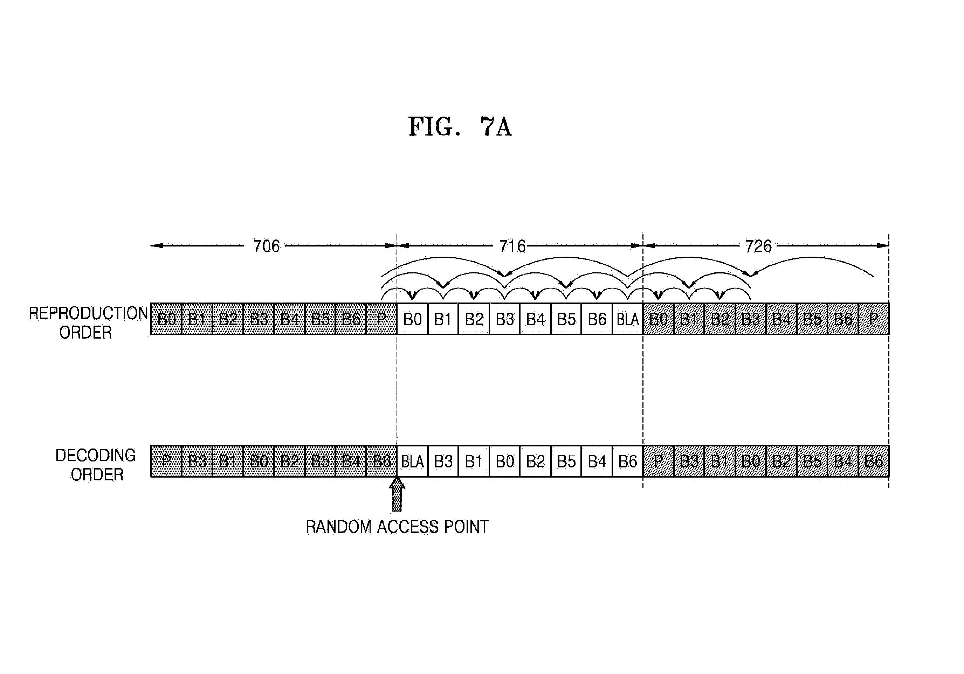

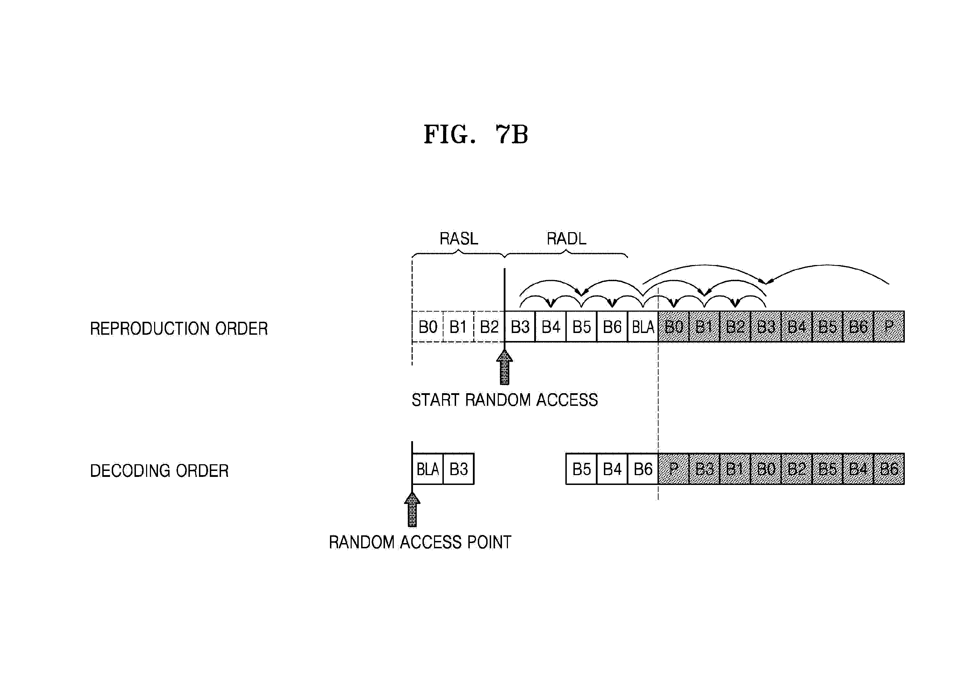

FIGS. 7A and 7B illustrate a reproduction order and a decoding order of a BLA image according to two embodiments of the present invention.

Bitstream slicing is an operation of connecting another bitstream to a location of an RAP image of a current bitstream. A point where the other bitstream is connected is referred to as a 'broken link'. A NAL unit type of the RAP image at the location capable of bitstream slicing is indicated as a BLA image.

For example, referring to FIG. 7A, a BLA image has a reproduction order and a decoding order similar to those of a CRA image. The BLA image follows B-type images of a GOP 716, which are leading pictures, in a reproduction order. The BLA image precedes B-type images of a GOP 726, which are normal pictures, in a reproduction order. The leading pictures and the normal pictures follow the BLA image in a decoding order.

B3 through B6 from among the leading pictures are RASL images that reference the BLA image and other images of the GOP 716. However, B0 through B2 from among the leading pictures are RADL images that reference images of a GOP 706 that precede the BLA image in a decoding order.

Accordingly, when a random access occurs in the BLA image in FIG. 7B, B0 through B2 that are RASL images may be skipped from restoration, and B3 through B6 that are RADL images may be reconstructed. Accordingly, the RADL images may be output from B3 according to a reproduction order.

Since a temporal hierarchical change or layer change occurs in the hierarchical prediction structure described above with reference to FIG. 4B, a TSA image may be used as a location where a layer change is possible. A TSA image is similar to a CRA image. A layer change that reconstructs upper layer images from a TSA image while restoring lower layer images is possible. For example, a layer having a lower value of 'temporal_id' is a lower layer. Images following a TLA image in a decoding order on the same layer or upper layer images of the TLA image are unable to reference images of the same or upper layer of a previous TLA image preceding the TLA image in a decoding order. Since the TLA image is not a lowermost layer image, 'temporal_id' of the TLA image is not 0.

Hereinabove, RAP types for random access are described with reference to FIGS. 4B through 7B. When a random access request is generated or a layer switch occurs while restoring a video stream in a single layer, images may be reconstructed from an RAP image. However, when a random access occurs in a certain layer of a multilayer and images of the certain layer are reconstructed, images of other layers, which correspond to the images of the certain layer, need to be accurately reconstructed. Also, when a layer change occurs or a random access request is generated in a certain layer, but an image to be referenced does not exist in a DPB and thus restoration of an RASL image is skipped, restoration of images of other layers, which correspond to the RASL image, may also be skipped.

Accordingly, the multi-layer video encoding apparatus 10 according to an embodiment may arrange an RPA image of the same NAL unit type at a random access point or a layer change point according to layers, and may also arrange RASL or RSDL images on the same location according to layers. Also, the multi-layer video decoding apparatus 20 may reconstruct the RPA image of the same NAL unit type at the random access point or the layer change point according to layers. Also, the multi-layer video decoding apparatus 20 may reconstruct the RSDL images at the same location according to layers, and reconstruct the RASL images. When a random access occurs in a certain layer, the RPA images and the RSDL images at the same location may be reconstructed according to layers, and restoration of the RASL images at the same location may be skipped.

For example, an enhancement layer IDR image at a location corresponding to a base layer IDR image may be reconstructed. An enhancement layer CRA image at a location corresponding to a base layer CRA image may also be reconstructed. An enhancement layer BLA image at a location corresponding to a base layer BLA image may also be reconstructed.

Alternatively, regardless of a NAL unit type of a base layer image, a VLA image for a random access or a layer change may be used in an enhancement layer. Since only inter-layer prediction is performed on the VLA image and inter prediction is not performed on the VLA image, even when a layer change occurs, an enhancement layer VLA image may be reconstructed as long as a corresponding base layer image is reconstructed. Also, for inter prediction on enhancement layer images after the enhancement layer VLA image, an image preceding the VLA image in a reproduction order or a decoding order may not be referenced.

Also, the multi-layer video encoding apparatus 10 according to an embodiment may arrange a CRA image, an RSDL/RASL image, or a normal picture of an enhancement layer corresponding to a base layer normal picture. The multi-layer video decoding apparatus 20 according to an embodiment may reconstruct the CRA image, the RSDL/RASL image, or the normal picture of the enhancement layer corresponding to the base layer normal picture.

Also, temporal hierarchical numbers of enhancement layer images are higher than temporal hierarchical numbers, i.e., 'temporal_id', of base layer images.

According to the multi-layer video encoding apparatus 10 and the multi-layer video decoding apparatus 20 according to an embodiment, even when a random access or a layer change occurs in a multi-layer prediction structure, images at the same location may be reconstructed or ignored according to layers. Accordingly, a reference image for inter-layer prediction may be obtained, and output images of each layer may be accurately synchronized.

The multi-layer video encoding apparatus 10 of FIG. 1A may generate samples by performing intra prediction, inter prediction, inter-layer prediction, transformation, and quantization according to image blocks, and output a bitstream by performing entropy-encoding on the samples. In order to output a video encoding result, i.e., a base layer image stream and an enhancement layer image stream, the multi-layer video encoding apparatus 10 according to an embodiment may operate in cooperation with an internal video encoding processor installed therein or an external video encoding processor so as to perform video encoding operations including transformation and quantization. The internal video encoding processor of the multi-layer video encoding apparatus 10 according to an embodiment may be a separate processor, or alternatively, a video encoding apparatus, a central processing apparatus, or a graphic processing apparatus may include a video encoding processing module to perform the video encoding operations.

Also, the multi-layer video decoding apparatus 20 of FIG. 2A decodes a received base layer image stream and a received enhancement layer image stream. In other words, inverse quantization, inverse transformation, intra prediction, and motion compensation (inter-motion compensation and inter-layer disparity compensation) are performed according to image blocks with respect to the base layer image stream and the enhancement layer image stream to reconstruct samples of base layer images from the base layer image stream and samples of enhancement layer images from the enhancement layer image stream. In order to output a reconstructed image generated as a decoding result, the multi-layer video decoding apparatus 20 according to an embodiment may operate in cooperation with an internal video decoding processor installed therein or an external video decoding processor so as to perform video restoration operations including inverse quantization, inverse transformation, and prediction/compensation. The internal video decoding processor of the multi-layer video decoding apparatus 20 according to an embodiment may be a separate processor, or alternatively, a video decoding apparatus, a central processing apparatus, or a graphic processing apparatus may include a video decoding processing module to perform the video restoration operations.

As described above, the multi-layer video encoding apparatus 10 and the multi-layer video decoding apparatus 20 according to an embodiment may spilt blocks of video data into coding units having a tree structure, and coding units, prediction units, and transformation units may be used for inter-layer prediction or inter prediction of coding units. Hereinafter, a video encoding method, a video encoding apparatus, a video decoding method, and a video decoding apparatus based on coding units having a tree structure and transformation units will be described with reference to FIGS. 8 through 20.

In principle, during encoding and decoding processes for a multi-layer video, encoding and decoding processes for base layer images and encoding and decoding processes for enhancement layer images are separately performed. In other words, when inter-layer prediction is performed on a multi-layer video, encoding and decoding results of single-layer videos may be mutually referred to, but separate encoding and decoding processes are performed according to single-layer videos.

Accordingly, since video encoding and decoding processes based on coding units having a tree structure as described below with reference to FIGS. 8 through 20 are video encoding and decoding processes for processing a single-layer video, only inter prediction and motion compensation are performed. However, as described above with reference to FIGS. 1A through 7B, in order to encode and decode a multi-layer video, inter-layer prediction and inter-layer compensation are performed on base layer images and enhancement layer images.

Accordingly, in order for the multi-layer video encoding apparatus 10 according to an embodiment to encode a multi-layer video based on coding units having a tree structure, the multi-layer video encoding apparatus 10 according to an embodiment may include as many video encoding apparatuses 100 of FIG. 8 as the number of layers of the multi-layer video so as to perform video encoding according to each single-layer video, thereby controlling each video encoding apparatus 100 to encode an assigned single-layer video. Also, the multi-layer video encoding apparatus 10 may perform inter-view prediction by using an encoding result of individual single viewpoints of each video encoding apparatus 100. Accordingly, the multi-layer video encoding apparatus 10 may generate a base layer image stream and an enhancement layer image stream, which include encoding results according to layers.

Similarly, in order for the multi-layer video decoding apparatus 20 according to an embodiment to decode a multi-layer video based on coding units having a tree structure, the multi-layer video decoding apparatus 10 may include as many video decoding apparatuses 200 of FIG. 9 as the number of layers of the multi-layer video so as to perform video decoding according to layers with respect to a received base layer image stream and a received enhancement layer image stream, thereby controlling each video decoding apparatus 200 to decode an assigned single-layer video. Also, the multi-layer video decoding apparatus 200 may perform inter-layer compensation by using a decoding result of individual single layer of each video decoding apparatus 200. Accordingly, the multi-layer video decoding apparatus 20 may generate base layer images and enhancement layer images, which are reconstructed according to layers.

FIG. 8 is a block diagram of the video encoding apparatus 100 based on coding units according to a tree structure, according to an embodiment of the present invention.

The video encoding apparatus 100 according to an embodiment involving video prediction based on coding units according to a tree structure includes a coding unit determiner 120 and an output unit 130. Hereinafter, for convenience of description, the video encoding apparatus 10 according to an embodiment involving video prediction based on coding units according to a tree structure will be abbreviated to the 'video encoding apparatus 100'.

The coding unit determiner 120 may split a current picture based on a maximum coding unit that is a coding unit having a maximum size for a current picture of an image. If the current picture is larger than the maximum coding unit, image data of the current picture may be split into the at least one maximum coding unit. The maximum coding unit according to an embodiment may be a data unit having a size of 32x32, 64x64, 128x128, 256x256, etc., wherein a shape of the data unit is a square having a width and length in squares of 2.

A coding unit according to an embodiment may be characterized by a maximum size and a depth. The depth denotes the number of times the coding unit is spatially split from the maximum coding unit, and as the depth deepens, deeper coding units according to depths may be split from the maximum coding unit to a minimum coding unit. A depth of the maximum coding unit is an uppermost depth and a depth of the minimum coding unit is a lowermost depth. Since a size of a coding unit corresponding to each depth decreases as the depth of the maximum coding unit deepens, a coding unit corresponding to an upper depth may include a plurality of coding units corresponding to lower depths.

As described above, the image data of the current picture is split into the maximum coding units according to a maximum size of the coding unit, and each of the maximum coding units may include deeper coding units that are split according to depths. Since the maximum coding unit according to an embodiment is split according to depths, the image data of a spatial domain included in the maximum coding unit may be hierarchically classified according to depths.

A maximum depth and a maximum size of a coding unit, which limit the total number of times a height and a width of the maximum coding unit are hierarchically split, may be predetermined.

The coding unit determiner 120 encodes at least one split region obtained by splitting a region of the maximum coding unit according to depths, and determines a depth to output a finally encoded image data according to the at least one split region. In other words, the coding unit determiner 120 determines a coded depth by encoding the image data in the deeper coding units according to depths, according to the maximum coding unit of the current picture, and selecting a depth having the least encoding error. The determined coded depth and the encoded image data according to the determined coded depth are output to the output unit 130.

The image data in the maximum coding unit is encoded based on the deeper coding units corresponding to at least one depth equal to or below the maximum depth, and results of encoding the image data are compared based on each of the deeper coding units. A depth having the least encoding error may be selected after comparing encoding errors of the deeper coding units. At least one coded depth may be selected for each maximum coding unit.

The size of the maximum coding unit is split as a coding unit is hierarchically split according to depths, and as the number of coding units increases. Also, even if coding units correspond to the same depth in one maximum coding unit, it is determined whether to split each of the coding units corresponding to the same depth to a lower depth by measuring an encoding error of the image data of the each coding unit, separately. Accordingly, even when image data is included in one maximum coding unit, the encoding errors may differ according to regions in the one maximum coding unit, and thus the coded depths may differ according to regions in the image data. Thus, one or more coded depths may be determined in one maximum coding unit, and the image data of the maximum coding unit may be divided according to coding units of at least one coded depth.

Accordingly, the coding unit determiner 120 according to an embodiment may determine coding units having a tree structure included in the maximum coding unit. The 'coding units having a tree structure' according to an embodiment include coding units corresponding to a depth determined to be the coded depth, from among all deeper coding units included in the maximum coding unit. A coding unit of a coded depth may be hierarchically determined according to depths in the same region of the maximum coding unit, and may be independently determined in different regions. Similarly, a coded depth in a current region may be independently determined from a coded depth in another region.

A maximum depth according to an embodiment is an index related to the number of splitting times from a maximum coding unit to a minimum coding unit. A first maximum depth according to an embodiment may denote the total number of splitting times from the maximum coding unit to the minimum coding unit. A second maximum depth according to an embodiment may denote the total number of depth levels from the maximum coding unit to the minimum coding unit. For example, when a depth of the maximum coding unit is 0, a depth of a coding unit, in which the maximum coding unit is split once, may be set to 1, and a depth of a coding unit, in which the maximum coding unit is split twice, may be set to 2. Here, if the minimum coding unit is a coding unit in which the maximum coding unit is split four times, depth levels of depths 0, 1, 2, 3, and 4 exist, and thus the first maximum depth may be set to 4, and the second maximum depth may be set to 5.

Prediction encoding and transformation may be performed according to the maximum coding unit. The prediction encoding and the transformation are also performed based on the deeper coding units according to a depth equal to or depths less than the maximum depth, according to the maximum coding unit.

Since the number of deeper coding units increases whenever the maximum coding unit is split according to depths, encoding, including the prediction encoding and the transformation, is performed on all of the deeper coding units generated as the depth deepens. For convenience of description, the prediction encoding and the transformation will now be described based on a coding unit of a current depth, in a maximum coding unit.

The video encoding apparatus 100 according to an embodiment may variously select a size or shape of a data unit for encoding the image data. In order to encode the image data, operations, such as prediction encoding, transformation, and entropy encoding, are performed, and at this time, the same data unit may be used for all operations or different data units may be used for each operation.

For example, the video encoding apparatus 100 may select not only a coding unit for encoding the image data, but also a data unit different from the coding unit so as to perform the prediction encoding on the image data in the coding unit.

In order to perform prediction encoding in the maximum coding unit, the prediction encoding may be performed based on a coding unit corresponding to a coded depth according to an embodiment, i.e., based on a coding unit that is no longer split to coding units corresponding to a lower depth. Hereinafter, the coding unit that is no longer split and becomes a basis unit for prediction encoding will now be referred to as a 'prediction unit'. A partition obtained by splitting the prediction unit may include a prediction unit or a data unit obtained by splitting at least one of a height and a width of the prediction unit. A partition is a data unit where a prediction unit of a coding unit is split, and a prediction unit may be a partition having the same size as a coding unit.

For example, when a coding unit of 2Nx2N (where N is a positive integer) is no longer split and becomes a prediction unit of 2Nx2N, and a size of a partition may be 2Nx2N, 2NxN, Nx2N, or NxN. Examples of a partition type according to an embodiment include symmetrical partitions that are obtained by symmetrically splitting a height or width of the prediction unit, partitions obtained by asymmetrically splitting the height or width of the prediction unit, such as 1 :n or n:1, partitions that are obtained by geometrically splitting the prediction unit, and partitions having arbitrary shapes.

A prediction mode of the prediction unit may be at least one of an intra mode, a inter mode, and a skip mode. For example, the intra mode or the inter mode may be performed on the partition of 2Nx2N, 2NxN, Nx2N, or NxN. Also, the skip mode may be performed only on the partition of 2Nx2N. The encoding is independently performed on one prediction unit in a coding unit, thereby selecting a prediction mode having a least encoding error.

The video encoding apparatus 100 according to an embodiment may also perform the transformation on the image data in a coding unit based not only on the coding unit for encoding the image data, but also based on a data unit that is different from the coding unit. In order to perform the transformation in the coding unit, the transformation may be performed based on a transformation unit having a size smaller than or equal to the coding unit. For example, the transformation unit may include a data unit for an intra mode and a transformation unit for an inter mode.

The transformation unit in the coding unit may be recursively split into smaller sized regions in a manner similar to that in which the coding unit is split according to the tree structure, according to an embodiment. Thus, residual data in the coding unit may be split according to the transformation unit having the tree structure according to transformation depths.

A transformation depth indicating the number of splitting times to reach the transformation unit by splitting the height and width of the coding unit may also be set in the transformation unit according to an embodiment. For example, in a current coding unit of 2Nx2N, a transformation depth may be 0 when the size of a transformation unit is 2Nx2N, may be 1 when the size of the transformation unit is NxN, and may be 2 when the size of the transformation unit is N/2xN/2. In other words, the transformation unit having the tree structure may be set according to the transformation depths.

Encoding information according to coding units corresponding to a coded depth requires not only information about the coded depth, but also about information related to prediction encoding and transformation. Accordingly, the coding unit determiner 120 not only determines a coded depth having a least encoding error, but also determines a partition type in a prediction unit, a prediction mode according to prediction units, and a size of a transformation unit for transformation.

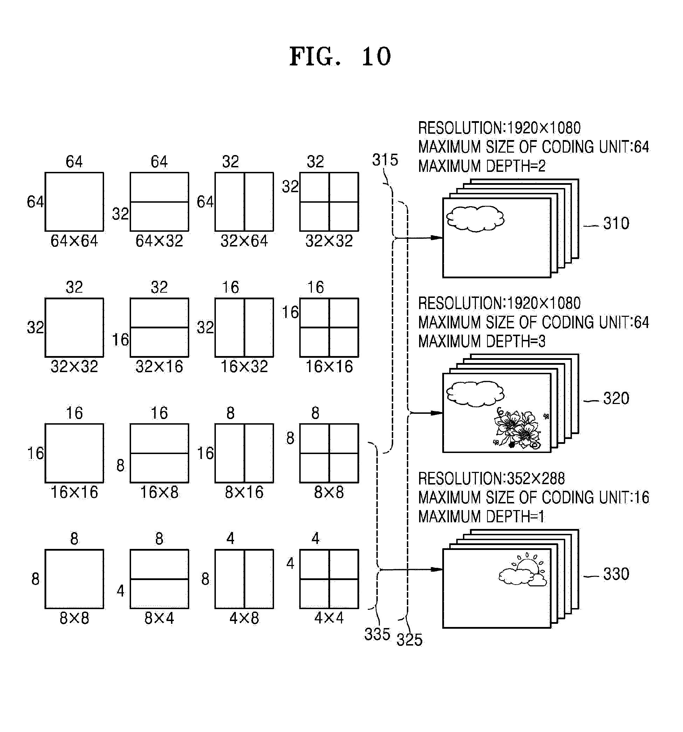

Coding units according to a tree structure in a maximum coding unit and methods of determining a prediction unit/partition, and a transformation unit, according to embodiments, will be described in detail later with reference to FIGS. 10 through 20.

The coding unit determiner 120 may measure an encoding error of deeper coding units according to depths by using Rate-Distortion Optimization based on Lagrangian multipliers.

The output unit 130 outputs the image data of the maximum coding unit, which is encoded based on the at least one coded depth determined by the coding unit determiner 120, and information about the encoding mode according to the coded depth, in bitstreams.

The encoded image data may be obtained by encoding residual data of an image.

The information about the encoding mode according to coded depth may include information about the coded depth, about the partition type in the prediction unit, the prediction mode, and the size of the transformation unit.

The information about the coded depth may be defined by using split information according to depths, which indicates whether encoding is performed on coding units of a lower depth instead of a current depth. If the current depth of the current coding unit is the coded depth, the current coding unit is encoded, and thus the split information may be defined not to split the current coding unit to a lower depth. Alternatively, if the current depth of the current coding unit is not the coded depth, the encoding is performed on the coding unit of the lower depth, and thus the split information may be defined to split the current coding unit to obtain the coding units of the lower depth.

If the current depth is not the coded depth, encoding is performed on the coding unit that is split into the coding unit of the lower depth. Since at least one coding unit of the lower depth exists in one coding unit of the current depth, the encoding is repeatedly performed on each coding unit of the lower depth, and thus the encoding may be recursively performed for the coding units having the same depth.

Since the coding units having a tree structure are determined for one maximum coding unit, and information about at least one encoding mode is determined for a coding unit of a coded depth, information about at least one encoding mode may be determined for one maximum coding unit. Also, a coded depth of the image data of the maximum coding unit may be different according to locations since the image data is hierarchically split according to depths, and thus information about the coded depth and the encoding mode may be set for the image data.

Accordingly, the output unit 130 according to an embodiment may assign encoding information about a corresponding coded depth and an encoding mode to at least one of the coding unit, the prediction unit, and a minimum unit included in the maximum coding unit.

The minimum unit according to an embodiment is a square data unit obtained by splitting the minimum coding unit constituting the lowermost depth by 4. Alternatively, the minimum unit according to an embodiment may be a maximum square data unit that may be included in all of the coding units, prediction units, partition units, and transformation units included in the maximum coding unit.

For example, the encoding information output by the output unit 130 may be classified into encoding information according to deeper coding units, and encoding information according to prediction units. The encoding information according to the deeper coding units may include the information about the prediction mode and about the size of the partitions. The encoding information according to the prediction units may include information about an estimated direction of an inter mode, about a reference image index of the inter mode, about a motion vector, about a chroma component of an intra mode, and about an interpolation method of the intra mode.

Information about a maximum size of the coding unit defined according to pictures, slices, or GOPs, and information about a maximum depth may be inserted into a header of a bitstream, a sequence parameter set, or a picture parameter set.

Information about a maximum size of the transformation unit permitted with respect to a current video, and information about a minimum size of the transformation unit may also be output through a header of a bitstream, a sequence parameter set, or a picture parameter set. The output unit 130 may encode and output reference information related to prediction, prediction information, and slice type information.

In the video encoding apparatus 100 according to the simplest embodiment, the deeper coding unit may be a coding unit obtained by dividing a height or width of a coding unit of an upper depth, which is one layer above, by two. In other words, when the size of the coding unit of the current depth is 2Nx2N, the size of the coding unit of the lower depth is NxN. Also, the coding unit with the current depth having a size of 2Nx2N may include a maximum of 4 of the coding units with the lower depth.

Accordingly, the video encoding apparatus 100 may form the coding units having the tree structure by determining coding units having an optimum shape and an optimum size for each maximum coding unit, based on the size of the maximum coding unit and the maximum depth determined considering characteristics of the current picture. Also, since encoding may be performed on each maximum coding unit by using any one of various prediction modes and transformations, an optimum encoding mode may be determined considering characteristics of the coding unit of various image sizes.

Thus, if an image having a high resolution or a large data amount is encoded in a conventional macroblock, the number of macroblocks per picture excessively increases. Accordingly, the number of pieces of compressed information generated for each macroblock increases, and thus it is difficult to transmit the compressed information and data compression efficiency decreases. However, by using the video encoding apparatus 100 according to an embodiment, image compression efficiency may be increased since a coding unit is adjusted while considering characteristics of an image while increasing a maximum size of a coding unit while considering a size of the image.

The multi-layer video encoding apparatus 10 described above with reference to FIG. 1A may include as many video encoding apparatuses 100 as the number of layers, in order to encode single-layer images according to layers of a multi-layer video. For example, the base layer encoder 12 may include one video encoding apparatus 100 and the enhancement layer encoder 14 may include as many video encoding apparatuses 100 as the number of layers.

When the video encoding apparatus 100 encodes base layer images, the coding unit determiner 120 may determine, for each maximum coding unit, a prediction unit for inter-prediction according to coding units having a tree structure, and perform inter-prediction according to prediction units.

Even when the video encoding apparatus 100 encodes enhancement layer images, the coding unit determiner 120 may determine, for each maximum coding unit, coding units and prediction units having a tree structure, and perform inter-prediction according to prediction units.

When the coding unit determiner 120 encodes base layer images, RPA images capable of random access may be assigned and intra prediction may be performed on base layer RPA images. When a random access or a layer change occurs, an RPA image may be reconstructed even if a pre-reconstructed image does not exist.

When the coding unit determiner 120 encodes an enhancement layer stream, an RPA image of the same RPA type as a base layer RAP image at a location corresponding to an RPA image of a base layer stream may be encoded. The coding unit determiner 120 may perform intra prediction on enhancement layer RPA images.

The coding unit determiner 120 may perform inter prediction on a non-RPA image by referencing at least one of an RPA image and another non-RPA image. Enhancement layer images at locations corresponding to base layer RASL images are also RASL images, and may reference a following RPA image and a preceding RPA image. Enhancement layer images at locations corresponding to RADL images of the base layer stream are also RADL images, and may reference only a following RPA image. An enhancement layer image corresponding to a base layer normal picture may be encoded as a CRA image, an RADL/RASL image, or a normal picture.

FIG. 9 is a block diagram of the video decoding apparatus 200 based on coding units according to a tree structure, according to an embodiment of the present invention.

The video decoding apparatus 200 according to an embodiment that involves video prediction based on coding units having a tree structure includes a receiver 210, an image data and encoding information extractor 220, and an image data decoder 230. For convenience of description, the video decoding apparatus 200 according to an embodiment that involves video prediction based on coding units having a tree structure will be abbreviated to the 'video decoding apparatus 200'.

Definitions of various terms, such as a coding unit, a depth, a prediction unit, a transformation unit, and information about various encoding modes, for decoding operations of the video decoding apparatus 200 according to an embodiment are identical to those described with reference to FIG. 8 and the video encoding apparatus 100.

The receiver 210 receives and parses a bitstream of an encoded video. The image data and encoding information extractor 220 extracts encoded image data for each coding unit from the parsed bitstream, wherein the coding units have a tree structure according to each maximum coding unit, and outputs the extracted image data to the image data decoder 230. The image data and encoding information extractor 220 may extract information about a maximum size of a coding unit of a current picture, from a header about the current picture, a sequence parameter set, or a picture parameter set.

Also, the image data and encoding information extractor 220 extracts information about a coded depth and an encoding mode for the coding units having a tree structure according to each maximum coding unit, from the parsed bitstream. The extracted information about the coded depth and the encoding mode is output to the image data decoder 230. In other words, the image data in a bit stream is split into the maximum coding unit so that the image data decoder 230 decodes the image data for each maximum coding unit.

The information about the coded depth and the encoding mode according to the maximum coding unit may be set for information about at least one coding unit corresponding to the coded depth, and information about an encoding mode may include information about a partition type of a corresponding coding unit corresponding to the coded depth, about a prediction mode, and a size of a transformation unit. Also, splitting information according to depths may be extracted as the information about the coded depth.

The information about the coded depth and the encoding mode according to each maximum coding unit extracted by the image data and encoding information extractor 220 is information about a coded depth and an encoding mode determined to generate a minimum encoding error when an encoder, such as the video encoding apparatus 100 according to an embodiment, repeatedly performs encoding for each deeper coding unit according to depths according to each maximum coding unit. Accordingly, the video decoding apparatus 200 may reconstruct an image by decoding the image data according to a coded depth and an encoding mode that generates the minimum encoding error.

Since encoding information according to an embodiment about the coded depth and the encoding mode may be assigned to a predetermined data unit from among a corresponding coding unit, a prediction unit, and a minimum unit, the image data and encoding information extractor 220 may extract the information about the coded depth and the encoding mode according to the predetermined data units. If information about a coded depth and encoding mode of a corresponding maximum coding unit is recorded according to predetermined data units, the predetermined data units to which the same information about the coded depth and the encoding mode is assigned may be inferred to be the data units included in the same maximum coding unit.

The image data decoder 230 may reconstruct the current picture by decoding the image data in each maximum coding unit based on the information about the coded depth and the encoding mode according to the maximum coding units. In other words, the image data decoder 230 may decode the encoded image data based on the extracted information about the partition type, the prediction mode, and the transformation unit for each coding unit from among the coding units having the tree structure included in each maximum coding unit. A decoding process may include a prediction including intra prediction and motion compensation, and an inverse transformation.

The image data decoder 230 may perform intra prediction or motion compensation according to a partition and a prediction mode of each coding unit, based on the information about the partition type and the prediction mode of the prediction unit of the coding unit according to coded depths.

In addition, the image data decoder 230 may read information about a transformation unit according to a tree structure for each coding unit so as to perform inverse transformation based on transformation units for each coding unit, for inverse transformation for each maximum coding unit. Via the inverse transformation, a pixel value of a spatial region of the coding unit may be reconstructed.

The image data decoder 230 may determine a coded depth of a current maximum coding unit by using split information according to depths. If the split information indicates that image data is no longer split in the current depth, the current depth is a coded depth. Accordingly, the image data decoder 230 may decode encoded data in the current maximum coding unit by using the information about the partition type of the prediction unit, the prediction mode, and the size of the transformation unit for each coding unit corresponding to the coded depth.

In other words, data units containing the encoding information including the same split information may be gathered by observing the encoding information set assigned for the predetermined data unit from among the coding unit, the prediction unit, and the minimum unit, and the gathered data units may be considered to be one data unit to be decoded by the image data decoder 230 in the same encoding mode. As such, the current coding unit may be decoded by obtaining the information about the encoding mode for each coding unit.

The multi-layer video encoding apparatus 10 described above with reference to FIG. 1A may include as many image data decoders 230 as the number of layers, so as to generate a reference image for inter prediction according to layers of a multi-layer video. For example, the base layer encoder 12 may include one image data decoder 230, and the enhancement layer encoder 14 may include as many the image data decoders 230 as the number of enhancement layers.

Also, the multi-layer video decoding apparatus 20 described above with reference to FIGS. 2A and 3A may include the number of video decoding apparatuses 200 as much as the number of layers, so as to reconstruct base layer images and enhancement layer images by decoding a received base layer image stream and a received enhancement layer image stream. For example, the base layer image decoder 22 may include one video decoding apparatus 200 and the enhancement layer decoder 24 may include the number of video decoding apparatuses 200 as much as the number of enhancement layers.

When the base layer image stream is received, the image data decoder 230 of the video decoding apparatus 200 may split samples of base layer images extracted from the base layer image stream by the image data and encoding information extractor 220 into coding units having a tree structure. The image data decoder 230 may reconstruct the base layer images by performing motion compensation according to prediction units for inter prediction, on the coding units having the tree structure obtained by splitting the samples of the base layer images.

When the enhancement layer image stream is received, the image data decoder 230 of the video decoding apparatus 200 may split samples of enhancement layer images extracted from the enhancement layer image stream by the image data and encoding information extractor 220 into coding units having a tree structure. The image data decoder 230 may reconstruct the enhancement layer images by performing motion compensation according to prediction units for inter prediction, on the coding units obtained by splitting the samples of the enhancement layer images.

When the image data decoder 230 decodes a base layer stream, RPA images may be reconstructed based on an NAL unit type. When random access or layer change occurs, an RPA image may be reconstructed even when a pre-reconstructed image does not exist.

When the image data decoder 230 decodes an enhancement layer stream, an RPA image of the same RPA type as a base layer RAP image at a location corresponding to an RPA image of a base layer stream may be reconstructed. The image data decoder 230 may perform intra prediction on enhancement layer RPA images.

The image data decoder 230 may perform motion compensation on a non-RPA image by referencing at least one of an RPA image and another non-RPA image. Enhancement layer images at locations corresponding to base layer RASL images are also RASL images, and may reference a following RPA image and a preceding RPA image. Enhancement layer images at locations corresponding to RADL images of a base layer stream are also RADL images, and may reference only a following RPA image. An enhancement layer image corresponding to a base layer normal picture may be reconstructed as a CRA image, an RADL/RASL image, or a normal picture.

Thus, the video decoding apparatus 200 may obtain information about at least one coding unit that generates the minimum encoding error when encoding is recursively performed for each maximum coding unit, and may use the information to decode the current picture. In other words, the coding units having the tree structure determined to be the optimum coding units in each maximum coding unit may be decoded.

Accordingly, even if image data has high resolution and a large amount of data, the image data may be efficiently decoded and reconstructed by using a size of a coding unit and an encoding mode, which are adaptively determined according to characteristics of the image data, by using information about an optimum encoding mode received from an encoder.

FIG. 10 is a diagram for describing a concept of coding units according to an embodiment of the present invention.

A size of a coding unit may be expressed by width x height, and may be 64x64, 32x32, 16x16, and 8x8. A coding unit of 64x64 may be split into partitions of 64x64, 64x32, 32x64, or 32x32, and a coding unit of 32x32 may be split into partitions of 32x32, 32x16, 16x32, or 16x16, a coding unit of 16x16 may be split into partitions of 16x16, 16x8, 8x16, or 8x8, and a coding unit of 8x8 may be split into partitions of 8x8, 8x4, 4x8, or 4x4.

In video data 310, a resolution is 1920x1080, a maximum size of a coding unit is 64, and a maximum depth is 2. In video data 320, a resolution is 1920x1080, a maximum size of a coding unit is 64, and a maximum depth is 3. In video data 330, a resolution is 352x288, a maximum size of a coding unit is 16, and a maximum depth is 1. The maximum depth shown in FIG. 10 denotes a total number of splits from a maximum coding unit to a minimum decoding unit.

If a resolution is high or a data amount is large, a maximum size of a coding unit may be large so as to not only increase encoding efficiency but also to accurately reflect characteristics of an image. Accordingly, the maximum size of the coding unit of the video data 310 and 320 having a higher resolution than the video data 330 may be 64.

Since the maximum depth of the video data 310 is 2, coding units 315 of the vide data 310 may include a maximum coding unit having a long axis size of 64, and coding units having long axis sizes of 32 and 16 since depths are deepened to two layers by splitting the maximum coding unit twice. Since the maximum depth of the video data 330 is 1, coding units 335 of the video data 330 may include a maximum coding unit having a long axis size of 16, and coding units having a long axis size of 8 since depths are deepened to one layer by splitting the maximum coding unit once.

Since the maximum depth of the video data 320 is 3, coding units 325 of the video data 320 may include a maximum coding unit having a long axis size of 64, and coding units having long axis sizes of 32, 16, and 8 since the depths are deepened to 3 layers by splitting the maximum coding unit three times. As a depth deepens, detailed information may be precisely expressed.

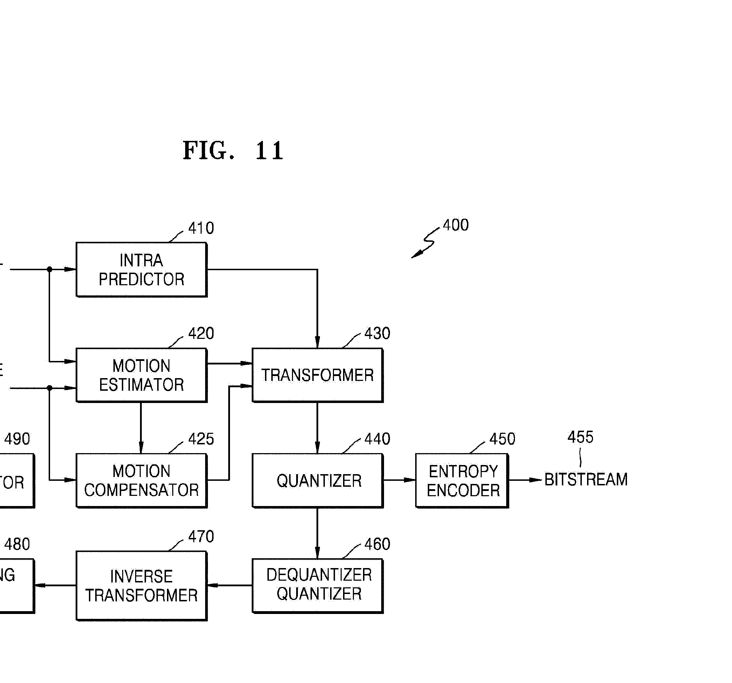

FIG. 11 is a block diagram of an image encoder 400 based on coding units, according to an embodiment of the present invention.

The image encoder 400 performs operations of the coding unit determiner 120 of the video encoding apparatus 100 to encode image data. In other words, an intra predictor 410 performs intra prediction on coding units in an intra mode, from among a current frame 405, and a motion estimator 420 and a motion compensator 425 respectively perform inter estimation and motion compensation on coding units in an inter mode from among the current frame 405 by using the current frame 405, and a reference frame 495.

Data output from the intra predictor 410, the motion estimator 420, and the motion compensator 425 is output as a quantized transformation coefficient through a transformer 430 and a quantizer 440. The quantized transformation coefficient is reconstructed as data in a spatial domain through an inverse quantizer 460 and an inverse transformer 470, and the reconstructed data in the spatial domain is output as the reference frame 495 after being post-processed through a deblocking unit 480 and an offset adjusting unit 490. The quantized transformation coefficient may be output as a bitstream 455 through an entropy encoder 450.

In order for the image encoder 400 to be applied in the video encoding apparatus 100 according to an embodiment, all elements of the image encoder 400, i.e., the intra predictor 410, the motion estimator 420, the motion compensator 425, the transformer 430, the quantizer 440, the entropy encoder 450, the inverse quantizer 460, the inverse transformer 470, the deblocking unit 480, and the offset adjusting unit 490 perform operations based on each coding unit among coding units having a tree structure while considering the maximum depth of each maximum coding unit.

Specifically, the intra predictor 410, the motion estimator 420, and the motion compensator 425 determines partitions and a prediction mode of each coding unit from among the coding units having a tree structure while considering the maximum size and the maximum depth of a current maximum coding unit, and the transformer 430 determines the size of the transformation unit in each coding unit from among the coding units having a tree structure.

When the image encoder 400 generates an enhancement layer stream, enhancement layer images at locations corresponding to RPA images of a base layer stream may be assigned as RPA images of the same type. The intra predictor 410 may perform intra prediction on RPA images.

The motion estimator 420 may perform inter prediction on a non-RPA image by referencing at least one of an RPA image and another non-RPA image. The motion compensator 425 may perform motion compensation on a non-RPA image by referencing at least one of an RPA image and another non-RPA image. Enhancement layer images at locations corresponding to base layer RASL images are also RASL images, and may reference a following RPA image and a preceding RPA image. Enhancement layer images at locations corresponding to RADL images of the base layer stream are also RADL images, and may reference only a following RPA image. An enhancement layer image corresponding to a base layer normal picture may be encoded or decoded as a CRA image, an RADL/RASL image, or a normal picture.

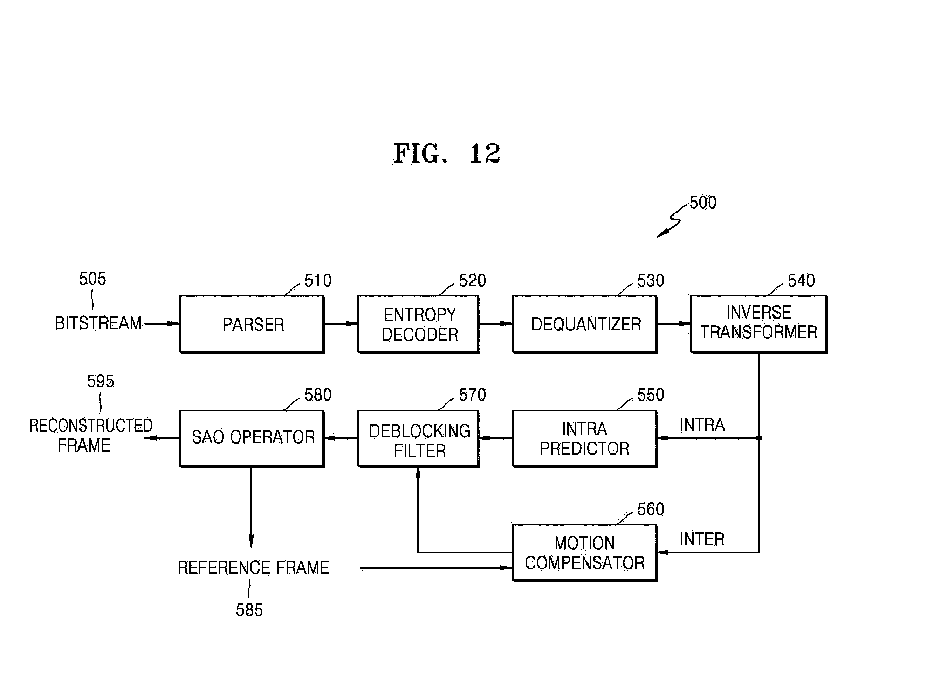

FIG. 12 is a block diagram of an image decoder 500 based on coding units, according to an embodiment of the present invention.

A parser 510 parses encoded image data to be decoded and information about encoding required for decoding from a bitstream 505. The encoded image data is output as inverse quantized data through an entropy decoder 520 and an inverse quantizer 530, and the inverse quantized data is reconstructed to image data in a spatial domain through an inverse transformer 540.

An intra predictor 550 performs intra prediction on coding units in an intra mode with respect to the image data in the spatial domain, and a motion compensator 560 performs motion compensation on coding units in an inter mode by using a reference frame 585.

The image data in the spatial domain, which passed through the intra predictor 550 and the motion compensator 560, may be output as a reconstructed frame 595 after being post-processed through a deblocking unit 570 and an offset adjustor 580. Also, the image data that is post-processed through the deblocking unit 570 and the offset adjustor 580 may be output as the reference frame 585.

In order to decode the image data in the image data decoder 230 of the video decoding apparatus 200, the image decoder 500 according to an embodiment may perform operations that are performed after the parser 510.

In order for the image decoder 500 to be applied in the video decoding apparatus 200 according to an embodiment, all elements of the image decoder 500, i.e., the parser 510, the entropy decoder 520, the inverse quantizer 530, the inverse transformer 540, the intra predictor 550, the motion compensator 560, the deblocking unit 570, and the offset adjustor 580 perform operations based on coding units having a tree structure for each maximum coding unit.

Specifically, the intra prediction 550 and the motion compensator 560 perform operations based on partitions and a prediction mode for each of the coding units having a tree structure, and the inverse transformer 540 perform operations based on a size of a transformation unit for each coding unit.

When the image decoder 500 decodes an enhancement layer stream, an RPA image of the same RPA type as a base layer RAP image at a location corresponding to an RPA image of a base layer stream may be reconstructed. The intra predictor 550 may perform intra prediction on enhancement layer RPA images.

A motion compensator 560 may perform motion compensation on a non-RPA image by referencing at least one of an RPA image and another non-RPA image. Enhancement layer images at locations corresponding to base layer RASL images are also RASL images, and may reference a following RPA image and a preceding RPA image. Enhancement layer images at locations corresponding to RADL images of the base layer stream are also RADL images, and may reference only a following RPA image. An enhancement layer image corresponding to a base layer normal picture may be reconstructed as a CRA image, an RADL/RASL image, or a normal picture.

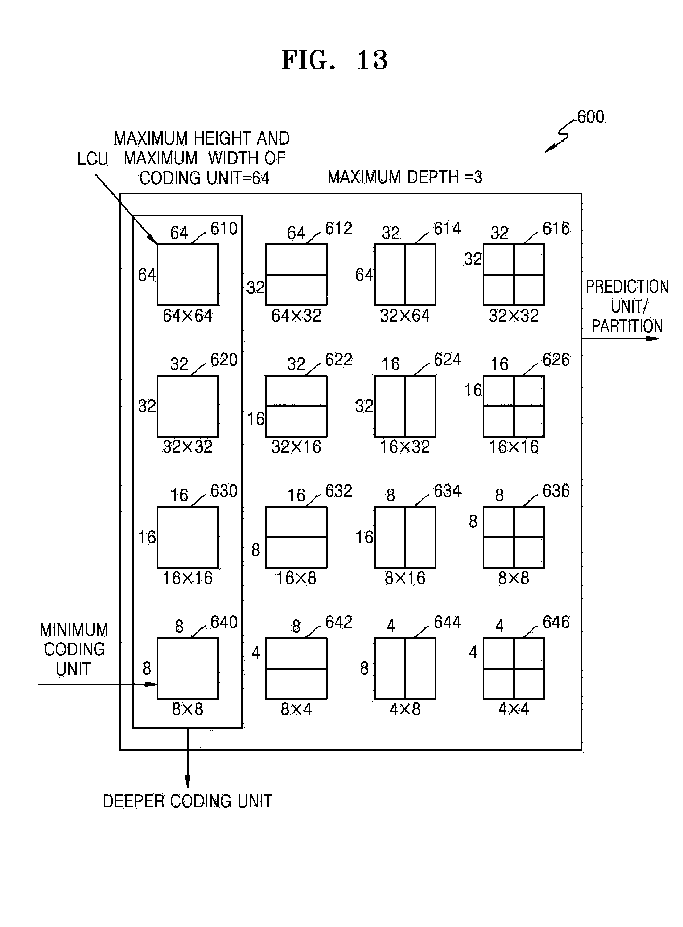

FIG. 13 is a diagram illustrating deeper coding units according to depths, and partitions, according to an embodiment of the present invention.

The video encoding apparatus 100 according to an embodiment and the video decoding apparatus 200 according to an embodiment use hierarchical coding units so as to consider characteristics of an image. A maximum height, a maximum width, and a maximum depth of coding units may be adaptively determined according to the characteristics of the image, or may be differently set by a user. Sizes of deeper coding units according to depths may be determined according to the predetermined maximum size of the coding unit.

In a hierarchical structure 600 of coding units according to an embodiment, the maximum height and the maximum width of the coding units are each 64, and the maximum depth is 3. In this case, the maximum depth refers to a total number of times the coding unit is split from the maximum coding unit to the minimum coding unit. Since a depth deepens along a vertical axis of the hierarchical structure 600 of coding units according to an embodiment, a height and a width of the deeper coding unit are each split. Also, a prediction unit and partitions, which are bases for prediction encoding of each deeper coding unit, are shown along a horizontal axis of the hierarchical structure 600.

In other words, a coding unit 610 is a maximum coding unit in the hierarchical structure 600, wherein a depth is 0 and a size, i.e., a height by width, is 64x64. The depth deepens along the vertical axis, and a coding unit 620 having a size of 32x32 and a depth of 1, a coding unit 630 having a size of 16x16 and a depth of 2, and a coding unit 640 having a size of 8x8 and a depth of 3. The coding unit 640 having a size of 8x8 and a depth of 3 is a minimum coding unit.

The prediction unit and the partitions of a coding unit are arranged along the horizontal axis according to each depth. In other words, if the coding unit 610 having a size of 64x64 and a depth of 0 is a prediction unit, the prediction unit may be split into partitions include in the encoding unit 610, i.e. a partition 610 having a size of 64x64, partitions 612 having the size of 64x32, partitions 614 having the size of 32x64, or partitions 616 having the size of 32x32.

Similarly, a prediction unit of the coding unit 620 having the size of 32x32 and the depth of 1 may be split into partitions included in the coding unit 620, i.e. a partition 620 having a size of 32x32, partitions 622 having a size of 32x16, partitions 624 having a size of 16x32, and partitions 626 having a size of 16x16.

Similarly, a prediction unit of the coding unit 630 having the size of 16x16 and the depth of 2 may be split into partitions included in the coding unit 630, i.e. a partition having a size of 16x16 included in the coding unit 630, partitions 632 having a size of 16x8, partitions 634 having a size of 8x16, and partitions 636 having a size of 8x8.

Similarly, a prediction unit of the coding unit 640 having the size of 8x8 and the depth of 3 may be split into partitions included in the coding unit 640, i.e. a partition having a size of 8x8 included in the coding unit 640, partitions 642 having a size of 8x4, partitions 644 having a size of 4x8, and partitions 646 having a size of 4x4.

In order to determine the at least one coded depth of the coding units constituting the maximum coding unit 610, the coding unit determiner 120 of the video encoding apparatus 100 according to an embodiment performs encoding for coding units corresponding to each depth included in the maximum coding unit 610.

A number of deeper coding units according to depths including data in the same range and the same size increases as the depth deepens. For example, four coding units corresponding to a depth of 2 are required to cover data that is included in one coding unit corresponding to a depth of 1. Accordingly, in order to compare encoding results of the same data according to depths, the coding unit corresponding to the depth of 1 and four coding units corresponding to the depth of 2 are each encoded.

In order to perform encoding for a current depth from among the depths, a least encoding error may be selected for the current depth by performing encoding for each prediction unit in the coding units corresponding to the current depth, along the horizontal axis of the hierarchical structure 600. Alternatively, the minimum encoding error may be searched for by comparing the least encoding errors according to depths, by performing encoding for each depth as the depth deepens along the vertical axis of the hierarchical structure 600. A depth and a partition having the minimum encoding error in the coding unit 610 may be selected as the coded depth and a partition type of the coding unit 610.

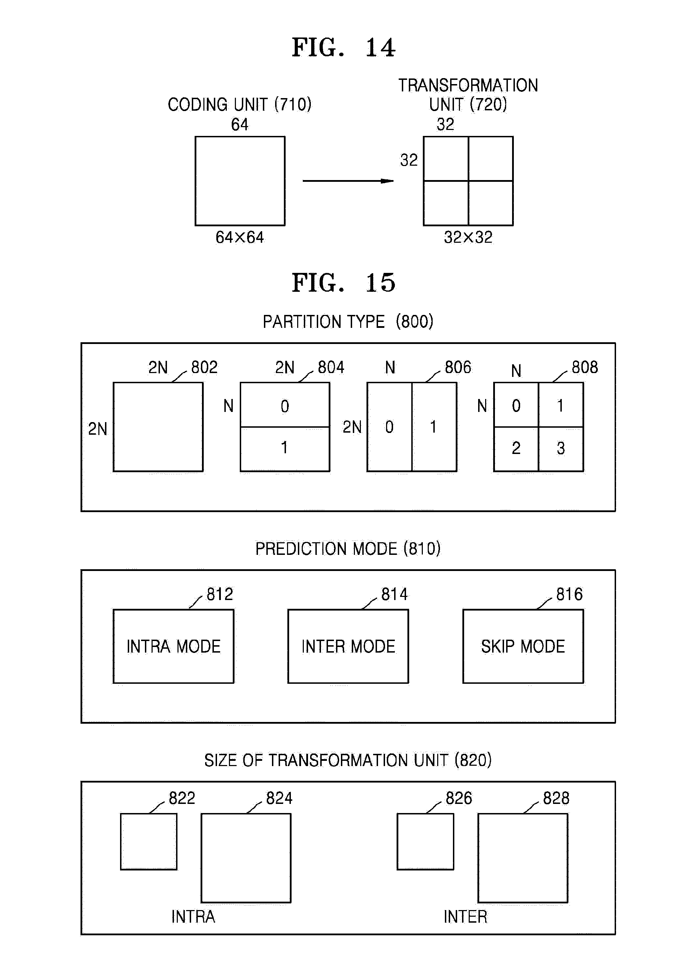

FIG. 14 is a diagram for describing a relationship between a coding unit 710 and transformation units 720, according to an embodiment of the present invention.

The video encoding apparatus 100 according to an embodiment or the video decoding apparatus 200 according to an embodiment encodes or decodes an image according to coding units having sizes smaller than or equal to a maximum coding unit for each maximum coding unit. Sizes of transformation units for transformation during encoding may be selected based on data units that are not larger than a corresponding coding unit.

For example, in the video encoding apparatus 100 according to an embodiment or the video decoding apparatus 200 according to an embodiment, if a size of the coding unit 710 is 64x64, transformation may be performed by using the transformation units 720 having a size of 32x32.

Also, data of the coding unit 710 having the size of 64x64 may be encoded by performing the transformation on each of the transformation units having the size of 32x32, 16x16, 8x8, and 4x4, which are smaller than 64x64, and then a transformation unit having the least coding error may be selected.

FIG. 15 is a diagram fro describing encoding information of coding units corresponding to a coded depth, according to an embodiment of the present invention.

The output unit 130 of the video encoding apparatus 100 according to an embodiment may encode and transmit information 800 about a partition type, information 810 about a prediction mode, and information 820 about a size of a transformation unit for each coding unit corresponding to a coded depth, as information about an encoding mode.

The information 800 indicates information about a shape of a partition obtained by splitting a prediction unit of a current coding unit, wherein the partition is a data unit for prediction encoding the current coding unit. For example, a current coding unit CU_0 having a size of 2Nx2N may be split into any one of a partition 802 having a size of 2Nx2N, a partition 804 having a size of 2NxN, a partition 806 having a size of Nx2N, and a partition 808 having a size of NxN. Here, the information 800 about a partition type is set to indicate one of the partition 804 having a size of 2NxN, the partition 806 having a size of Nx2N, and the partition 808 having a size of NxN.

The information 810 indicates a prediction mode of each partition. For example, the information 810 may indicate a mode of prediction encoding performed on a partition indicated by the information 800, i.e., an intra mode 812, an inter mode 814, or a skip mode 816.

The information 820 indicates a transformation unit to be based on when transformation is performed on a current coding unit. For example, the transformation unit may be a first intra transformation unit 822, a second intra transformation unit 824, a first inter transformation unit 826, or a second inter transformation unit 828.

The image data and encoding information extractor 220 of the video decoding apparatus 200 according to an embodiment may extract and use the information 800, 810, and 820 for decoding, according to each deeper coding unit.

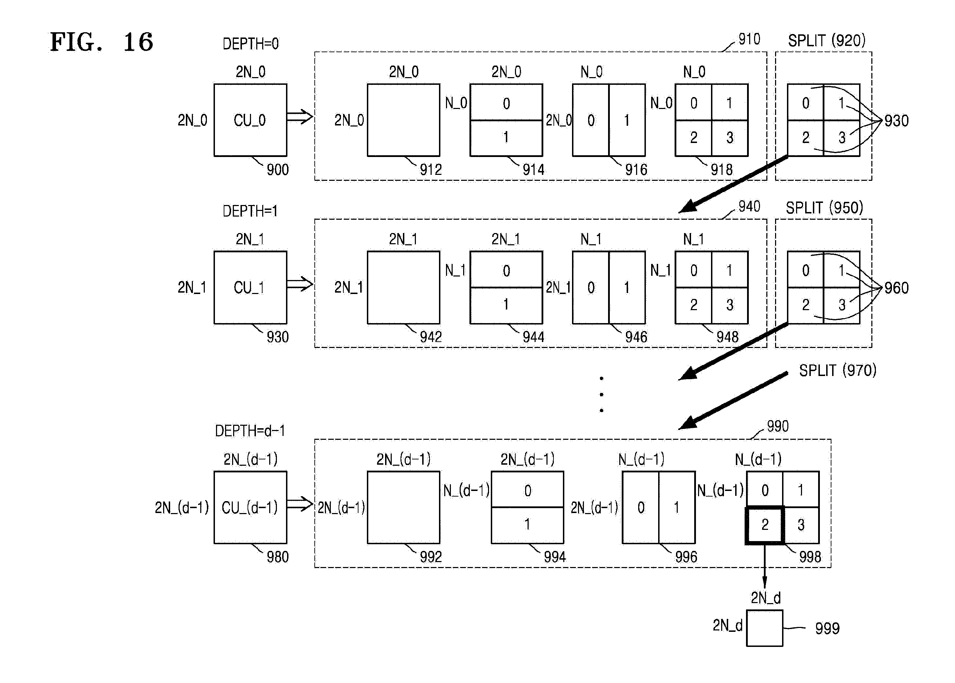

FIG. 16 is a diagram of deeper coding units according to depths, according to an embodiment of the present invention.

Split information may be used to indicate a change of a depth. The spilt information indicates whether a coding unit of a current depth is split into coding units of a lower depth.

A prediction unit 910 for prediction encoding a coding unit 900 having a depth of 0 and a size of 2N_0x2N_0 may include partitions of a partition type 912 having a size of 2N_0x2N_0, a partition type 914 having a size of 2N_0xN_0, a partition type 916 having a size of N_0x2N_0, and a partition type 918 having a size of N_0xN_0. FIG. 9 only illustrates the partition types 912 through 918 which are obtained by symmetrically splitting the prediction unit 910, but a partition type is not limited thereto, and the partitions of the prediction unit 910 may include asymmetrical partitions, partitions having a predetermined shape, and partitions having a geometrical shape.

Prediction encoding is repeatedly performed on one partition having a size of 2N_0x2N_0, two partitions having a size of 2N_0xN_0, two partitions having a size of N_0x2N_0, and four partitions having a size of N_0xN_0, according to each partition type. The prediction encoding in an intra mode and an inter mode may be performed on the partitions having the sizes of 2N_0x2N_0, N_0x2N_0, 2N_0xN_0, and N_0xN_0. The prediction encoding in a skip mode is performed only on the partition having the size of 2N_0x2N_0.

If an encoding error is smallest in one of the partition types 912 through 916, the prediction unit 910 may not be split into a lower depth.

If the encoding error is the smallest in the partition type 918, a depth is changed from 0 to 1 to split the partition type 918 in operation 920, and encoding is repeatedly performed on coding units 930 having a depth of 2 and a size of N_0xN_0 to search for a minimum encoding error.

A prediction unit 940 for prediction encoding the coding unit 930 having a depth of 1 and a size of 2N_1x2N_1 (=N_0xN_0) may include partitions of a partition type 942 having a size of 2N_1x2N_1, a partition type 944 having a size of 2N_1xN_1, a partition type 946 having a size of N_1x2N_1, and a partition type 948 having a size of N_1xN_1.

If an encoding error is the smallest in the partition type 948, a depth is changed from 1 to 2 to split the partition type 948 in operation 950, and encoding is repeatedly performed on coding units 960, which have a depth of 2 and a size of N_2xN_2 to search for a minimum encoding error.

When a maximum depth is d, split operation according to each depth may be performed up to when a depth becomes d-1, and split information may be encoded as up to when a depth is one of 0 to d-2. In other words, when encoding is performed up to when the depth is d-1 after a coding unit corresponding to a depth of d-2 is split in operation 970, a prediction unit 990 for prediction encoding a coding unit 980 having a depth of d-1 and a size of 2N_(d-1)x2N_(d-1) may include partitions of a partition type 992 having a size of 2N_(d-1)x2N_(d-1), a partition type 994 having a size of 2N_(d-1)xN_(d-1), a partition type 996 having a size of N_(d-1)x2N_(d-1), and a partition type 998 having a size of N_(d-1)xN_(d-1).

Prediction encoding may be repeatedly performed on one partition having a size of 2N_(d-1)x2N_(d-1), two partitions having a size of 2N_(d-1)xN_(d-1), two partitions having a size of N_(d-1)x2N_(d-1), four partitions having a size of N_(d-1)xN_(d-1) from among the partition types 992 through 998 to search for a partition type having a minimum encoding error.

Even when the partition type 998 has the minimum encoding error, since a maximum depth is d, a coding unit CU_(d-1) having a depth of d-1 is no longer split to a lower depth, and a coded depth for the coding units constituting a current maximum coding unit 900 is determined to be d-1 and a partition type of the current maximum coding unit 900 may be determined to be N_(d-1)xN_(d-1). Also, since the maximum depth is d, split information for a coding unit 952 having a depth of d-1 is not set.

A data unit 999 may be a 'minimum unit' for the current maximum coding unit. A minimum unit according to an embodiment may be a square data unit obtained by splitting a minimum coding unit having a lowermost coded depth by 4. By performing the encoding repeatedly, the video encoding apparatus 100 according to an embodiment may select a depth having the least encoding error by comparing encoding errors according to depths of the coding unit 900 to determine a coded depth, and set a corresponding partition type and a prediction mode as an encoding mode of the coded depth.

As such, the minimum encoding errors according to depths are compared in all of the depths of 1 through d, and a depth having the least encoding error may be determined as a coded depth. The coded depth, the partition type of the prediction unit, and the prediction mode may be encoded and transmitted as information about an encoding mode. Also, since a coding unit is split from a depth of 0 to a coded depth, only split information of the coded depth is set to 0, and split information of depths excluding the coded depth is set to 1.

The image data and encoding information extractor 220 of the video decoding apparatus 200 according to an embodiment may extract and use the information about the coded depth and the prediction unit of the coding unit 900 to decode the partition 912. The video decoding apparatus 200 according to an embodiment may determine a depth, in which split information is 0, as a coded depth by using split information according to depths, and use information about an encoding mode of the corresponding depth for decoding.

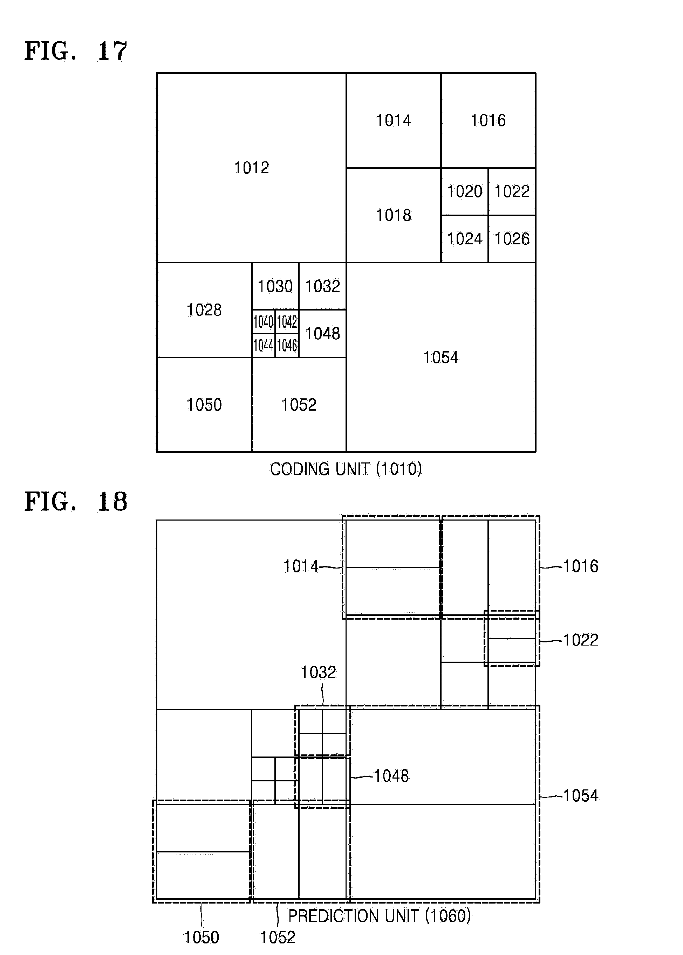

FIGS. 17 through 19 are diagrams for describing a relationship between coding units 1010, prediction units 1060, and transformation units 1070, according to an embodiment of the present invention.

The coding units 1010 are coding units having a tree structure, corresponding to coded depths determined by the video encoding apparatus 100 according to an embodiment, in a maximum coding unit. The prediction units 1060 are partitions of prediction units of each of the coding units 1010, and the transformation units 1070 are transformation units of each of the coding units 1010.

When a depth of a maximum coding unit is 0 in the coding units 1010, depths of coding units 1012 and 1054 are 1, depths of coding units 1014, 1016, 1018, 1028, 1050, and 1052 are 2, depths of coding units 1020, 1022, 1024, 1026, 1030, 1032, and 1048 are 3, and depths of coding units 1040, 1042, 1044, and 1046 are 4.

In the prediction units 1060, some encoding units 1014, 1016, 1022, 1032, 1048, 1050, 1052, and 1054 are obtained by splitting the coding units in the encoding units 1010. In other words, partition types in the coding units 1014, 1022, 1050, and 1054 have a size of 2NxN, partition types in the coding units 1016, 1048, and 1052 have a size of Nx2N, and a partition type of the coding unit 1032 has a size of NxN. Prediction units and partitions of the coding units 1010 are smaller than or equal to each coding unit.

Transformation or inverse transformation is performed on image data of the coding unit 1052 in the transformation units 1070 in a data unit that is smaller than the coding unit 1052. Also, the coding units 1014, 1016, 1022, 1032, 1048, 1050, and 1052 in the transformation units 1070 are different from those in the prediction units 1060 in terms of sizes and shapes. In other words, the video encoding and decoding apparatuses 100 and 200 according to an embodiment may perform intra prediction, motion estimation, motion compensation, transformation, and inverse transformation individually on a data unit in the same coding unit.

Accordingly, encoding is recursively performed on each of coding units having a hierarchical structure in each region of a maximum coding unit to determine an optimum coding unit, and thus coding units having a recursive tree structure may be obtained. Encoding information may include split information about a coding unit, information about a partition type, information about a prediction mode, and information about a size of a transformation unit. Table 1 shows the encoding information that may be set by the video encoding and decoding apparatuses 100 and 200 according to an embodiment.

Table 1

| Split Information 0 (Encoding on Coding Unit having Size of 2Nx2N and Current Depth of d) | | | | | Split Information 1 |
|---|---|---|---|---|---|
| Prediction Mode | Partition Type | | Size of Transformation Unit | | Repeatedly Encode Coding Units having Lower Depth of d+1 |
| Intra Inter Skip (Only | Symmetrical Partition Type | Asymmetrical Partition Type | Split Information 0 of Transformation Unit | Split Information 1 of Transformation Unit | |
| 2Nx2N) | 2Nx2N 2NxN Nx2N NxN | 2NxnU 2NxnD nLx2N nRx2N | 2Nx2N | NxN (Symmetrical Type) N/2xN/2 (Asymmetrical Type) | |

The output unit 130 of the video encoding apparatus 100 according to an embodiment may output the encoding information about the coding units having a tree structure, and the image data and encoding information extractor 220 of the video decoding apparatus 200 according to an embodiment may extract the encoding information about the coding units having a tree structure from a received bitstream.

Split information indicates whether a current coding unit is split into coding units of a lower depth. If split information of a current depth d is 0, a depth, in which a current coding unit is no longer split into a lower depth, is a coded depth, and thus information about a partition type, prediction mode, and a size of a transformation unit may be defined for the coded depth. If the current coding unit is further split according to the split information, encoding is independently performed on four split coding units of a lower depth.

A prediction mode may be one of an intra mode, an inter mode, and a skip mode. The intra mode and the inter mode may be defined in all partition types, and the skip mode is defined only in a partition type having a size of 2Nx2N.

The information about the partition type may indicate symmetrical partition types having sizes of 2Nx2N, 2NxN, Nx2N, and NxN, which are obtained by symmetrically splitting a height or a width of a prediction unit, and asymmetrical partition types having sizes of 2NxnU, 2NxnD, nLx2N, and nRx2N, which are obtained by asymmetrically splitting the height or width of the prediction unit. The asymmetrical partition types having the sizes of 2NxnU and 2NxnD may be respectively obtained by splitting the height of the prediction unit in 1:3 and 3:1, and the asymmetrical partition types having the sizes of nLx2N and nRx2N may be respectively obtained by splitting the width of the prediction unit in 1:3 and 3:1

The size of the transformation unit may be set to be two types in the intra mode and two types in the inter mode. In other words, if split information of the transformation unit is 0, the size of the transformation unit may be 2Nx2N, which is the size of the current coding unit. If split information of the transformation unit is 1, the transformation units may be obtained by splitting the current coding unit. Also, if a partition type of the current coding unit having the size of 2Nx2N is a symmetrical partition type, a size of a transformation unit may be NxN, and if the partition type of the current coding unit is an asymmetrical partition type, the size of the transformation unit may be N/2xN/2.

The encoding information about coding units having a tree structure, according to an embodiment, may include at least one of a coding unit corresponding to a coded depth, a prediction unit, and a minimum unit. The coding unit corresponding to the coded depth may include at least one of a prediction unit and a minimum unit containing the same encoding information.

Accordingly, it is determined whether adjacent data units are included in the same coding unit corresponding to the coded depth by comparing encoding information of the adjacent data units. Also, a corresponding coding unit corresponding to a coded depth is determined by using encoding information of a data unit, and thus a distribution of coded depths in a maximum coding unit may be determined.

Accordingly, if a current coding unit is predicted based on encoding information of adjacent data units, encoding information of data units in deeper coding units adjacent to the current coding unit may be directly referred to and used.

Alternatively, if a current coding unit is predicted based on encoding information of adjacent data units, data units adjacent to the current coding unit are searched using encoded information of the data units, and the searched adjacent coding units may be referred for predicting the current coding unit.

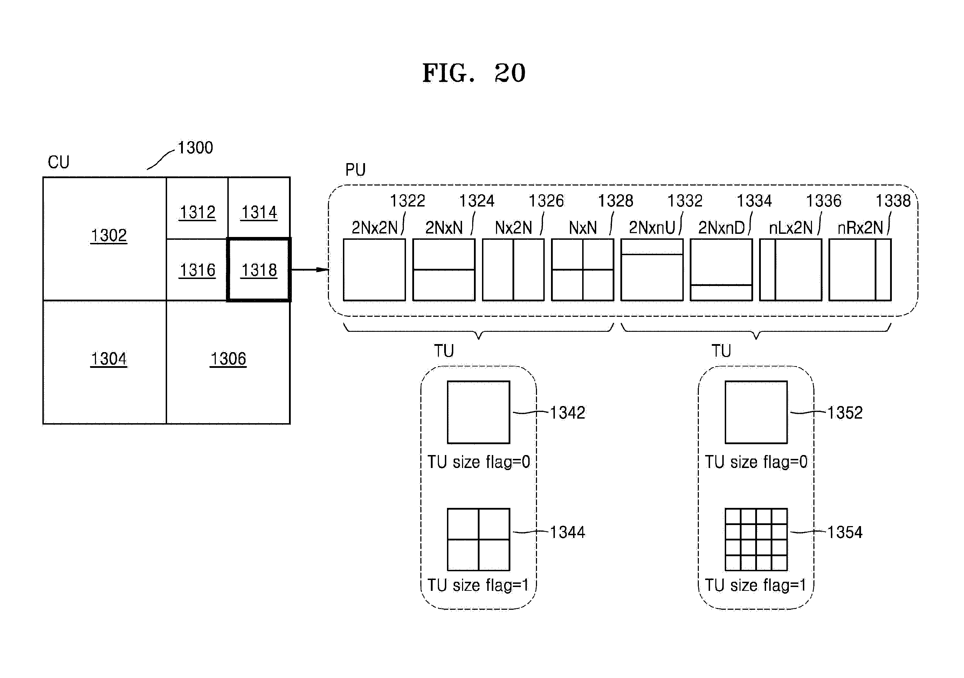

FIG. 20 is a diagram for describing a relationship between a coding unit, a prediction unit, and a transformation unit, according to encoding mode information of Table 1.

A maximum coding unit 1300 includes coding units 1302, 1304, 1306, 1312, 1314, 1316, and 1318 of coded depths. Here, since the coding unit 1318 is a coding unit of a coded depth, split information may be set to 0. Information about a partition type of the coding unit 1318 having a size of 2Nx2N may be set to be one of a partition type 1322 having a size of 2Nx2N, a partition type 1324 having a size of 2NxN, a partition type 1326 having a size of Nx2N, a partition type 1328 having a size of NxN, a partition type 1332 having a size of 2NxnU, a partition type 1334 having a size of 2NxnD, a partition type 1336 having a size of nLx2N, and a partition type 1338 having a size of nRx2N.

Split information (TU size flag) of a transformation unit is a type of a transformation index. The size of the transformation unit corresponding to the transformation index may be changed according to a prediction unit type or partition type of the coding unit.

For example, when the partition type is set to be symmetrical, i.e. the partition type 1322, 1324, 1326, or 1328, a transformation unit 1342 having a size of 2Nx2N is set if a TU size flag of a transformation unit is 0, and a transformation unit 1344 having a size of NxN is set if a TU size flag is 1.

When the partition type is set to be asymmetrical, i.e., the partition type 1332, 1334, 1336, or 1338, a transformation unit 1352 having a size of 2Nx2N is set if a TU size flag is 0, and a transformation unit 1354 having a size of N/2xN/2 is set if a TU size flag is 1.

Referring to FIG. 20, the TU size flag is a flag having a value or 0 or 1, but the TU size flag according to an embodiment is not limited to 1 bit, and a transformation unit may be hierarchically split having a tree structure while the TU size flag increases from 0. Split information (TU size flag) of a transformation unit may be an example of a transformation index.

In this case, the size of a transformation unit that has been actually used may be expressed by using a TU size flag of a transformation unit, according to an embodiment, together with a maximum size and minimum size of the transformation unit. The video encoding apparatus 100 according to an embodiment is capable of encoding maximum transformation unit size information, minimum transformation unit size information, and a maximum TU size flag. The result of encoding the maximum transformation unit size information, the minimum transformation unit size information, and the maximum TU size flag may be inserted into an SPS. The video decoding apparatus 200 according to an embodiment may decode video by using the maximum transformation unit size information, the minimum transformation unit size information, and the maximum TU size flag.

For example, (a) if the size of a current coding unit is 64x64 and a maximum transformation unit size is 32x32, (a-1) then the size of a transformation unit may be 32x32 when a TU size flag is 0, (a-2) may be 16x16 when the TU size flag is 1, and (a-3) may be 8x8 when the TU size flag is 2.

As another example, (b) if the size of the current coding unit is 32x32 and a minimum transformation unit size is 32x32, (b-1) then the size of the transformation unit may be 32x32 when the TU size flag is 0. Here, the TU size flag cannot be set to a value other than 0, since the size of the transformation unit cannot be less than 32x32.

As another example, (c) if the size of the current coding unit is 64x64 and a maximum TU size flag is 1, then the TU size flag may be 0 or 1. Here, the TU size flag cannot be set to a value other than 0 or 1.

Thus, if it is defined that the maximum TU size flag is 'MaxTransformSizeIndex', a minimum transformation unit size is 'MinTransformSize', and a transformation unit size is 'RootTuSize' when the TU size flag is 0, then a current minimum transformation unit size 'CurrMinTuSize' that can be determined in a current coding unit, may be defined by Equation (1):

CurrMinTuSize

$$= max\ (MinTransformSize, RootTuSize/(2\text{^}MaxTransformSizeIndex))\ ...\ (1)$$

Compared to the current minimum transformation unit size 'CurrMinTuSize' that can be determined in the current coding unit, a transformation unit size 'RootTuSize' when the TU size flag is 0 may denote a maximum transformation unit size that can be selected in the system. In Equation (1), 'RootTuSize/(2^MaxTransformSizeIndex)' denotes a transformation unit size when the transformation unit size 'RootTuSize', when the TU size flag is 0, is split a number of times corresponding to the maximum TU size flag, and 'MinTransformSize' denotes a minimum transformation size. Thus, a smaller value from among 'RootTuSize/(2^MaxTransformSizeIndex)' and 'MinTransformSize' may be the current minimum transformation unit size 'CurrMinTuSize' that can be determined in the current coding unit.

According to an embodiment, the maximum transformation unit size RootTuSize may vary according to the type of a prediction mode.

For example, if a current prediction mode is an inter mode, then 'RootTuSize' may be determined by using Equation (2) below. In Equation (2), 'MaxTransformSize' denotes a maximum transformation unit size, and 'PUSize' denotes a current prediction unit size.

$$RootTuSize = min(MaxTransformSize, PUSize)\ .........\ (2)$$

That is, if the current prediction mode is the inter mode, the transformation unit size 'RootTuSize', when the TU size flag is 0, may be a smaller value from among the maximum transformation unit size and the current prediction unit size.

If a prediction mode of a current partition unit is an intra mode, 'RootTuSize' may be determined by using Equation (3) below. In Equation (3), 'PartitionSize' denotes the size of the current partition unit.

$$RootTuSize = min(MaxTransformSize, PartitionSize)\ ...........(3)$$

That is, if the current prediction mode is the intra mode, the transformation unit size 'RootTuSize' when the TU size flag is 0 may be a smaller value from among the maximum transformation unit size and the size of the current partition unit.

However, the current maximum transformation unit size 'RootTuSize' that varies according to the type of a prediction mode in a partition unit is just an example and the present invention is not limited thereto.

According to the video encoding method based on coding units having a tree structure as described with reference to FIGS. 8 through 20, image data of a spatial region is encoded for each coding unit of a tree structure. According to the video decoding method based on coding units having a tree structure, decoding is performed for each maximum coding unit to reconstruct image data of a spatial region. Thus, a picture and a video that is a picture sequence may be reconstructed. The reconstructed video may be reproduced by a reproducing apparatus, stored in a storage medium, or transmitted through a network.

The embodiments according to the present invention may be written as computer programs and may be implemented in general-use digital computers that execute the programs using a computer-readable recording medium. Examples of the computer-readable recording medium include magnetic storage media (e.g., ROM, floppy discs, hard discs, etc.) and optical recording media (e.g., CD-ROMs, or DVDs).

For convenience of description, the video encoding method according to the multi-layer video prediction method or the multi-layer video decoding method described above with reference to FIGS. 1A through 20 will be collectively referred to as a 'video encoding method according to the present invention'. In addition, the video decoding method according to the multi-layer video decoding method described above with reference to FIGS. 1A through 20 will be referred to as a 'video decoding method according to the present invention'.

Also, a video encoding apparatus including the multi-layer video encoding apparatus 10, the multi-layer video decoding apparatus 20, the video encoding apparatus 100, or the image encoder 400, which has been described with reference to FIGS. 1A through 20, will be referred to as a 'video encoding apparatus according to the present invention'. In addition, a video decoding apparatus including the multi-layer video decoding apparatus 20, the video decoding apparatus 200, or the image decoder 500, which has been descried with reference to FIGS. 1A through 20, will be referred to as a 'video decoding apparatus according to the present invention'.

A computer-readable recording medium storing a program, e.g., a disc 26000, according to an embodiment of the present invention will now be described in detail.

FIG. 21 is a diagram of a physical structure of the disc 26000 in which a program is stored, according to an embodiment. The disc 26000, which is a storage medium, may be a hard drive, a compact disc-read only memory (CD-ROM) disc, a Blu-ray disc, or a digital versatile disc (DVD). The disc 26000 includes a plurality of concentric tracks Tr that are each divided into a specific number of sectors Se in a circumferential direction of the disc 26000. In a specific region of the disc 26000 according to the embodiment, a program that executes the quantization parameter determining method, the video encoding method, and the video decoding method described above may be assigned and stored.

A computer system embodied using a storage medium that stores a program for executing the video encoding method and the video decoding method as described above will now be described with reference to FIG. 22.

FIG. 22 is a diagram of a disc drive 26800 for recording and reading a program by using the disc 26000. A computer system 27000 may store a program that executes at least one of a video encoding method and a video decoding method according to an embodiment of the present invention, in the disc 26000 via the disc drive 26800. To run the program stored in the disc 26000 in the computer system 27000, the program may be read from the disc 26000 and be transmitted to the computer system 26700 by using the disc drive 27000.

The program that executes at least one of a video encoding method and a video decoding method according to an embodiment of the present invention may be stored not only in the disc 26000 illustrated in FIG. 21 or 22 but also in a memory card, a ROM cassette, or a solid state drive (SSD).

A system to which the video encoding method and a video decoding method described above are applied will be described below.

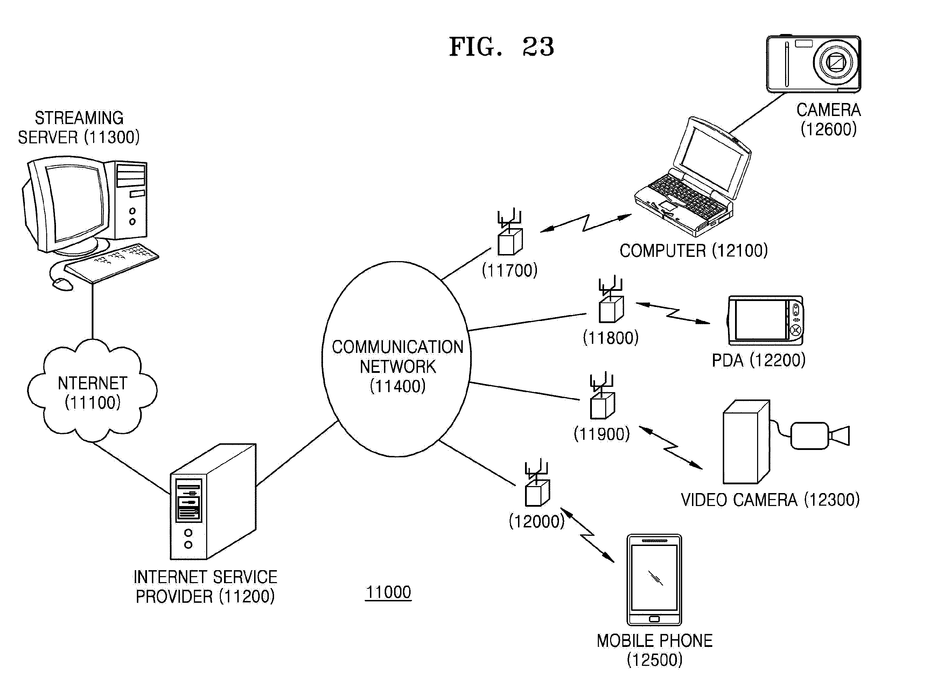

FIG. 23 is a diagram of an overall structure of a content supply system 11000 for providing a content distribution service. A service area of a communication system is divided into predetermined-sized cells, and wireless base stations 11700, 11800, 11900, and 12000 are installed in these cells, respectively.

The content supply system 11000 includes a plurality of independent devices. For example, the plurality of independent devices, such as a computer 12100, a personal digital assistant (PDA) 12200, a video camera 12300, and a mobile phone 12500, are connected to the Internet 11100 via an internet service provider 11200, a communication network 11400, and the wireless base stations 11700, 11800, 11900, and 12000.

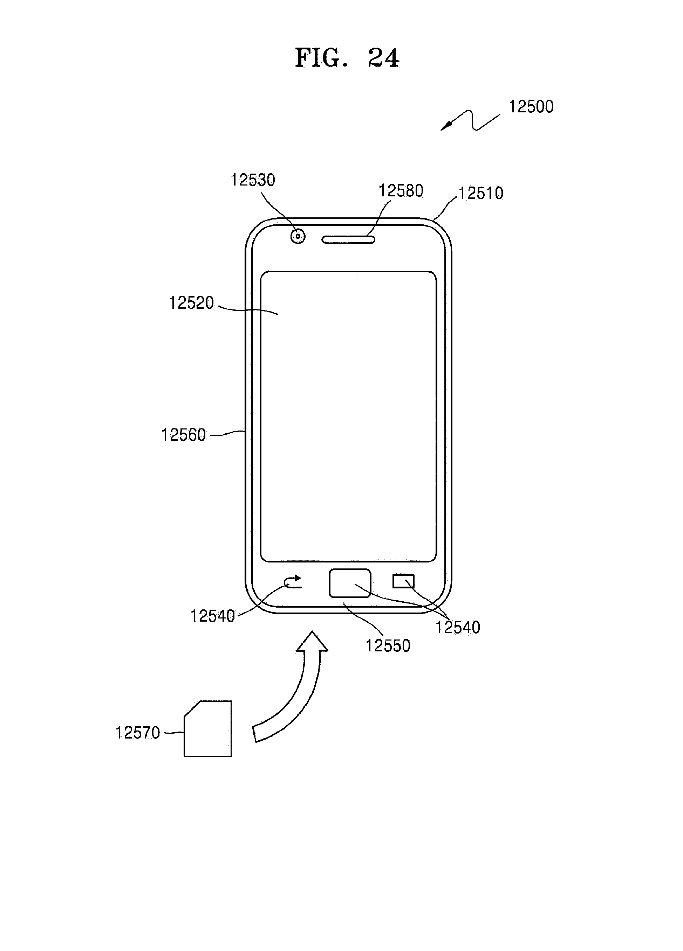

However, the content supply system 11000 is not limited to as illustrated in FIG. 24, and devices may be selectively connected thereto. The plurality of independent devices may be directly connected to the communication network 11400, not via the wireless base stations 11700, 11800, 11900, and 12000.

The video camera 12300 is an imaging device, e.g., a digital video camera, which is capable of capturing video images. The mobile phone 12500 may employ at least one communication method from among various protocols, e.g., Personal Digital Communications (PDC), Code Division Multiple Access (CDMA), Wideband-Code Division Multiple Access (W-CDMA), Global System for Mobile Communications (GSM), and Personal Handyphone System (PHS).

The video camera 12300 may be connected to a streaming server 11300 via the wireless base station 11900 and the communication network 11400. The streaming server 11300 allows content received from a user via the video camera 12300 to be streamed via a real-time broadcast. The content received from the video camera 12300 may be encoded using the video camera 12300 or the streaming server 11300. Video data captured by the video camera 12300 may be transmitted to the streaming server 11300 via the computer 12100.

Video data captured by a camera 12600 may also be transmitted to the streaming server 11300 via the computer 12100. The camera 12600 is an imaging device capable of capturing both still images and video images, similar to a digital camera. The video data captured by the camera 12600 may be encoded using the camera 12600 or the computer 12100. Software that performs encoding and decoding video may be stored in a computer-readable recording medium, e.g., a CD-ROM disc, a floppy disc, a hard disc drive, an SSD, or a memory card, which may be accessible by the computer 12100.

If video data is captured by a camera built in the mobile phone 12500, the video data may be received from the mobile phone 12500.

The video data may also be encoded by a large scale integrated circuit (LSI) system installed in the video camera 12300, the mobile phone 12500, or the camera 12600.

The content supply system 11000 according to an embodiment may encode content data recorded by a user using the video camera 12300, the camera 12600, the mobile phone 12500, or another imaging device, e.g., content recorded during a concert, and transmit the encoded content data to the streaming server 11300. The streaming server 11300 may transmit the encoded content data in a type of a streaming content to other clients that request the content data.

The clients are devices capable of decoding the encoded content data, e.g., the computer 12100, the PDA 12200, the video camera 12300, or the mobile phone 12500. Thus, the content supply system 11000 allows the clients to receive and reproduce the encoded content data. Also, the content supply system 11000 allows the clients to receive the encoded content data and decode and reproduce the encoded content data in real time, thereby enabling personal broadcasting.

Encoding and decoding operations of the plurality of independent devices included in the content supply system 11000 may be similar to those of a video encoding apparatus and a video decoding apparatus according to an embodiment of the present invention.

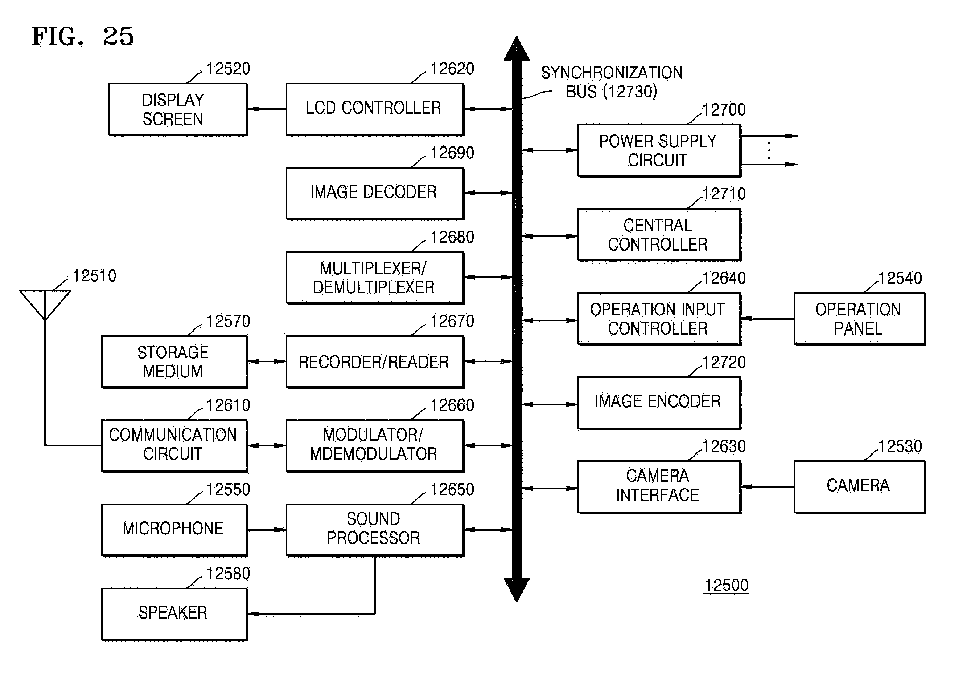

The mobile phone 12500 included in the content supply system 11000 according to an embodiment of the present invention will now be described in greater detail with referring to FIGS. 24 and 25.

FIG. 24 illustrates an external structure of the mobile phone 12500 to which a video encoding method and a video decoding method are applied, according to an embodiment of the present invention. The mobile phone 12500 may be a smart phone, the functions of which are not limited and a large number of the functions of which may be changed or expanded.

The mobile phone 12500 includes an internal antenna 12510 via which a radio-frequency (RF) signal may be exchanged with the wireless base station 12000 of FIG. 21, and includes a display screen 12520 for displaying images captured by a camera 12530 or images that are received via the antenna 12510 and decoded, e.g., a liquid crystal display (LCD) or an organic light-emitting diode (OLED) screen. The mobile phone 12500 includes an operation panel 12540 including a control button and a touch panel. If the display screen 12520 is a touch screen, the operation panel 12540 further includes a touch sensing panel of the display screen 12520. The mobile phone 12500 includes a speaker 12580 for outputting voice and sound or another type of sound output unit, and a microphone 12550 for inputting voice and sound or another type sound input unit. The mobile phone 12500 further includes the camera 12530, such as a charge-coupled device (CCD) camera, to capture video and still images. The mobile phone 12500 may further include a storage medium 12570 for storing encoded/decoded data, e.g., video or still images captured by the camera 12530, received via email, or obtained according to various ways; and a slot 12560 via which the storage medium 12570 is loaded into the mobile phone 12500. The storage medium 12570 may be a flash memory, e.g., a secure digital (SD) card or an electrically erasable and programmable read only memory (EEPROM) included in a plastic case.

FIG. 25 illustrates an internal structure of the mobile phone 12500, according to an embodiment of the present invention. To systemically control parts of the mobile phone 12500 including the display screen 12520 and the operation panel 12540, a power supply circuit 12700, an operation input controller 12640, an image encoding unit 12720, a camera interface 12630, an LCD controller 12620, an image decoding unit 12690, a multiplexer/demultiplexer 12680, a recording/reading unit 12670, a modulation/demodulation unit 12660, and a sound processor 12650 are connected to a central controller 12710 via a synchronization bus 12730.

If a user operates a power button and sets from a 'power off' state to a power on' state, the power supply circuit 12700 supplies power to all the parts of the mobile phone 12500 from a battery pack, thereby setting the mobile phone 12500 in an operation mode.

The central controller 12710 includes a central processing unit (CPU), a ROM, and a RAM.

While the mobile phone 12500 transmits communication data to the outside, a digital signal is generated by the mobile phone 12500 under control of the central controller 12710. For example, the sound processor 12650 may generate a digital sound signal, the image encoding unit 12720 may generate a digital image signal, and text data of a message may be generated via the operation panel 12540 and the operation input controller 12640. When a digital signal is transmitted to the modulation/demodulation unit 12660 under control of the central controller 12710, the modulation/demodulation unit 12660 modulates a frequency band of the digital signal, and a communication circuit 12610 performs digital-to-analog conversion (DAC) and frequency conversion on the frequency band-modulated digital sound signal. A transmission signal output from the communication circuit 12610 may be transmitted to a voice communication base station or the wireless base station 12000 via the antenna 12510.

For example, when the mobile phone 12500 is in a conversation mode, a sound signal obtained via the microphone 12550 is transformed into a digital sound signal by the sound processor 12650, under control of the central controller 12710. The digital sound signal may be transformed into a transformation signal via the modulation/demodulation unit 12660 and the communication circuit 12610, and may be transmitted via the antenna 12510.

When a text message, e.g., email, is transmitted in a data communication mode, text data of the text message is input via the operation panel 12540 and is transmitted to the central controller 12610 via the operation input controller 12640. Under control of the central controller 12610, the text data is transformed into a transmission signal via the modulation/demodulation unit 12660 and the communication circuit 12610 and is transmitted to the wireless base station 12000 via the antenna 12510.

To transmit image data in the data communication mode, image data captured by the camera 12530 is provided to the image encoding unit 12720 via the camera interface 12630. The captured image data may be directly displayed on the display screen 12520 via the camera interface 12630 and the LCD controller 12620.

A structure of the image encoding unit 12720 may correspond to that of the video encoding apparatus 100 described above. The image encoding unit 12720 may transform the image data received from the camera 12530 into compressed and encoded image data according to the video encoding method described above, and then output the encoded image data to the multiplexer/demultiplexer 12680. During a recording operation of the camera 12530, a sound signal obtained by the microphone 12550 of the mobile phone 12500 may be transformed into digital sound data via the sound processor 12650, and the digital sound data may be transmitted to the multiplexer/demultiplexer 12680.

The multiplexer/demultiplexer 12680 multiplexes the encoded image data received from the image encoding unit 12720, together with the sound data received from the sound processor 12650. A result of multiplexing the data may be transformed into a transmission signal via the modulation/demodulation unit 12660 and the communication circuit 12610, and may then be transmitted via the antenna 12510.

While the mobile phone 12500 receives communication data from the outside, frequency recovery and ADC are performed on a signal received via the antenna 12510 to transform the signal into a digital signal. The modulation/demodulation unit 12660 modulates a frequency band of the digital signal. The frequency-band modulated digital signal is transmitted to the video decoding unit 12690, the sound processor 12650, or the LCD controller 12620, according to the type of the digital signal.

In the conversation mode, the mobile phone 12500 amplifies a signal received via the antenna 12510, and obtains a digital sound signal by performing frequency conversion and ADC on the amplified signal. A received digital sound signal is transformed into an analog sound signal via the modulation/demodulation unit 12660 and the sound processor 12650, and the analog sound signal is output via the speaker 12580, under control of the central controller 12710.

When in the data communication mode, data of a video file accessed at an Internet website is received, a signal received from the wireless base station 12000 via the antenna 12510 is output as multiplexed data via the modulation/demodulation unit 12660, and the multiplexed data is transmitted to the multiplexer/demultiplexer 12680.

To decode the multiplexed data received via the antenna 12510, the multiplexer/demultiplexer 12680 demultiplexes the multiplexed data into an encoded video data stream and an encoded audio data stream. Via the synchronization bus 12730, the encoded video data stream and the encoded audio data stream are provided to the video decoding unit 12690 and the sound processor 12650, respectively.

A structure of the image decoding unit 12690 may correspond to that of the video decoding apparatus 200 described above. The image decoding unit 12690 may decode the encoded video data to obtain reconstructed video data and provide the reconstructed video data to the display screen 12520 via the LCD controller 12620, according to a video decoding method employed by the video decoding apparatus 200 or the image decoder 500 described above.

Thus, the data of the video file accessed at the Internet website may be displayed on the display screen 12520. At the same time, the sound processor 12650 may transform audio data into an analog sound signal, and provide the analog sound signal to the speaker 12580. Thus, audio data contained in the video file accessed at the Internet website may also be reproduced via the speaker 12580.

The mobile phone 12500 or another type of communication terminal may be a transceiving terminal including both a video encoding apparatus and a video decoding apparatus according to an embodiment of the present invention, may be a transceiving terminal including only the video encoding apparatus, or may be a transceiving terminal including only the video decoding apparatus.

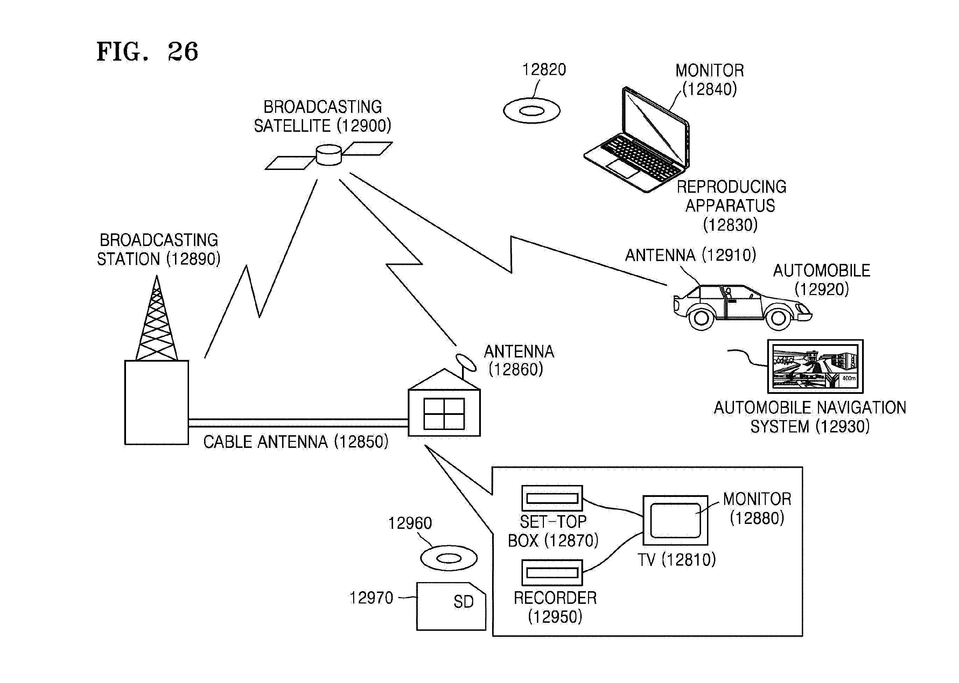

A communication system according to the present invention is not limited to the communication system described above with reference to FIG. 24. For example, FIG. 26 illustrates a digital broadcasting system employing a communication system, according to an embodiment of the present invention. The digital broadcasting system of FIG. 26 may receive a digital broadcast transmitted via a satellite or a terrestrial network by using a video encoding apparatus and a video decoding apparatus according to an embodiment of the present invention.

Specifically, a broadcasting station 12890 transmits a video data stream to a communication satellite or a broadcasting satellite 12900 by using radio waves. The broadcasting satellite 12900 transmits a broadcast signal, and the broadcast signal is transmitted to a satellite broadcast receiver via a household antenna 12860. In every house, an encoded video stream may be decoded and reproduced by a TV receiver 12810, a set-top box 12870, or another device.

When a video decoding apparatus according to an embodiment of the present invention is implemented in a reproducing apparatus 12830, the reproducing apparatus 12830 may parse and decode an encoded video stream recorded on a storage medium 12820, such as a disc or a memory card to reconstruct digital signals. Thus, the reconstructed video signal may be reproduced, for example, on a monitor 12840.

In the set-top box 12870 connected to the antenna 12860 for a satellite/terrestrial broadcast or a cable antenna 12850 for receiving a cable television (TV) broadcast, a video decoding apparatus according to an embodiment of the present invention may be installed. Data output from the set-top box 12870 may also be reproduced on a TV monitor 12880.

As another example, a video decoding apparatus according to an embodiment of the present invention may be installed in the TV receiver 12810 instead of the set-top box 12870.

An automobile 12920 that has an appropriate antenna 12910 may receive a signal transmitted from the satellite 12900 or the wireless base station 11700 of FIG. 23. A decoded video may be reproduced on a display screen of an automobile navigation system 12930 installed in the automobile 12920.

A video signal may be encoded by a video encoding apparatus according to an embodiment of the present invention and may then be stored in a storage medium. Specifically, an image signal may be stored in a DVD disc 12960 by a DVD recorder or may be stored in a hard disc by a hard disc recorder 12950. As another example, the video signal may be stored in an SD card 12970. If the hard disc recorder 12950 includes a video decoding apparatus according to an embodiment of the present invention, a video signal recorded on the DVD disc 12960, the SD card 12970, or another storage medium may be reproduced on the TV monitor 12880.

The automobile navigation system 12930 may not include the camera 12530, the camera interface 12630, and the image encoding unit 12720 of FIG. 26. For example, the computer 12100 and the TV receiver 12810 may not be included in the camera 12530, the camera interface 12630, and the image encoding unit 12720 of FIG. 26.

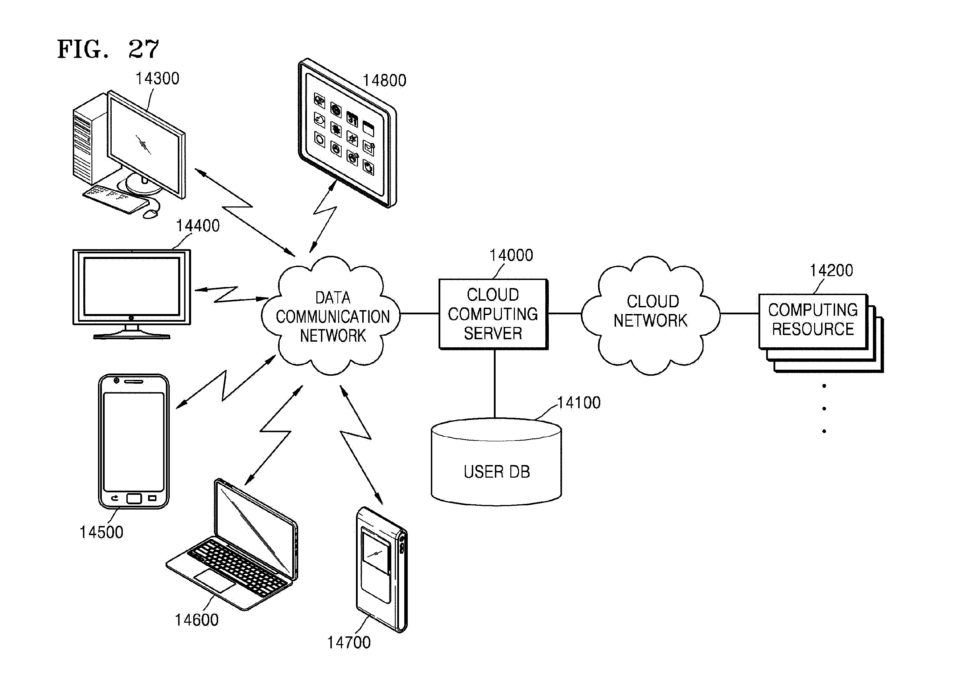

FIG. 27 is a diagram illustrating a network structure of a cloud computing system using a video encoding apparatus and a video decoding apparatus, according to an embodiment of the present invention.

The cloud computing system may include a cloud computing server 14000, a user database (DB) 14100, a plurality of computing resources 14200, and a user terminal.

The cloud computing system provides an on-demand outsourcing service of the plurality of computing resources 14200 via a data communication network, e.g., the Internet, in response to a request from the user terminal. Under a cloud computing environment, a service provider provides users with desired services by combining computing resources at data centers located at physically different locations by using virtualization technology. A service user does not have to install computing resources, e.g., an application, a storage, an operating system (OS), and security, into his/her own terminal in order to use them, but may select and use desired services from among services in a virtual space generated through the virtualization technology, at a desired point in time.

A user terminal of a specified service user is connected to the cloud computing server 14000 via a data communication network including the Internet and a mobile telecommunication network. User terminals may be provided cloud computing services, and particularly video reproduction services, from the cloud computing server 14000. The user terminals may be various types of electronic devices capable of being connected to the Internet, e.g., a desktop PC 14300, a smart TV 14400, a smart phone 14500, a notebook computer 14600, a portable multimedia player (PMP) 14700, a tablet PC 14800, and the like.

The cloud computing server 14000 may combine the plurality of computing resources 14200 distributed in a cloud network and provide user terminals with a result of combining. The plurality of computing resources 14200 may include various data services, and may include data uploaded from user terminals. As described above, the cloud computing server 14000 may provide user terminals with desired services by combining video database distributed in different regions according to the virtualization technology.

User information about users who have subscribed for a cloud computing service is stored in the user DB 14100. The user information may include logging information, addresses, names, and personal credit information of the users. The user information may further include indexes of videos. Here, the indexes may include a list of videos that have already been reproduced, a list of videos that are being reproduced, a pausing point of a video that was being reproduced, and the like.

Information about a video stored in the user DB 14100 may be shared between user devices. For example, when a video service is provided to the notebook computer 14600 in response to a request from the notebook computer 14600, a reproduction history of the video service is stored in the user DB 14100. When a request to reproduce this video service is received from the smart phone 14500, the cloud computing server 14000 searches for and reproduces this video service, based on the user DB 14100. When the smart phone 14500 receives a video data stream from the cloud computing server 14000, a process of reproducing video by decoding the video data stream is similar to an operation of the mobile phone 12500 described above with reference to FIG. 24.

The cloud computing server 14000 may refer to a reproduction history of a desired video service, stored in the user DB 14100. For example, the cloud computing server 14000 receives a request to reproduce a video stored in the user DB 14100, from a user terminal. If this video was being reproduced, then a method of streaming this video, performed by the cloud computing server 14000, may vary according to the request from the user terminal, i.e., according to whether the video will be reproduced, starting from a start thereof or a pausing point thereof. For example, if the user terminal requests to reproduce the video, starting from the start thereof, the cloud computing server 14000 transmits streaming data of the video starting from a first frame thereof to the user terminal. If the user terminal requests to reproduce the video, starting from the pausing point thereof, the cloud computing server 14000 transmits streaming data of the video starting from a frame corresponding to the pausing point, to the user terminal.

In this case, the user terminal may include a video decoding apparatus as described above with reference to FIGS. 1A to 20. As another example, the user terminal may include a video encoding apparatus as described above with reference to FIGS. 1A to 20. Alternatively, the user terminal may include both the video decoding apparatus and the video encoding apparatus as described above with reference to FIGS. 1A to 20.

Various applications of a video encoding method, a video decoding method, a video encoding apparatus, and a video decoding apparatus according to embodiments of the present invention described above with reference to FIGS. 1A to 20 have been described above with reference to FIGS. 21 to 27. However, methods of storing the video encoding method and the video decoding method in a storage medium or methods of implementing the video encoding apparatus and the video decoding apparatus in a device, according to various embodiments of the present invention, are not limited to the embodiments described above with reference to FIGS. 21 to 27.

While this invention has been particularly shown and described with reference to embodiments thereof, it will be understood by those of ordinary skill in the art that various changes in form and details may be made therein without departing from the spirit and scope of the invention as defined by the appended claims. The embodiments should be considered in a descriptive sense only and not for purposes of limitation. Therefore, the scope of the invention is defined not by the detailed description of the invention but by the appended claims, and all differences within the scope will be construed as being included in the present invention.

**Claims**

1.   A multi-layer video decoding method comprising:

reconstructing base layer images by performing motion compensation and intra decoding on a base layer stream; and
reconstructing enhancement layer images by reconstructing an enhancement layer random access point (RAP) image of a same type corresponding to a base layer RAP image capable of random access from among the base layer images, from an enhancement layer stream and by performing motion compensation and inter-layer decoding using the base layer images on the enhancement layer images comprising the reconstructed enhancement layer RAP image.

2.   The multi-layer video decoding method of claim 1, wherein the reconstructing of the base layer images comprises:

performing intra decoding on a first base layer instantaneous decoding refresh (IDR) image; and
performing motion compensation on at least one base layer image by referring to the first base layer IDR image, and
the reconstructing of the enhancement layer images comprises:

determining a first enhancement layer image corresponding to the first base layer IDR image as a first enhancement layer IDR image, and performing inter-layer decoding on the first enhancement layer IDR image by referring to the first base layer IDR image; and
performing motion compensation on at least one enhancement layer image by referring to the first enhancement layer IDR image.

3.   The multi-layer video decoding method of claim 1, wherein the reconstructing of the base layer images comprises:

performing intra decoding on a first base layer clean random access (CRA) image; and
performing motion compensation on at least one base layer image by referring to the first base layer CRA image, and
the reconstructing of the enhancement layer images comprises:

determining a first enhancement layer image corresponding to the first base layer CRA image as a first enhancement layer CRA image, and performing inter-layer decoding on the first enhancement layer CRA image by referring to the first base layer CRA image; and
performing motion compensation on at least one enhancement layer image by referring to the first enhancement layer CRA image.

4.   The multi-layer video decoding method of claim 1, wherein the reconstructing of the base layer images comprises:

performing intra decoding on a first base layer broken link access (BLA) image; and
performing motion compensation on at least one base layer image by referring to the first base layer BLA image, and
the reconstructing of the enhancement layer images comprises:

determining a first enhancement layer image corresponding to the first base layer BLA image as a first enhancement layer BLA image, and performing inter-layer decoding on the first enhancement layer BLA image by referring to the first base layer BLA image; and
performing motion compensation on at least one enhancement layer image by referring to the first enhancement layer BLA image.

5. The multi-layer video decoding method of claim 1, wherein the reconstructing of the base layer images comprises performing motion compensation on a first base layer random access skipped leading (RASL) image by referring to a first base layer RAP image and base layer RAP images preceding the first base layer RAP image in a decoding order, and

the reconstructing of the enhancement layer images comprises determining a first enhancement layer image corresponding to the first base layer RASL image as a first enhancement layer RASL image, and performing, on the first enhancement RASL image, inter-layer decoding referring to the first base layer RASL image and motion compensation referring to a first enhancement layer RAP image and enhancement layer RAP images preceding the first enhancement layer RAP image in a decoding order.

6. The multi-layer video decoding method of claim 1, wherein the reconstructing of the base layer images comprises performing motion compensation on a first base layer normal image, and

the reconstructing of the enhancement layer images comprises determining a first enhancement layer image corresponding to the first base layer normal image as one of a first enhancement layer clean random access (CRA) image, a first enhancement layer random access skipped leading (RASL) image, and a first enhancement layer normal image, and performing, on the first enhancement layer normal image, inter-layer decoding referring to the first base layer normal image and motion compensation referring to an enhancement layer RAP image.

7. The multi-layer video decoding method of claim 1, wherein the reconstructing of the enhancement layer images comprises:

determining a first enhancement layer view layer access (VLA) image corresponding to a first base layer image that is one of an RAP image and a non-RAP image based on a viewpoint change request, and performing inter-layer decoding on the first enhancement layer VLA image by referring to the first base layer image; and

performing motion compensation on enhancement layer images following the first enhancement VAL image in a decoding order than, by referring to at least one of enhancement layer images subsequent or equal to the first enhancement layer VAL image in a decoding order and a reproduction order.

8. The multi-layer video decoding method of claim 1, wherein the reconstructing of the base layer images comprises skipping decoding of at least one of base layer random access skipped leading (RASL) images preceding a first base layer RAP image in a decoding order, and

the reconstructing of the enhancement layer images comprises skipping decoding of an enhancement layer image corresponding to the at least one of the base layer RASL images of which the decoding is skipped.

9. The multi-layer video decoding method of claim 1, wherein the reconstructing of the enhancement layer images comprises, for temporal hierarchical decoding of the base layer stream and the enhancement layer stream, performing inter-layer decoding on a first enhancement layer image by referring to a first base layer image to which a temporal hierarchical identification number that is lower than a temporal hierarchical identification number of the first enhancement layer image is assigned.

10. A multi-layer video encoding method comprising:

performing inter prediction and intra prediction on base layer images; and

determining an enhancement layer image corresponding to a base layer random access point (RAP) image capable of random access from among the base layer images as an enhancement layer RAP image of a same type as the base layer RAP image, and performing inter prediction and inter-layer prediction using the base layer images on enhancement layer images comprising the enhancement layer RAP image.

11. The multi-layer video encoding method of claim 10, wherein the base layer RAP image is one of an instantaneous decoding refresh (IDR) image, a clean random access (CRA) image, and a broken link access (BLA) image.

12. A multi-layer video decoding apparatus comprising:

a base layer decoder that reconstructs base layer images by performing motion compensation and intra decoding on a base layer stream; and

an enhancement layer decoder that reconstructs enhancement layer images by reconstructing an enhancement layer random access point (RAP) image of a same type corresponding to a base layer RAP image capable of random access from among the base layer images, from an enhancement layer stream and by performing motion compensation and inter-layer decoding using the base layer images on the enhancement layer images comprising the reconstructed enhancement layer RAP image.

13. A multi-layer video encoding apparatus comprising:

a base layer encoder that performs inter prediction and intra prediction on base layer images; and
an enhancement layer encoder that determines an enhancement layer image corresponding to a base layer random access point (RAP) image capable of random access from among the base layer images as an enhancement layer RAP image of a same type as the base layer RAP image, and performing inter prediction and inter-layer prediction using the base layer images on enhancement layer images comprising the enhancement layer RAP image.

14. A non-transitory computer-readable recording medium having recorded thereon a program for executing the method of claim 1.

15. A non-transitory computer-readable recording medium having recorded thereon a program for executing the method of claim 10.

# FIG. 1A

BASE LAYER
IMAGES
→ BASE LAYER ENCODER → BASE LAYER STREAM

ENHANCEMENT
LAYER IMAGES
→ ENHANCEMENT LAYER ENCODER → ENHANCEMENT LAYER STREAM

# FIG. 1B

START

PERFORM INTER PREDICTION AND INTRA PREDICTION ON BASE LAYER IMAGES — 11

PERFORM INTER PREDICTION AND INTER-LAYER PREDICTION ON ENHANCEMENT LAYER RANDOM ACCESS IMAGE OF SAME TYPE CORRESPONDING TO BASE LAYER RANDOM ACCESS IMAGE, AND ENHANCEMENT LAYER IMAGES — 13

END

# FIG. 2A

BASE LAYER
STREAM → BASE LAYER
DECODER → BASE LAYER
IMAGES

ENHANCEMENT
LAYER STREAM → ENHANCEMENT
LAYER DECODER → ENHANCEMENT
LAYER IMAGES

# FIG. 2B

START

PERFORM MOTION COMPENSATION AND INTRA
DECODING ON BASE LAYER STREAM — 21

RECONSTRUCT ENHANCEMENT LAYER RANDOM
ACCESS IMAGE OF SAME TYPE CORRESPONDING
TO BASE LAYER RANDOM ACCESS IMAGE FROM
ENHANCEMENT LAYER STREAM, AND PERFORM MOTION
COMPENSATION AND INTER-LAYER DECODING
ON ENHANCEMENT LAYER IMAGES — 23

END

FIG. 3

# FIG. 4A

EP 2 858 350 A1

FIG. 4B

EP 2 858 350 A1

# FIG. 5A

# FIG. 5B

EP 2 858 350 A1

REPRODUCTION
ORDER

| B0 | B1 | B2 | B3 | B4 | B5 | B6 | P | B0 | B1 | B2 | B3 | B4 | B5 | B6 | IDR | B0 | B1 | B2 | B3 | B4 | B5 | B6 | P |

START RANDOM ACCESS

DECODING
ORDER

| P | B3 | B1 | B0 | B2 | B5 | B4 | B6 | B3 | B1 | B0 | B2 | B5 | B4 | B6 | IDR | P | B3 | B1 | B0 | B2 | B5 | B4 | B6 |

RANDOM ACCESS POINT

# FIG. 6A

REPRODUCTION ORDER

| B0 | B1 | B2 | B3 | B4 | B5 | B6 | P | B0 | B1 | B2 | B3 | B4 | B5 | B6 | CRA | B0 | B1 | B2 | B3 | B4 | B5 | B6 | P |

606      616      626

DECODING ORDER

| P | B3 | B1 | B0 | B2 | B5 | B4 | B6 | CRA | B3 | B1 | B0 | B2 | B5 | B4 | B6 | P | B3 | B1 | B0 | B2 | B5 | B4 | B6 |

RANDOM ACCESS POINT

# FIG. 6B

REPRODUCTION ORDER

| B0 | B1 | B2 | B3 | B4 | B5 | B6 | CRA | B0 | B1 | B2 | B3 | B4 | B5 | B6 | P |

616

RASL

START RANDOM ACCESS

DECODING ORDER

| CRA |

| P | B3 | B1 | B0 | B2 | B5 | B4 | B6 |

RANDOM ACCESS POINT

## FIG. 7A

RANDOM ACCESS POINT

EP 2 858 350 A1

## FIG. 7B

## FIG. 8

```
                                                        100

        110                    120                    130

┌─────────────────┐   ┌─────────────────┐   ┌─────────────────┐
│ MAXIMUM CODING  │   │  CODING UNIT    │   │                 │
│ UNIT SPLITTER   │──▶│  DETERMINER     │──▶│  OUTPUT UNIT    │──▶
│                 │   │                 │   │                 │
└─────────────────┘   └─────────────────┘   └─────────────────┘
```

## FIG. 9

```
                                                        200

        210                    220                    230

┌─────────────────┐   ┌─────────────────┐   ┌─────────────────┐
│                 │   │ IMAGE DATA AND  │   │                 │
│                 │   │   ENCODING      │   │  IMAGE DATA     │
│   RECEIVER      │──▶│  INFORMATION    │──▶│  DECODER        │──▶
│                 │   │  EXTRACTOR      │   │                 │
└─────────────────┘   └─────────────────┘   └─────────────────┘
```

# FIG. 10

| | | | |
|---|---|---|---|
| 64<br>64 □<br>64×64 | 64<br>32 □<br>64×32 | 32<br>64 ⊟<br>32×64 | 32<br>32 ⊞<br>32×32 |
| 32<br>32 □<br>32×32 | 32<br>16 □<br>32×16 | 16<br>32 ⊟<br>16×32 | 16<br>16 ⊞<br>16×16 |
| 16<br>16 □<br>16×16 | 16<br>8 □<br>16×8 | 8<br>16 ⊟<br>8×16 | 8<br>8 ⊞<br>8×8 |
| 8<br>8 □<br>8×8 | 8<br>4 □<br>8×4 | 4<br>8 ⊟<br>4×8 | 4<br>4 ⊞<br>4×4 |

315

RESOLUTION:1920×1080
MAXIMUM SIZE OF CODING UNIT:64
MAXIMUM DEPTH=2

— 310

RESOLUTION:1920×1080
MAXIMUM SIZE OF CODING UNIT:64
MAXIMUM DEPTH=3

— 320

RESOLUTION:352×288
MAXIMUM SIZE OF CODING UNIT:16
MAXIMUM DEPTH=1

— 330

335  325

# FIG. 11

EP 2 858 350 A1

# FIG. 12

500

505
BITSTREAM →

| 510 PARSER | → | 520 ENTROPY DECODER | → | 530 DEQUANTIZER | → | 540 INVERSE TRANSFORMER |

595
RECONSTRUCTED FRAME ←

| 580 SAO OPERATOR | ← | 570 DEBLOCKING FILTER | ← | 550 INTRA PREDICTOR | ← INTRA

560 MOTION COMPENSATOR ← INTER

REFERENCE FRAME

585

EP 2 858 350 A1

# FIG. 13

# FIG. 14

CODING UNIT (710)

64

64×64

TRANSFORMATION
UNIT (720)

32

32

32×32

# FIG. 15

PARTITION TYPE (800)

2N    802    2N    804    N    806    N    808

2N              N    0         2N  0  1    N  0  1
                     1                       2  3

PREDICTION MODE (810)

812          814          816

INTRA MODE    INTER MODE    SKIP MODE

SIZE OF TRANSFORMATION UNIT (820)

822    824          826    828

INTRA                INTER

# FIG. 16

EP 2 858 350 A1

FIG. 17

| | | 1014 | 1016 | |
| 1012 | | 1018 | 1020 | 1022 |
| | | | 1024 | 1026 |

| 1028 | 1030 | 1032 | 1054 |
| | 1040 1042 1044 1046 | 1048 | |
| 1050 | 1052 | | |

CODING UNIT (1010)

FIG. 18

1014 — 1016

1022

1032

1048

1054

PREDICTION UNIT (1060)

1050    1052

# FIG. 19

1014

1016

1022

1032

1048

1054

TRANSFORMATION UNIT (1070)

1050    1052

FIG. 20

EP 2 858 350 A1

# FIG. 21

Se

Tr

DISC (26000)

# FIG. 22

26700

26800

26000

# FIG. 23

STREAMING SERVER (11300)

CAMERA (12600)

COMPUTER (12100)

(11700)

NTERNET (11100)

COMMUNICATION NETWORK (11400)

(11800)

PDA (12200)

(11900)

VIDEO CAMERA (12300)

INTERNET SERVICE PROVIDER (11200)

11000

(12000)

MOBILE PHONE (12500)

EP 2 858 350 A1

# FIG. 24

**FIG. 25**

SYNCHRONIZATION BUS (12730)

- DISPLAY SCREEN (12520)
- LCD CONTROLLER (12620)
- IMAGE DECODER (12690)
- MULTIPLEXER/DEMULTIPLEXER (12680)
- STORAGE MEDIUM (12570)
- RECORDER/READER (12670)
- COMMUNICATION CIRCUIT (12610)
- MODULATOR/MDEMODULATOR (12660)
- MICROPHONE (12550)
- SOUND PROCESSOR (12650)
- SPEAKER (12580)
- POWER SUPPLY CIRCUIT (12700)
- CENTRAL CONTROLLER (12710)
- OPERATION INPUT CONTROLLER (12640)
- OPERATION PANEL (12540)
- IMAGE ENCODER (12720)
- CAMERA INTERFACE (12630)
- CAMERA (12530)
- 12510
- 12500

EP 2 858 350 A1

# FIG. 26

FIG. 27

14300

14800

14400

14000

CLOUD
COMPUTING
SERVER

14200

COMPUTING
RESOURCE

DATA
COMMUNICATION
NETWORK

CLOUD
NETWORK

14100

USER DB

14500

14600

14700

## INTERNATIONAL SEARCH REPORT

| International application No. |
| --- |
| **PCT/KR2013/006032** |

**A. CLASSIFICATION OF SUBJECT MATTER**

*H04N 7/32(2006.01)i*

According to International Patent Classification (IPC) or to both national classification and IPC

**B. FIELDS SEARCHED**

Minimum documentation searched (classification system followed by classification symbols)
H04N 7/32; H04N 7/30; H04N 7/26; H04N 7/46

Documentation searched other than minimum documentation to the extent that such documents are included in the fields searched
Korean Utility models and applications for Utility models: IPC as above
Japanese Utility models and applications for Utility models: IPC as above

Electronic data base consulted during the international search (name of data base and, where practicable, search terms used)

eKOMPASS (KIPO internal) & Keywords: RAP(random access point picture), base, enhancement layer, decoding, restore, motion, compensation, IDR, CRA, BLA, RASL, VAL

**C. DOCUMENTS CONSIDERED TO BE RELEVANT**

| Category* | Citation of document, with indication, where appropriate, of the relevant passages | Relevant to claim No. |
| --- | --- | --- |
| Y | KR 10-2011-0127175 A (THOMSON LICENSING) 24 November 2011<br>See abstract; paragraphs [0008], [0011]; and claims 1, 3. | 1,10,12-15 |
| A | | 2-9,11 |
| Y | KR 10-2008-0015830 A (QUALCOMM INCORPORATED) 20 February 2008<br>See paragraphs [0009], [0029], [0035] and [0047]; and claims 1, 63. | 1,10,12-15 |
| A | KR 10-2011-0100912 A (SK TELECOM CO., LTD.) 15 September 2011<br>See abstract; paragraphs [0012], [0023] and [0124]; claims 1, 10; and figure 3. | 1-15 |
| A | KR 10-2011-0063865 A (QUALCOMM INCORPORATED) 14 June 2011<br>See abstract; paragraphs [0033]-[0034]; and claims 2-3. | 1-15 |
| A | US 2011-0317760 A1 (CHEN, Ying et al.) 29 December 2011<br>See paragraphs [0018], [0020] and [0022]; claims 1, 3, 8, 10, 15 and 17; and figures 2-3. | 1-15 |

☐ Further documents are listed in the continuation of Box C. ☒ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 07 OCTOBER 2013 (07.10.2013) | **08 OCTOBER 2013 (08.10.2013)** |

| Name and mailing address of the ISA/KR | Authorized officer |
| --- | --- |
| Korean Intellectual Property Office<br>Government Complex-Daejeon, 189 Seonsa-ro, Daejeon 302-701, Republic of Korea<br>Facsimile No. 82-42-472-7140 | Telephone No. |

Form PCT/ISA/210 (second sheet) (July 2009)

INTERNATIONAL SEARCH REPORT
Information on patent family members

International application No.

**PCT/KR2013/006032**

| Patent document cited in search report | Publication date | Patent family member | Publication date |
|---|---|---|---|
| KR 10-2011-0127175 A | 24/11/2011 | AU 2010-220454 A1 | 10/09/2010 |
| | | CN 102342103 A | 01/02/2012 |
| | | EP 2404447 A1 | 11/01/2012 |
| | | JP 2012-519444 A | 23/08/2012 |
| | | TW 201043038 A | 01/12/2010 |
| | | WO 2010-100089 A1 | 10/09/2010 |
| KR 10-2008-0015830 A | 20/02/2008 | CA 2608279 A1 | 09/11/2006 |
| | | CN 101542926 A | 23/09/2009 |
| | | CN 101542926 B | 04/07/2012 |
| | | CN 102724496 A | 10/10/2012 |
| | | EP 1877959 A2 | 16/01/2008 |
| | | JP 2008-543130 A | 27/11/2008 |
| | | JP 2011-120281 A | 16/06/2011 |
| | | JP 4902642 B2 | 21/03/2012 |
| | | TW I326186 A | 11/06/2010 |
| | | TW I326186 B | 11/06/2010 |
| | | WO 2006-119443 A2 | 09/11/2006 |
| KR 10-2011-0100912 A | 15/09/2011 | US 2012-0328014 A1 | 27/12/2012 |
| | | WO 2011-108879 A2 | 09/09/2011 |
| KR 10-2011-0063865 A | 14/06/2011 | CN 102187671 A | 14/09/2011 |
| | | EP 2347519 A2 | 27/07/2011 |
| | | JP 2012-506215 A | 08/03/2012 |
| | | TW 201029472 A | 01/08/2010 |
| | | US 2010-0098156 A1 | 22/04/2010 |
| | | WO 2010-045380 A2 | 22/04/2010 |
| US 2011-0317760 A1 | 29/12/2011 | CN 102918836 A | 06/02/2013 |
| | | CN 103039087 A | 10/04/2013 |
| | | CN 103081488 A | 01/05/2013 |
| | | EP 2569943 A1 | 20/03/2013 |
| | | EP 2589221 A1 | 08/05/2013 |
| | | EP 2589222 A1 | 08/05/2013 |
| | | EP 2594071 A1 | 22/05/2013 |
| | | EP 2594073 A1 | 22/05/2013 |
| | | KR 10-2013-0023382 A | 07/03/2013 |
| | | KR 10-2013-0030270 A | 26/03/2013 |
| | | KR 10-2013-0050958 A | 16/05/2013 |
| | | KR 10-2013-0053444 A | 23/05/2013 |
| | | US 2011-0280316 A1 | 17/11/2011 |
| | | US 2011-0317771 A1 | 29/12/2011 |
| | | US 2012-0013746 A1 | 19/01/2012 |
| | | US 2012-0016965 A1 | 19/01/2012 |
| | | WO 2011-143599 A1 | 17/11/2011 |
| | | WO 2012-003236 A1 | 05/01/2012 |
| | | WO 2012-003237 A1 | 05/01/2012 |
| | | WO 2012-009454 A1 | 19/01/2012 |

Form PCT/ISA/210 (patent family annex) (July 2009)

INTERNATIONAL SEARCH REPORT
Information on patent family members

International application No.

**PCT/KR2013/006032**

| Patent document cited in search report | Publication date | Patent family member | Publication date |
|---|---|---|---|
| | | WO 2012-009700 A1 | 19/01/2012 |

Form PCT/ISA/210 (patent family annex) (July 2009)